# EUROPEAN PATENT SPECIFICATION

(11) **EP 1 661 353 B1**
(45) Date of publication and mention of the grant of the patent: **17.06.2009**
(21) Application number: 03747972.2
(22) Date of filing: 05.09.2003
(51) Int. Cl.: H04L 29/06

(54) **TERMINAL MOBILITY FOR PRIVATE IPV4/GLOBAL IPV6 TRANSITION**
ENDGERÄTMOBILITÄT FÜR TRANSITION ZWISCHEN PRIVATEM IPV4 UND GLOBALEM IPV6
MOBILITE DE TERMINAUX POUR TRANSITION IPV4 PRIVE/IPV6 GLOBAL

(43) Date of publication of application: 31.05.2006
(73) Proprietor: NTT DoCoMo, Inc., Tokyo 100-6150 (JP)
(72) Inventor: THAKOLSRI, Srisakul, 80689 München (DE); MINOKUCHI, Atsushi, Kanagawa-ken 239-0847 (JP); PREHOFER, Christian, 81477 München (DE); HORI, Kazumasa, Ota-ku, Tokyo 144-0052 (JP)
(74) Representative: HOFFMANN EITLE
(86) International application number: PCT/EP2003/009873
(87) International publication number: WO 2005/025169

(56) References cited:
- US-A1- 2002 062 388

## Description

### FIELD OF THE INVENTION

The invention relates to registration methods; communication methods, computer programs, a gateway and a mobile communication terminal in a communication system which comprises several networks having different protocols and/or address spaces. The invention in particular relates to a roaming situation for IP-based mobile networks when a mobile communication terminal previously registered in a first network roams to another network implemented using a different protocol to that used in the first network.

The present invention in particular relates to the problem how the mobile communication terminal can be registered in the network to which it has roamed and how this mobile communication terminal can communicate with other mobile communication terminals belonging to a still further network of the communication system. The different networks may be Internet Protocol (IP) implemented mobile networks in which different versions of the Internet Protocol like IPv4 and IPv6 may coexist as will be explained below with more details.

However, it should be noted that the invention generally relates to networks having different protocols and different address bases and that the explanations made here are not restricted to Internet Protocol implemented networks.

### BACKGROUND OF THE INVENTION

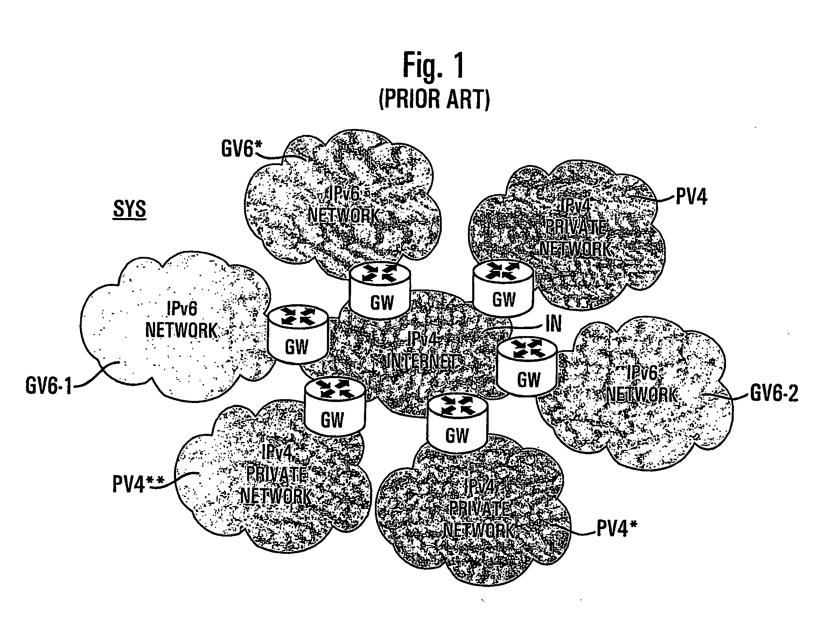

Fig. 1 shows a communication system SYS in accordance with the prior art. As shown in Fig. 1, the communication system SYS can comprise a first network IN implemented using a first protocol such as the Internet Protocol IPv4 (the first network may be the global Internet), three second networks GV6-1; GV6-2; GV6* implemented using a second protocol such as the Internet Protocol IPv6, and a third and fourth network PV4; PV4** implemented using said first protocol such as IPv4. As shown in Fig. 1, the first network IN (IPv4 Internet) is connected through respective gateways GW to the other networks. The function of such gateways GW is known to the skilled person and the gateways GW typically perform the protocol conversion between IPv6 and IPv4 networks and the address conversion. The configuration in Fig. 1 is typical during the IPv4-IPv6 transition period where it is expected that the IPv4-private network and the IPv6 network or networks will coexist. Typically, since the first and second protocols IPv4, IPv6 are different and cannot interoperate, some transition solutions are necessary to enable transport communication between the existing IPv4 network and the upcoming IPv6 networks.

However, problems exist for the interoperability in Fig. 1 not only because of the usage of different protocols IPv4 and. IPv6 in different networks but also due to usage of addresses in respective networks. For example, in principle the third and fourth networks PV4, PV4** use the same first protocol IPv4 as the first network IN such that in principle interoperability could exist. However, whilst for example the first and fourth networks IN, PV4 use the first protocol IPv4 for addressing in said first and fourth networks IN, PV4, the first and fourth addresses are respectively first protocol first network addresses and first protocol fourth network addresses selected from different address ranges of the first protocol. That is, although the networks IN, PV4, PV4** use the same type of addresses (because the same protocol IPv4 is used for the addressing in these networks), a user or a communication terminal in the first network IN has no general knowledge and usage of the address range which is respectively reserved for the third and fourth networks PV4, PV**. The fact that the first and fourth addresses are selected from different address ranges is indicated with the wording "private" in the third and fourth networks PV, PV**.

On the other hand, regarding the usage of addresses, the second networks GV6-1; GV6-2; GV6* use the second protocol IPv6 for addressing and they globally share the same address space, i.e. there are no reserved "private" addresses.

Thus, in the communication system SYS in Fig. 1 there are several incompatibilities for the interoperability regarding the usage of protocols and the usage of addresses. This causes problems when a mobile communication terminal registered in one of the networks connected to the first network IN roams to another network. In particular, it may not be possible for such a mobile communication terminal to register itself in the new (roamed to) network and it might not be reachable by another mobile communication terminal or might not be capable of transmitting information to such another mobile communication terminal. Of course, as may be appreciated already from Fig. 1, a mobile communication terminal for example roaming from the IPv4 private network PV4** to a IPv6 network GV6-1 needs to be a dual-stack protocol mobile communication terminal in order to allow an operation in the two networks respectively having different protocols. However, in addition to the usage of a dual-stack (dual protocol) mobile communication terminal, procedures must be established for allowing the routing of for example IPv6 information through a IPv4 protocol network, for example when two mobile communication terminals of the networks GV6* and GV6-2 communicate by routing information through the Internet IN. Different scenarios of such roaming procedures and communication scenarios can be distinguished when a mobile communication terminal is moving across the network scenario in Fig. 1. This calls for more dedicated transition mechanisms enabling the communication between different IP protocols for this roaming or moving terminal.

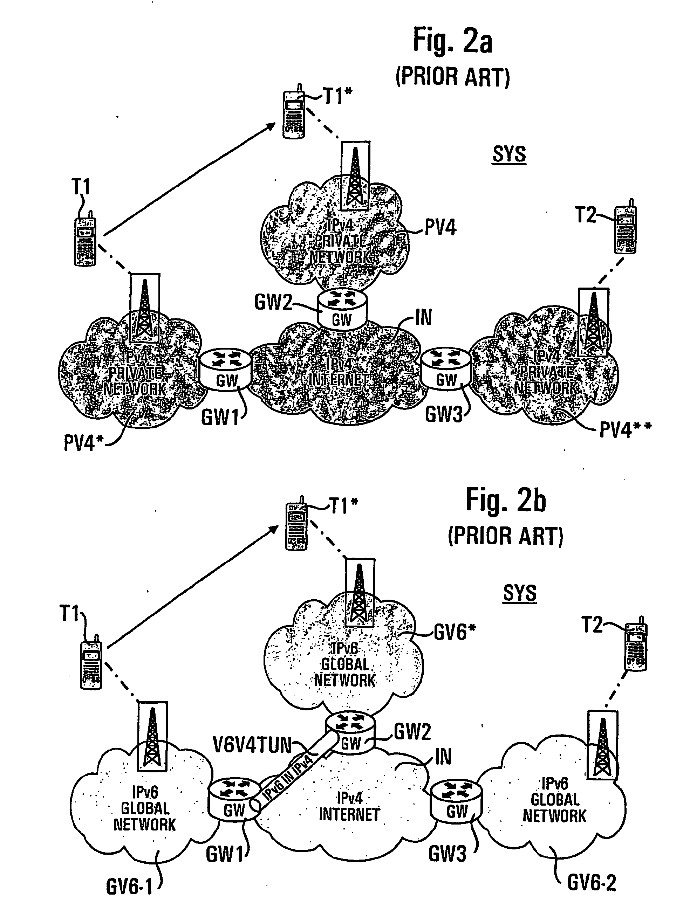

Fig. 2a shows a communication system SYS in which first protocol networks PV4, PV4*, PV4** are respectively connected to a first protocol network IN (the IPv4 Internet) through respective gateways GW1, GW2, GW3. As explained above, in this case the protocols are the same in all networks, however, the address ranges are different in the respective "private" IPv4 networks PV4, PV4*, PV4**. In Fig. 2a the mobile communication terminal T1 (belonging to its home' network PV4*) roams to the other IPv4 network PV4 in which it is registered as the mobile communication terminal T1*. The aim is that the mobile communication terminal T1* communicates with the corresponding mobile communication terminal T2 registered in its home network PV4**. The registration/communication scenario in Fig. 2a is solved in the prior art by using the mobile IP protocol such that an IP-based mobile terminal can move around the IPv4 domain connected to the IPv4 Internet IN. Using the mobile IP protocol allows a communication between the terminals T1* and T2 and there is no need that the mobile terminals T1*, T2 are dual-protocol terminals because the communication system SYS in Fig. 2a only comprises IPv4 networks, i.e. first protocol networks.

Another communication scenario, as shown in Fig. 2b of the prior art, relates to the case when second protocol networks, such as IPv6 global networks GV6-1, GV6*, GV6-2 are respectively connected to a first protocol network IN, i.e. a IPv4 Internet, through respective gateways GW1, GW2, GW3. In this case, as explained before, the IPv6 global networks GV6-1, GV6*, GV6-2 use a second protocol for addressing and comprise addresses selected from the same "global" address space. Similarly, the first protocol (IPv4) Internet IN uses a first protocol IPv4 and has its own address specification and address range. Similarly as in Fig. 2a, it is desired that the mobile terminal T1* having roamed from its home network GV6-1 can be registered in the foreign (visitor) network GVG* and can communicate with for example a mobile communication terminal T2 registered in the second protocol network GV6-2. As can be seen from Fig. 2b, the communication and registration between the two terminals T1* and T2 is essentially enabled by setting up a first protocol tunnel V6V4TUN between the first gateway GW1 and the second gateway GW2. As is indicated in Fig. 2b (with "IPv6 in IPv4"), the tunnel V6V4TUN is used for encapsulating second protocol (IPv6) information in the first protocol (IPv4). In the case of Fig. 2b where the IPv6 domain is connected to the IPv4 Internet, the combination of 6to4 transition mechanism and Mobile IPv6 (MIPv6) protocol can be used for the IP-based terminal moving in these IPv6 domains. In principle, the configuration in Fig. 2b is not extremely complicated since the mobile terminal T1 has a second protocol (IPv6) home network GV6-1 and it also roams to a second protocol foreign network GV6*. The only problem is how to route information through the IPv4 Internet and this is easily achieved with the tunnel V6V4TUN.

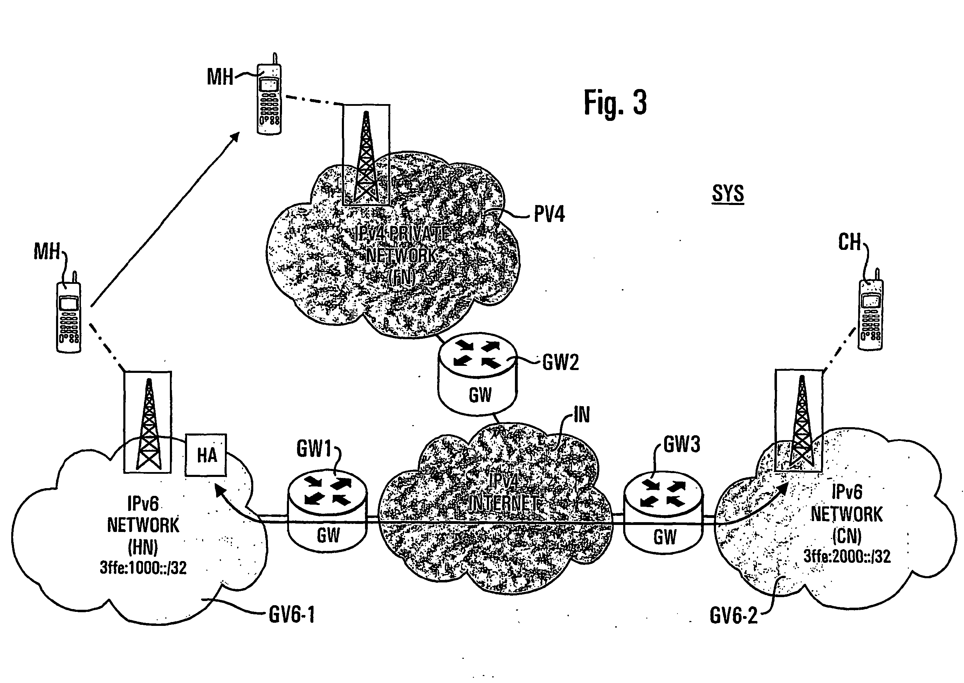

Whilst the communication in Fig. 2a is achieved by using the Mobile IP protocol and the communication in Fig. 2b is achieved by using the Mobile IPv6 protocol, in accordance with the prior art, no solutions are so far available for the more complicated communication scenario as shown in Fig. 3. The difference to the scenarios in Fig. 2a and Fig. 2b is that the mobile terminal (or mobile host MH) moves away from its second protocol home network GV6-1 to a network PV4 which is implemented using a different first protocol IPv4. That is, in Fig. 3 the mobile host MH moves away from its IPv6 home network HN to the private IPv4 foreign network FN. In the communication system SYS in Fig. 3 it is assumed that the first network IN and the fourth network PV4 are implemented using the first protocol IPv4 but that the first and fourth addresses used in the first and fourth networks IN, PV4 are respectively selected from different address ranges of said first protocol. That is, the addresses of the fourth network, PV4 are "private" to the fourth network PV4 and are not the same as the global addresses used in the first network IN. On the other hand, the second and third networks GV6-1, GV6-2 use the same second protocol IPv6 for addressing and the second and third addresses of the second and third networks GV6-1, GV6-2 are "global" addresses, i.e. they are selected from a common address range of said second protocol IPv6. No solution for the communication scenario in Fig. 3 has so far been reported in the prior art.

The problems that come up when the first terminal MH moves to the different protocol network PV4 and wants to communicate with a corresponding mobile terminal CH registered in its second protocol network GV6-2 are due to the fact that the mobile host MH moves to a different protocol domain in which it is in principle not reachable for the corresponding host CH due to address mismatch problems.

Firstly, of course the mobile host MH must be a dual protocol mobile communication terminal which can register using the second protocol IPv6 in its home network (HN, GV6-1) and can use the first protocol IPv4 for registering in the first protocol foreign network PV4. However, even if the mobile host MH is capable to be registered in the first protocol private network PV4, its home agent (home register) in the second network GV6-1 still has stored as identification a second protocol (IPv6) home address. Therefore, when communication is to be established between MH and CH, the corresponding host CH will still try to reach the mobile host MH under the second protocol IPv6 address which is registered in the home agent HA. However, in the scenario in Fig. 3, the mobile host MH is not reachable under this address any longer because it has roamed to the private network PV4 and is now registered in this foreign private network PV4. Therefore, the mobile host MH is not reachable under a new globally unique IPv6 address and no communication can be established.

Secondly, during a communication between MH and CH, the mobile host MH will intrinsically transmit second protocol information to the corresponding host CH through the networks PV4, IN and GV6-2. However, since the information to be transmitted is intrinsically second protocol IPv6 based, this information cannot be easily routed by the fourth network PV4 and the first network IN (for example due to the usage of private first protocol IPv4 port and address specifications and second protocol IPv6 global address specifications in the second and third networks GV6-1, GV6-2).

The prior art further includes United States patent application US 2002/0062388 disclosing a link-state routing protocol used in a mobile wireless network, wherein a path tree is maintained for each node and link-state information is exchanged between the nodes. A dynamic topology change may result in nodes leaving their home subnet to join a foreign subnet. To traverse a heterogeneous IPv6-IPv4 infrastructure, the nodes use an IPv6-IPv4 compatible aggregatable global unicast address format.

### SUMMARY OF THE INVENTION

As explained above with reference to Fig. 3, in a communication system SYS of Fig. 3 there are registration and communication problems when a first communication terminal MH registered in a second protocol IPv6 home network GV6- 1 roams to a first protocol IPv4 private network PV4 and wants to communicate through a first protocol IPv4 network IN with a corresponding host CH registered in a further second protocol IPv6 network GV6-2.

Therefore, the aim of the present invention is to overcome the aforementioned described disadvantages. In particular, it is the object of the present invention to provide a registration and communication methods a mobile communication terminal, a gateway and computer programs which allow a communication between a first terminal MH having roamed from its second protocol home network to a first protocol fourth network and a second terminal registered in another second protocol network which is connected to the first terminal foreign network through a first protocol first network.

In order to achieve this object, the invention is defined in the independent claims. Further embodiments are defined in the dependent claims.

According to one aspect, the registration method of claim 1 is carried out in a communication system including a first network implemented using a first protocol, said first network being connected to a second network implemented using a second protocol, and a fourth network implemented using said first protocol through a respective first, and second gateway, for registering in said second network a first terminal of said second network having roamed to said fourth network; said first and second protocols being different; said first and fourth networks using said first protocol for addressing in said first and fourth networks; said second network using said second protocol for addressing in said second network; said first, second and fourth networks respectively comprising first, second and fourth addresses; said second addresses being second protocol second network addresses; said first and fourth addresses being respectively first protocol first network addresses and first protocol fourth network addresses selected from different address ranges of said first protocol; wherein said registration method comprises the following steps: generating in said first terminal a second protocol second network first terminal foreign address of said first terminal from a first protocol fourth network first terminal address; setting up a first protocol first tunnel between said first terminal and said second gateway; transmitting said second protocol second network first terminal foreign address through said first protocol first tunnel; receiving said second protocol second network first terminal foreign address in said second gateway; setting up a first protocol second tunnel between said second gateway and said first gateway; transmitting said second protocol second network first terminal foreign address through said first protocol second tunnel; receiving said second protocol second network first terminal foreign address in said first gateway; transmitting said second protocol second network first terminal foreign address through said second network to a home agent in said second network.

According to one aspect, the communication method of claim 6 is carried out in a communication system including a first network implemented using a first protocol, said first network being connected to a second network implemented using a second protocol, to a fourth network implemented using said first protocol, and to a third network implemented using said second protocol through a respective first, second and third gateway, for providing communication information from a first terminal of said second network having roamed to said fourth network to a second terminal of said third network; said first and second protocols being different; said first and fourth networks using said first protocol for addressing in said first and fourth networks; said second and third networks using said second protocol for addressing in said second and third networks; said first, second, third and fourth networks, respectively comprising first, second, third and fourth addresses; said second and third addresses being respectively second protocol second network addresses and second protocol third network addresses; said first and fourth addresses being respectively first protocol first,network addresses and first protocol fourth network addresses selected from different address ranges of said first protocol; wherein said communication method comprises the following steps: setting up a first protocol first tunnel between said first terminal and said second gateway; transmitting said communication information through said first protocol first tunnel; receiving said communication information in said second gateway; setting up a first protocol second tunnel between said second gateway and said first gateway; transmitting said communication information through said first protocol second tunnel; receiving said communication informations in said first gateway; setting up a first protocol third tunnel between said first gateway and said third gateway; transmitting said communication information through said first protocol third tunnel; receiving said communication information in said third gateway; transmitting said communication information through said third network to said second terminal.

According to another aspect, the communication method of claim 8 is carried out in a communication system including a first network implemented using a first protocol, said first network being connected to a second network implemented using a second protocol, to a fourth network implemented using said first protocol, and to a third network implemented using said second protocol through a respective first, second and third gateway, for providing communication information from a second terminal of said third network to a first terminal of said second network having roamed to said fourth network; said first and second protocols being different; said first and fourth networks using said first protocol for addressing in said first and fourth networks; said second and third networks using said second protocol for addressing in said second and third networks; said first, second, third and fourth networks respectively comprising first, second, third and fourth addresses; said second and third addresses being respectively second protocol second network addresses and second protocol third network addresses; said first and fourth addresses being respectively first protocol first network addresses and first protocol fourth network addresses selected from different address ranges of said first protocol; wherein said communication method comprises the following steps: transmitting said communication information from said second terminal through said third network to said third gateway; setting up a first protocol first tunnel between said third gateway and said first gateway; transmitting said communication information through said first protocol first tunnel; receiving said communication information in said first gateway; setting up a first protocol second tunnel between said first gateway and said second gateway; transmitting said communication information through said first protocol second tunnel; receiving said communication information in said second gateway; setting up a first protocol third tunnel between said second gateway and said first terminal; transmitting said communication information through said first protocol third tunnel; receiving said communication information in said first terminal.

According to one aspect, the mobile communication terminal of claim 12 is configured for providing communication between said mobile communication terminal and another terminal, said mobile communication terminal belonging to a second network implemented using a second protocol, and said other terminal belonging to a third network implemented using said second protocol, wherein said communication is provided through fourth and first networks implemented using a first protocol different from said second protocol, said second, fourth and third networks being connected to said first network through a respective first, second and third gateway, said mobile communication terminal having roamed to said fourth network, said second network comprising a home agent; said first and fourth networks using said first protocol for addressing in said first and fourth networks; said second and third networks using said second protocol for addressing in said second network; said first, second, third and fourth networks respectively comprising first, second, third and fourth addresses; said second and third addresses being respectively second protocol second network addresses and second protocol third network addresses; said first and fourth addresses being respectively first protocol first network addresses and first protocol fourth network addresses selected from different address ranges of said first protocol, wherein said mobile communication terminal is capable of communicating using said first protocol and said second protocol; said mobile communication terminal comprises a tunnel set up unit for setting up a first-protocol tunnel between said mobile communication terminal and said second gateway.

Furthermore, according to one aspect, the gateway of claim 18 forms a first gateway configured to operate in a communication system including a first network implemented using a first protocol, said first network being connected to a second network implemented using a second protocol, to a fourth network implemented using said first protocol, and to a third network implemented using said second protocol respectively through said gateway forming a first gateway, a second and a third gateway, for providing communication information from a second terminal of said third network to a first terminal of said second network having roamed to said fourth network or from said first terminal to said second terminal; said first and second protocols being different; said first and fourth networks using said first protocol for addressing in said first and fourth networks; said second and third networks using said second protocol for addressing in said second network; said first, second, third and fourth networks respectively comprising first, second, third and fourth addresses; said second and third addresses being respectively second protocol second network addresses and second protocol third network addresses; said first and fourth addresses being respectively first protocol first network addresses and first protocol fourth network addresses selected from different address ranges of said first protocol, wherein said gateway comprises a conversion unit adapted to convert between a second protocol second network first terminal foreign address and a pair of a first protocol first network second gateway address and a first protocol first network transport type specific information.

According to an illustrative aspect, a communication system includes a first network implemented using a first protocol, said first network being connected to a second network implemented using a second protocol, a third network implemented using said second protocol and a fourth network implemented using said first protocol through a respective first, second and third gateway, for providing communications between a first terminal of said second network having roamed to said fourth network and a second terminal of said third network; said first and second protocols being different; said first and fourth networks using said first protocol for addressing in said first and fourth networks; said second and third networks using said second protocol for addressing in said second and third networks; said first to fourth networks respectively comprising first to fourth addresses; said second and third addresses being respectively second protocol second network addresses and second protocol third network addresses selected from a common address range of said second protocol; said first and fourth addresses being respectively first protocol first network addresses and first protocol fourth network addresses respectively selected from different address ranges of said first protocol; wherein said second network comprises a home agent adapted to store a second protocol second network first terminal origin address assigned in and generated by said second network to said first terminal in said second network.and a second protocol second network first terminal foreign address generated by said first terminal having roamed to said fourth network; said first terminal is capable of communicating using said first protocol and said second protocol; said first terminal comprises a first tunnel set up unit for setting up a first protocol first tunnel between said first terminal and said second gateway; said second gateway between said fourth and first networks comprises a second tunnel set up unit for setting up a first protocol second tunnel between said second gateway and said first gateway, and a sixth tunnel set up unit for setting up a first protocol sixth tunnel between said second gateway and said first terminal; said first gateway between said second and first networks comprises a third tunnel set up unit for setting up a first protocol third tunnel between said first gateway and said third gateway and a fifth tunnel set up unit for setting up a first protocol fifth tunnel between said first gateway and said second gateway; said third gateway between said third and first networks comprises a fourth tunnel set up unit for setting up a first protocol fourth tunnel between said third gateway and said first gateway.

Essentially, in accordance with the invention, the dual protocol mobile terminal is used in connection with a registration method in which a new second protocol IPv6 address of the first terminal is informed to its home agent and this new address is globally unique and compatible with the home agent. This second network first terminal foreign address is communicated during registration to the home agent of the first terminal through respective tunnels in the fourth network and the first network.

Similarly, during communication there is used a tunnel between the first terminal and the foreign gateway (interconnecting the fourth network and the first network), a tunnel between the foreign gateway and the home gateway (interconnecting the first network and the second network) and a tunnel between the home gateway and a corresponding node gateway (interconnecting the first network and the third network). Thus, mechanisms are provided to allow a communication from the first terminal and to the first terminal after the first terminal has moved to the fourth foreign network.

For allowing the set-up of such tunnels the inventive mobile communication terminal comprises a tunnel set-up unit for setting up a first protocol tunnel between the first terminal and the foreign gateway and the home gateway comprises a conversion unit to convert between a second protocol second network first terminal foreign address and a pair of a first protocol first network second gateway address and a first protocol first network transport type specific information. During registration the home gateway will be supplied with corresponding information through the set up tunnels and the conversion unit uses this information set-up during registration during the communication between the first and second terminal.

Preferably, in the registration method before said step a) said first protocol fourth network first terminal address is distributed from a first protocol address distribution unit to said first terminal.

Preferably, the registration method includes encapsulating of at least said second protocol second network first terminal foreign address with a transport type identifying first header at least including first protocol fourth network transport type specific information and a first protocol fourth network header at least including said first protocol fourth network first terminal address.

preferably, the registration method includes changing said transport type identifying first header to a transport type identifying second header at least including first protocol first network transport type specific information, and changing said first protocol fourth network header to a first protocol first network header at least including a first protocol first network second gateway address.

Preferably, the registration method includes decapsulating said encapsulated second protocol second network first terminal foreign address from said transport type identifying second header and said first protocol fourth network header.

Preferably, the registration method includes storing of said first protocol first network second gateway address, said first protocol first network transport type specific information, and said second protocol second network first terminal foreign address.

Preferably, the registration method includes storing a mapping correlation in a mapping table between said second protocol second network first terminal foreign address and a pair of said first protocol first network second gateway address and said first protocol first network transport type specific information.

Preferably, in the communication method before said step a) a second protocol third network second terminal address is distributed from a second protocol address distribution unit to said first terminal.

Preferably, the communication method includes encapsulating of at least said communication information with a transport type identifying first header at least including second protocol transport type specific information, with a second-protocol header at least including a second protocol second network first terminal origin address and a second protocol third network second terminal address, with a transport type identifying second header at least including first protocol fourth network transport type specific information, and with a first protocol fourth network header at least including a first protocol fourth network first terminal address and a first protocol first network first gateway address.

Preferably, the communication method includes changing said transport type identifying second header to a transport type identifying third header at least including first protocol first network transport type specific information, and changing said first protocol fourth network header to a. first protocol first network first header at least including a first protocol first network second gateway address and said first protocol first network first gateway address.

Preferably, the communication method includes decapsulating said communication information at least from said first protocol first network first header; and encapsulating said decapsulated communication information with a first protocol first network second header at least including a first protocol first network third gateway address.

Preferably, the communication method includes decapsulating said communication information at least from said first protocol first network second header.

Preferably, in the communication method before said step a) a second protocol second network first terminal origin address is distributed from a second protocol address distribution unit to said second terminal.

Preferably, in the communication method before said step a) at least said communication information is encapsulated at least with a second protocol third network header at least including a second protocol third network second terminal address and said second protocol second network first terminal origin address.

Preferably, the communication method includes encapsulating of at least said communication information with a first protocol first network first header at least including a first protocol first network first gateway address.

Preferably, in the communication method between said step d) and said step e) said communication information is decapsulated at least from said first protocol first network first header; and said decapsulated communication information is transmitted through said second network to a home agent of said second network.

Preferably, in the communication method said decapsulated communication information is encapsulated at least with a second protocol second network first terminal foreign address.

Preferably, in the communication method said encapsulated communication information is transmitted through said second network to said first gateway.

Preferably, the communication method includes encapsulating of at least said communication information with a transport type identifying first header at least including first protocol first network transport type specific information, and with a first protocol first network second header at least including a first protocol first network first gateway address and a first protocol first network second gateway address.

Preferably, the communication method includes changing said transport type identifying first header to a transport type identifying second header at least including first protocol fourth network transport type specific information, and changing said first protocol first network second header to a first protocol fourth network header at least including said first protocol first network second gateway address and a first protocol fourth network first terminal address.

Preferably, the communication method includes decapsulating said communication information at least from said first protocol fourth network header.

Preferably, the mobile communication terminal further comprises a generating unit for generating a second protocol second network mobile communication terminal foreign address;

Preferably, the mobile communication terminal further comprises a transmitting unit for transmitting at least said second protocol second network mobile communication terminal foreign address to said home agent through said first-protocol tunnel.

Preferably, the mobile communication terminal further comprises a receiving unit for receiving a first protocol fourth network mobile communication terminal address from a first-protocol address distribution unit.

Preferably, in the mobile communication terminal in said generating unit said first protocol fourth network mobile communication terminal address is used for generating said second protocol second network mobile communication terminal foreign address.

Preferably, the mobile communication terminal further comprises a storage unit for storing at least a second protocol second network mobile communication terminal origin address, a second protocol second network home agent address, and a first protocol first network first gateway address.

Preferably, in the mobile communication terminal said second protocol second network mobile communication terminal origin address, said second protocol second network home agent address, and said first protocol first network first gateway address are permanently stored in said storage unit.

Preferably, the mobile communication terminal further comprises an encapsulating unit for encapsulating at least said second protocol second network mobile communication terminal foreign address with a transport type identifying first header at least including first protocol fourth network transport type specific information and a first protocol fourth network header at least including said first protocol fourth network mobile communication terminal address.

Preferably, in the mobile communication terminal said encapsulating unit is further adapted to encapsulate at least a communication information with a transport type identifying first header at least including second protocol transport type specific information, with a second-protocol header at least including said second protocol second network mobile communication terminal origin address and a second protocol third network other terminal address, with a transport type identifying second header at least including first protocol fourth network transport type specific information, and with a first protocol fourth network header at least including said first protocol fourth network mobile communication terminal address and a first protocol first network first gateway address.

Preferably, the mobile communication terminal further comprises a decapsulating unit for decapsulating a communication information received from said other terminal at least from a first protocol fourth network header.

Preferably, the gateway further comprises a first tunnel set up unit for setting up a first-protocol tunnel between said gateway and said second gateway, and a second tunnel set up unit for setting up another first-protocol tunnel between said gateway and said third gateway.

Preferably, the gateway further comprises a storage unit for storing a first protocol first network second gateway address, a first protocol first network transport type specific information, and a second protocol second network first terminal foreign address.

Preferably, the gateway includes said first protocol first network second gateway address, said first protocol first network transport type specific information, and said second protocol second network first terminal foreign address stored in a mapping table.

Preferably, in the gateway a mapping correlation is stored between said second protocol second network first terminal foreign address and a pair of said first protocol first network second gateway address and said first protocol first network transport type specific information.

Preferably, the communication system further comprises a storage unit for storing at least said second protocol second network first terminal origin address, a second protocol second network home agent address of said home agent, and a first protocol first network first gateway address of said first gateway.

Preferably, the communication system comprises a storage unit for storing a first protocol first network second gateway address, a first protocol first network transport type specific information, and said second protocol second network first terminal foreign address.

Preferably, the communication system comprises a storage unit for storing a first protocol fourth network first terminal address, first protocol fourth network transport type specific information, a first protocol first network second gateway address, and first protocol first network transport type specific information.

Furthermore, it should be noted that what is described hereinafter is only considered to be the best mode of the invention as currently conceived by the inventors. However, the invention might comprise other embodiments which may be derived by the skilled person on the basis of the teachings herein.

### BRIEF DESCRIPTION OF THE DRAWINGS

In the drawings:
- Fig. 1: shows an overview of a communication system SYS comprising a plurality of networks which are implemented using different protocol versions such as IPv4 and IPv6;
- Fig. 2a: shows a communication system SYS in which a first terminal T1* roams to a foreign fourth network PV4 and communicates with a second terminal T2 of a third network PV4** wherein the fourth and third networks as well as a second network PV4* are implemented using the same first protocol IPv4;
- Fig. 2b: shows a communication system SYS similar as in Fig. 2a wherein the second GV6-1, third GV6-2 and fourth GV6* networks, are implemented using a second protocol IPv6 and are interconnected through gateways GW1, GW2, GW3 to a first network IN which is implemented using a first protocol IPv4;
- Fig. 3: shows a communication system SYS in accordance with the principle of the invention in which a first terminal MH moves from a second protocol IPv6 home network to a first protocol IPv4 foreign network and communicates with a second terminal CH registered in a second-protocol IPv6 network GV6-2 which is interconnected to a first-protocol IPv4 first network IN through a gateway GW3;
- Fig. 4a: shows a communication system SYS, a mobile communication terminal MH, a home network gateway HNGW and a foreign network gateway FNGW for providing communication between the first terminal MH and the corresponding second terminal CH through tunnels TUN', TUN" and TUN''';
- Fig. 4b: shows a block diagram of the home network gateway HNGW in accordance with the principle of the invention;
- Fig. 4c: shows a block diagram of the mobile communication terminal MH in accordance with the principle of the invention;
- Fig. 4d: shows a block diagram of the foreign network gateway FNGW in accordance with the principle of the invention;
- Fig. 4e: shows an embodiment of the registration method in accordance with the invention;
- Fig. 4f: shows a communication method in accordance with the invention for a communication initiated by the first terminal MH;
- Fig. 4g: shows a communication method in accordance with an embodiment of the invention when the second terminal CH initiates a communication;
- Fig. 4h: is a diagram illustrating the set-up of tunnels for the registration and communication procedures in Figs. 4e, 4f, 4g, respectively;
- Fig. 5a: shows a registration information (e.g. a packet) REG1 which is sent from the first terminal MH to the foreign network gateway FNGW during the registration method in accordance with Fig. 4e;
- Fig. 5b: shows a registration information (e.g. a packet) REG2 sent from the foreign network gateway FNGW to the home network gateway HNGW during the registration procedure of Fig. 4e;
- Fig. 5c: shows the acknowledgement information (e.g. a packet) ACK sent from the home network gateway HNGW to the first terminal MH in an acknowledgement procedure as principally shown in Fig. 12a;
- Fig. 6: shows the mapping correlation FNGW-MC in the foreign network gateway FNGW, the mapping correlation HNGW-MC in the home network gateway HNGW and the mapping correlation HA-MC in the home agent HA at the beginning of the registration process in Fig. 12a;
- Figs.7-11: respectively show the entries of FNGW-MC, HNGW-MC and HA-MC during different stages of the registration method in Fig. 4e wherein Fig. 11 shows the contents of these mapping correlations MC at the end of the registration procedure and in the form in which they are used for setting up the tunnels during the communication methods;
- Fig. 12a: shows detailed steps of the registration/acknowledgement procedure of the first terminal MH wherein steps S12a.1 - S12a.9 are used for setting the respective information in the mapping correlations of Fig. 6-11;
- Fig. 12b: shows detailed steps of the step S12a.2 in Fig. 12a;
- Fig. 12c: shows a concept of using an IPv4 address for creating an IPv6 address;
- Fig. 12d: shows an embodiment of the concept shown in Fig. 12c according to the invention;
- Fig. 13a: shows detailed steps of a communication procedure when the communication is initiated by .the first terminal MH to the second terminal CH;
- Fig. 13b: shows a continuation of the communication between MH → CH from Fig. 13a;
- Fig. 13c: show detailed steps of step S13a.4 of Fig. 13a;
- Fig. 13d: shows detailed steps of step S13b.13 of Fig. 13b;
- Fig. 14a: shows detailed steps of a communication procedure when the communication is initiated by the second terminal CH;
- Fig. 14b: shows the continuation of the communication between MH ← CH of Fig. 14a;
- Fig. 15: shows an example of the usage of IPv4 & IPv6 addresses in the communication system SYS; and
- Fig. 16: shows an example of the various packets sent through the system during the communication from the terminal CH to the mobile communication terminal MH.
- Fig. 17a: shows detailed steps of a further embodiment of a registration/acknowledgement procedure of the first terminal MH wherein steps S12a.1 S12a.5, S12a.6', S12a.7', and S12a.8 - S12a.9 are used for setting the respective information in the mapping correlations of Fig. 6-11;
- Fig. 17b: shows detailed steps of steps S12a.7' and S12a.11' of Fig. 17a, step S13a.9' of Fig. 18a, steps S13b.3' and S13b.8' of Fig. 18b, steps S14a.8' and S14a.13' of Fig. 19a, step S14b.9' of Fig. 19b;
- Fig. 18a: shows detailed steps of another embodiment of a communication procedure when the communication is initiated by the first terminal MH to the second terminal CH;
- Fig. 18b: shows a continuation of the communication between MH → CH from Fig. 18a;
- Fig. 19a: shows detailed steps of another embodiment of a communication procedure when the communication is initiated by the second terminal CH;
- Fig. 19b: shows the continuation of the communication between MH ← CH of Fig. 19a;

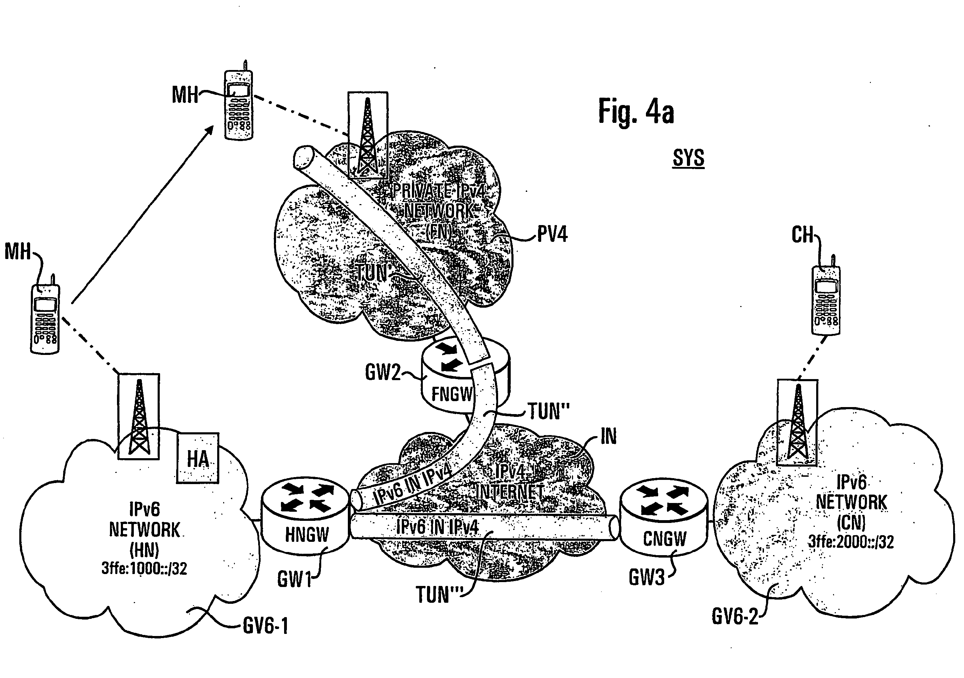

Hereinafter, some specific examples and embodiments of the invention will be described in the context of Internet Protocol (IP) based networks such as those shown in Fig. 4a. However, it should be noted that the invention is not restricted to the specific use of these first (IPv4) and second (IPv6) Internet Protocols. The communication system SYS may comprise another kind of different first and second protocols. Furthermore, despite the fact that the fourth network PV4 and the first network IN use the same first protocol IPv4 for addressing in the respective network, it should be understood that the fourth and first addresses in the fourth PV4 and first IN networks are respectively selected from different address ranges of said first protocol. This is signified with the expression "private" in the fourth network PV4. Similarly, the second GV6-1 and third GV6-2 networks are second-protocol IPv6 networks having the same "global" address range of said second protocol.

Furthermore, in the examples and embodiments below the following nomenclature is used. The first protocol is the IPv4 protocol. The second protocol is the IPv6 protocol. The first network IN is the IPv4 (global) Internet. The second network is the IPv6 network GV6-1. The third network is the IPv6 network GV6-2. The fourth network is the private IPv4 network PV4. Since the communication system SYS in Fig. 4a, representing the principle of the invention, considers a communication scenario in which a first mobile terminal MH moves away from its home network GV6-1 to a foreign network PV4 having a different protocol, the first network GV6-1 will hereinafter also be referred to as the home network HN. Similarly, the fourth network PV4 will be referred to as the foreign network FN.

As already explained above with reference to Fig. 3, the respective networks are interconnected through a first GW1, second GW2 and third GW3 gateway. As shown in Fig. 4a, the first gateway GW1 will hereinafter also be referred to as the home network gateway HNGW, the second gateway GW 2 will also be referred to as the foreign network gateway FNGW. The third gateway GW3 will hereinafter also be referred.to as the corresponding network gateway CNGW.

Furthermore, in Fig. 4a one of the principles of the invention is shown, namely the set up of a tunnel TUN' between the first terminal MH and the foreign network gateway FNGW, a tunnel TUN " between the foreign network gateway FNGW and the home network gateway HNGW, and a tunnel TUN"' between the home network gateway HNGW and the corresponding network gateway CNGW. As well known in the technical area to a skilled person, tunnels are set up in order to encapsulate information from one protocol into another protocol. For example, in the above described Fig. 2b the IPv6 information is encapsulated in an IPv4 tunnel. This encapsulation is performed respectively by the transmitting unit depending on the transmission direction.

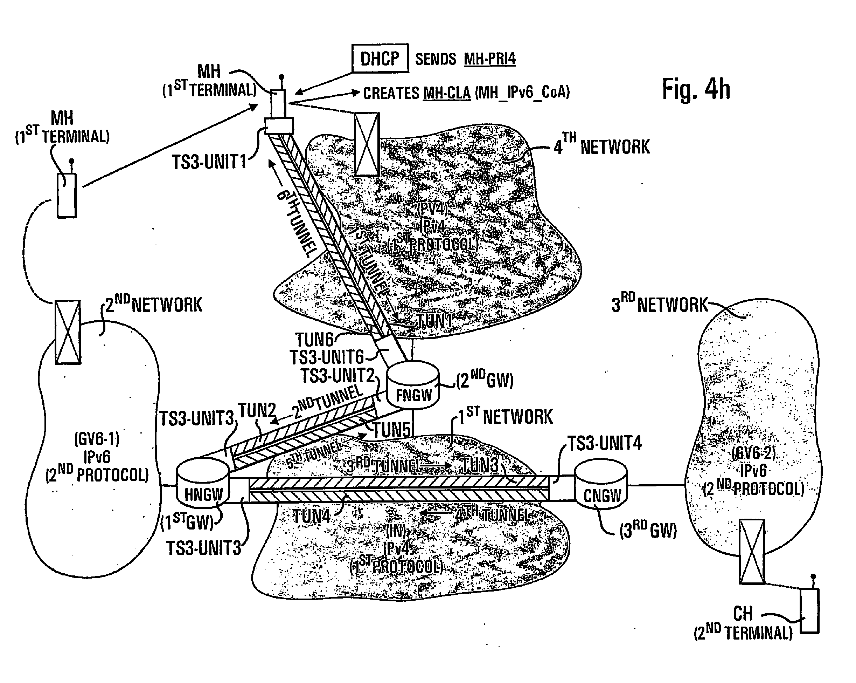

On the other hand, the receiving side performs a decapsulation of the information to retrieve the information which has been transmitted through the tunnel. In the description of the embodiments and the examples below the numbering of the tunnels will be performed in the order in which they respectively appear in a registration, acknowledgement, MH → CH communication and MH ← CH communication. The designation of tunnels and protocols may also be understood from the explanatory drawing in Fig. 4h. During a registration procedure a first tunnel TUN1 will be set up between the first terminal MH and the foreign network gateway FNGW. A second tunnel TUN2 will be set up between the foreign network gateway FNGW and the home network gateway HNGW. If a communication from MH to CH takes place, there is also set up a third tunnel TUN3 between the home network gateway HNGW and the corresponding node gateway CNGW. On the other hand, if a communication is initiated by the corresponding terminal CH, in this communication the first tunnel to be set up will be a tunnel between CNGW and HNGW. For nomenclature reasons this tunnel is here designated to be the fourth tunnel TUN4 although it is in fact, for the communication from CH → MH, the first tunnel which is being set up. Likewise, in the CH → MH communication, the tunnel TUN5, designated as fifth tunnel in Fig. 4h, is set up between HNGW and FNGW. Likewise, in the CH → MH communication, a third tunnel TUN6 is set up between FNGW and MH. This tunnel TUN6 is designated, in the sequential numbering of tunnels, to be the sixth tunnel.

### PRINCIPLE OF THE INVENTION

Hereinafter, the principle of the invention will be described with reference to Fig. 4a - Fig. 4h.

Basically, one aspect of the invention is the tunnelling of the IPv6 packet with transportation and IPv4 header and use the home network gateway HNGW as the anchor point to redirect all packets sent either by MH or by CH, as shown in Fig. 4a. The invention proposes a new mechanism for MH moving from the IPv6 network to the private IPv4 network to establish the connection as a caller or as a callee. Additionally it can also be used for registration of its current location to its home agent HA. Whilst in Fig. 4a the communication system SYS is shown to comprise three tunnels TUN', TUN" and TUN''', these tunnels will be respectively used separately during the registration and communication. During the registration the tunnel TUN' and TUN'' are used and during the communication all three tunnels TUN', TUN" and TUN''' are used. As also shown in Fig. 4a, in the principle of the invention each tunnel TUN', TUN'' and TUN''' is a first-protocol IPv4 tunnel for encapsulating second protocol IPv6 information.

As already described above with reference to Fig. 3, the communication system SYS includes a first network implemented using a first protocol, said first network being connected to a second network implemented using a second protocol, a third network implemented using said second protocol and a fourth network implemented using said first protocol through a respective first, second and third gateway, for providing communications between a first terminal of said second network and having roamed to said fourth network and a second terminal of said third network; said first and second protocols being different; said first and fourth networks using said first protocol for addressing in said first and fourth networks; said second and third networks using said second protocol for addressing in said second and third networks; said first to fourth networks respectively comprising first to fourth addresses; said second and third addresses being respectively second protocol second network addresses and second protocol third network addresses selected from a common address range of said second protocol; said first and fourth addresses being respectively first protocol first network addresses and first protocol fourth network addresses respectively selected from different address ranges of said first protocol.

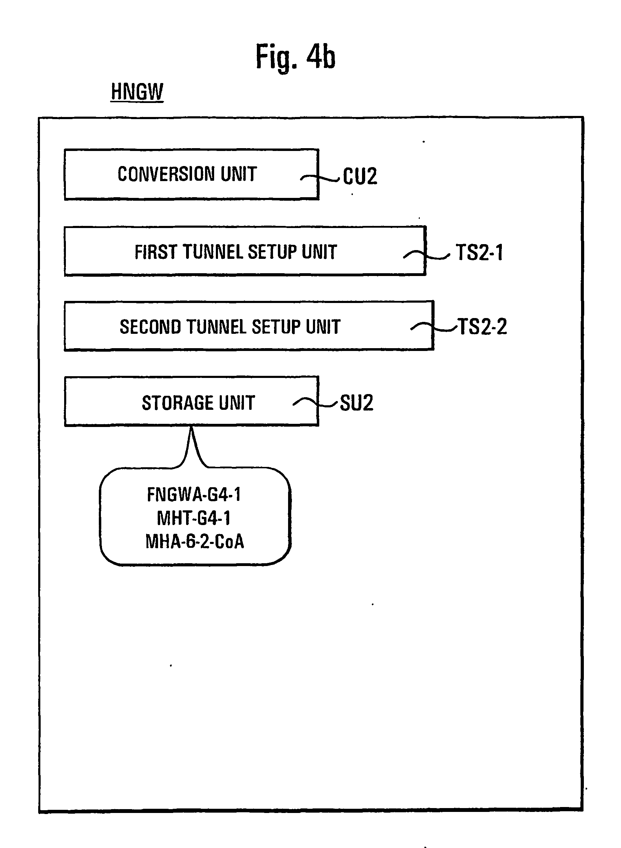

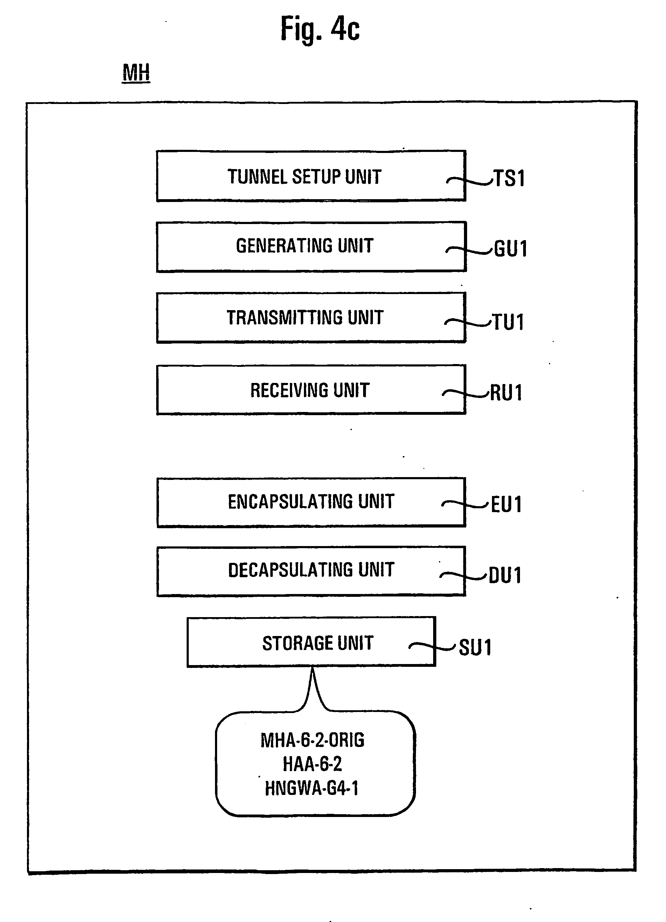

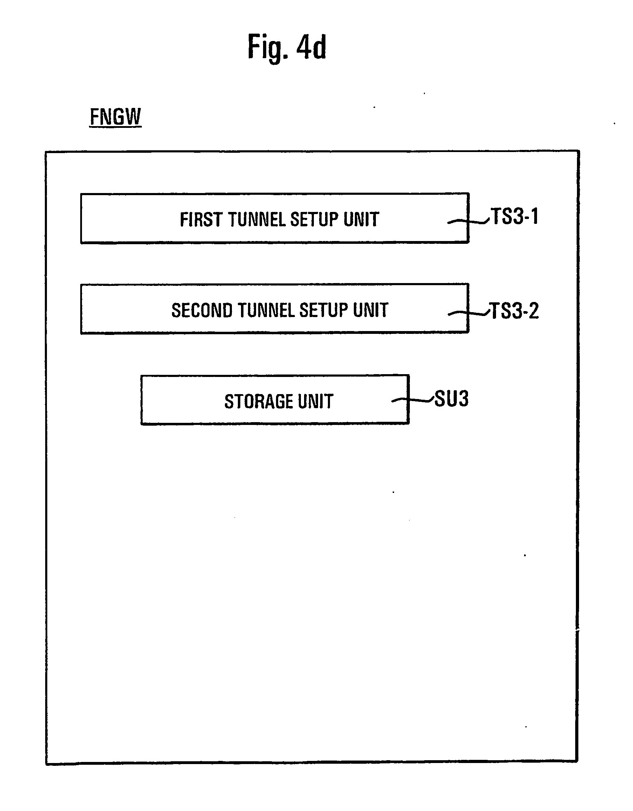

In order to carry out the inventive registration method, the MH → CH communication method and the MH ← CH communication method when the first terminal MH has roamed from the second network GV6-1 to said fourth network PV4, as shown in Fig. 4a, 4h, the home network gateway HNGW, the first terminal MH and the foreign network gateway FNGW are constituted as shown in Fig. 4b, 4c, 4d.

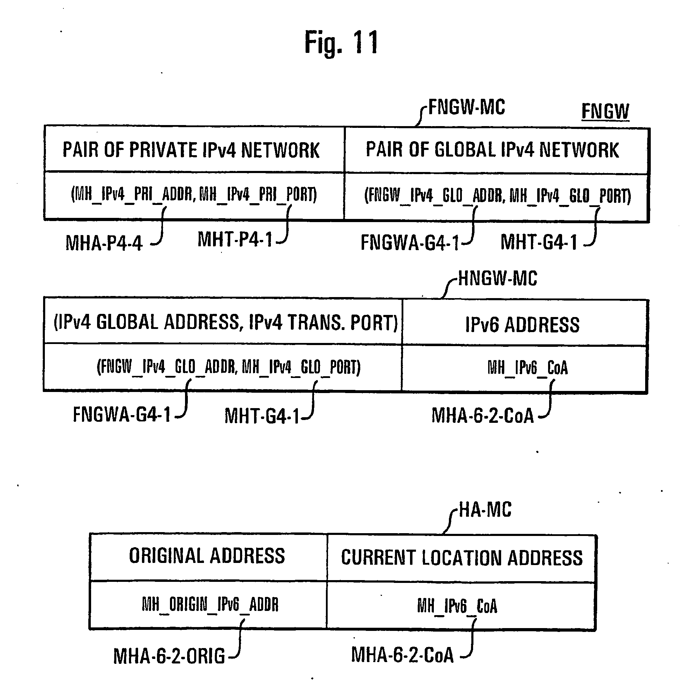

In particular, the home network gateway HNGW comprises a conversion unit CU2 adapted to convert between a second protocol second network first terminal foreign address MHA-6-2-CoA and a pair of a first protocol first network second gateway address FNGWA-G4-1 and a first protocol first network transport type specific information MHT-G4-1, which are shown in Fig. 11. Such information can for example be stored as a mapping correlation HNGW-MC in a storage unit SU2 of the home network gateway HNGW. The mapping table HNGW-MC of the storage unit SU2 contains an entry as shown in Fig. 11 for each first terminal station which has moved from its home network GV6-1 to the private network PV4. For easier understanding, Fig. 11 only shows one entry for the first terminal MH.

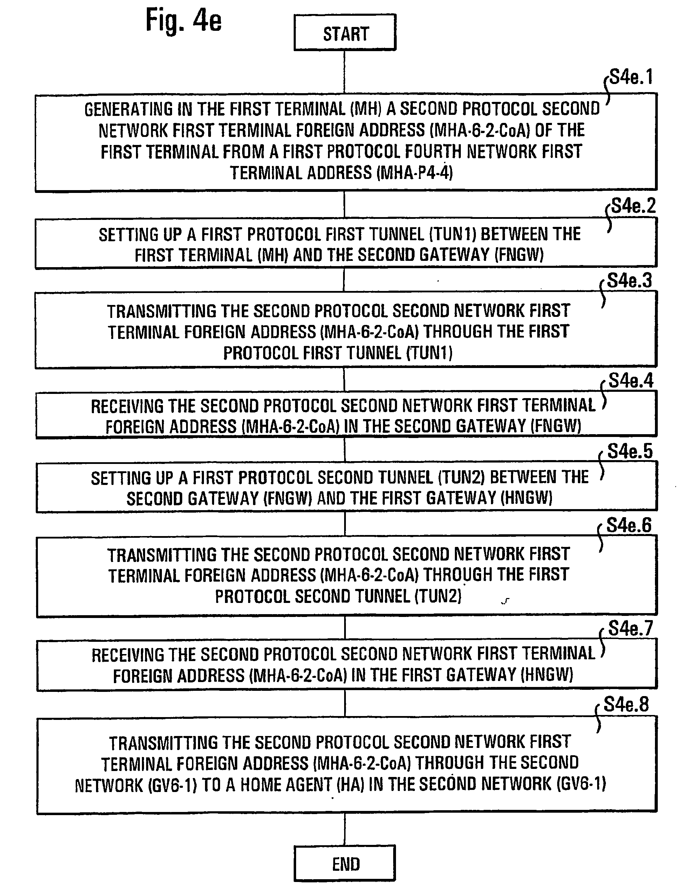

The entries in the mapping table or mapping correlation HNGW-MC in Fig. 11 will be set during the registration procedure which is illustrated in Fig. 4e. The usage and the setting of the mapping table HNGW-MC with the entries as shown in Fig. 11 is essential in order to carry out the communication methods between MH and CH. Therefore, hereinafter, the meaning of these entries shall be explained with more details.

The parameter FNGWA-G4-1 constitutes the second gateway address in the first network and in the first protocol. Using IPv4 in the first network, this parameter FNGWA-G4-1 could be constituted as FNGW_IPv4_GLO_ADDR, namely an IPv4 (first protocol) global address GLO_ADDR of the second gateway FNGW. It is called the first protocol "first network" second gateway address because it is the global address of the foreign network gateway as used in the "first IPv4 network". Similarly, the second protocol second network first terminal foreign address MHA-6-2-Coa is a second protocol IPv6 care-of address CoA for the first terminal MH as used in the second network. Therefore, all such parameters regarding addresses in Fig. 11 have the following format:
protocol version - used in the network - referenced unit - address

As also described above, Fig. 11 contains in the mapping table HNGW-MC also a "transport type" specific information, for example the designation "Port" in the parameter MHT-G4-1. Therefore, in addition to the address specification a transport type specific information is used in the mapping table HNGW-MC. In the communication system SYS in Fig. 4a it is necessary, in order to set up the tunnels TUN', TUN'', to use an address as well as such a transport type specific information. Such a transport type specific information can be a port number when using IPv4/IPv6 type networks. That is, the addresses are necessary for routing purposes in the respective networks, i.e. an address may be a source or a destination address of each transmission information (packet) to be routed through the respective network. On the other hand, for transmitting the information within each network not only an address serving as a unique identifier is necessary but also a transport type specific information such as "Port" in Fig. 11. This "Port" specifies the type of transportation, for example in the transport layer of the seven layer OSI model. For example, several applications running on the same unit (terminal) may use different port numbers for different types of transportation. Such different types of transportation can for example be a UDP (User Datagram Protocol) transportation or a TCP (Transfer Control Protocol) transportation. Other types of transportation may be a serial or parallel transportation. The usage of an address as well as a transport type specific information is due to the fact that the first network IN and the fourth network PV4 do not share the same address range, despite the fact that they are both implemented using the first protocol IPv4. In the present application and as shown in Fig. 11, the transport type specific information is the following format:
- protocol version - used in network - information -

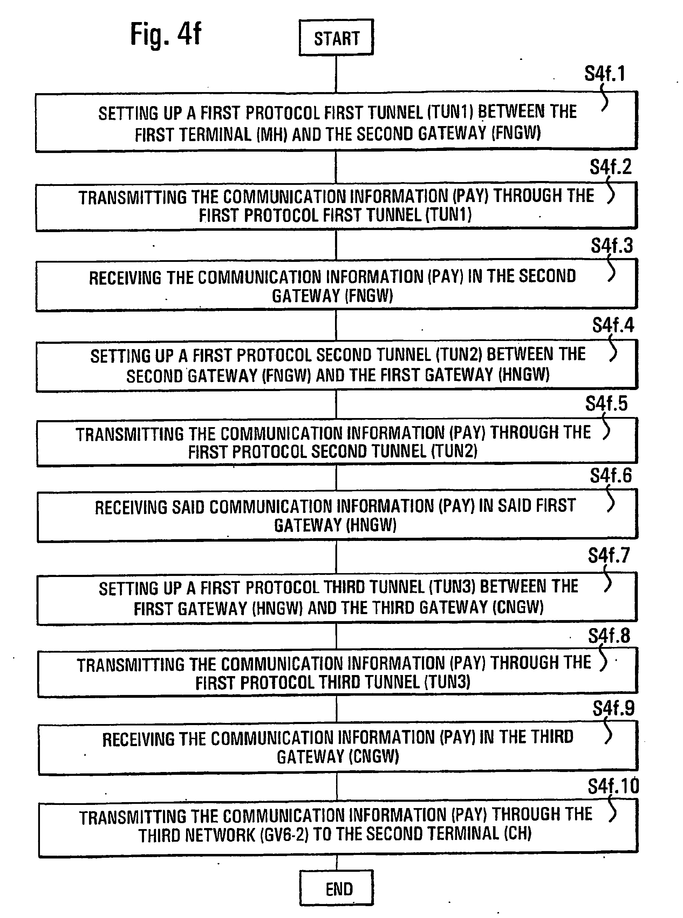

As mentioned above, the mapping table HNGW-MC in the home network gateway HNGW comprising the information/parameters as shown in Fig. 11 is essential in order to allow a communication between MH and CH as will be described hereinafter with reference to Fig. 4f (MH → CH) and 4g (MH ← CH).

In particular, and as will be explained below, the mapping table HNGW-MC is used in order to set up the tunnels TUN" and TUN'''. Thus, the gateway HNGW also comprises a first tunnel set-up unit TS2-1 for setting up a first-protocol tunnel between said gateway HNGW and the second gateway FNGW. The gateway HNGW also comprises a second tunnel set-up unit TS2-2 for setting up another first-protocol tunnel between said gateway HNGW and said third gateway CNGW. The usage of these tunnels for the communication will be described below.

A block diagram of the mobile communication terminal MH which has moved from its home networks HN to the foreign network FN is shown in Fig. 4c. The mobile communication terminal MH is a dual-protocol terminal (dual-stack terminal) which means that it is capable of communicating using said first protocol, e.g. IPv4, and said second protocol, e.g. IPv6. In addition to a transmitting unit TU1 for transmitting information (packets) and the receiving unit RU1 for receiving information (packets) the mobile communication terminal in accordance with the embodiment in Fig. 4c comprises a tunnel set-up unit TS1 for setting up a first protocol tunnel, e.g. TUN1 in Fig. 4h, between the mobile communication terminal MH.and the second gateway FNGW. This first protocol tunnel TUN1 is used in the registration method and in the MH ← CH communication method.

In particular, the transmitting unit TU1 of the mobile communication terminal MH is adapted for transmitting at least a so-called second protocol second network mobile communication terminal foreign address MHA-6-2-CoA, as shown in Fig. 11, to said home agent HA through said first protocol tunnel TUN1. Furthermore, the receiving unit RU1 is adapted for receiving a first protocol fourth network mobile communication terminal address MHA-P4-4 from a first-protocol address distribution unit DHCP, as schematically shown in Fig. 4h. It is pointed out that the invention is not limited to the use of DHCP (Dynamic Host Configuration Protocol) in the first-protocol address distribution unit but also other protocols can be used for assigning addresses within the invention. The aforementioned address MHA-6-2-CoA and MHA-P4-4 will be explained below with more details regarding the registration method.

The mobile communication terminal MH also comprises a generating unit GU1 for generating the second protocol second network mobile communication terminal foreign address MHA-6-2-CoA. In accordance with one embodiment, the generating unit GU1 generates the second protocol second network mobile communication terminal foreign address MHA-6-2-CoA by using the first protocol fourth network mobile communication terminal address MHA-P4-4.

A storage unit SU1 is provided also for storing at least the second protocol second network mobile communication terminal original address MHA-6-2-ORIG, a second protocol second network home agent address HAA-6-2 and a first protocol first network first gateway address HNGWA-G4-1.

In particular, the storage unit SU1 permanently stores the second protocol second network mobile communication terminal original address MHA-6-2-ORIG, the second protocol second network home agent address HAA-6-2 and the first protocol first network first gateway address HNGWA-G4-1.

An encapsulation unit EU1 is generally adapted for encapsulating second protocol (IPv6) transmission information with a IPv4 header. Since "encapsulation" is a part of the setting up of the first tunnel TUN1, the encapsulating unit EU1 may also be viewed to be part of the tunnel set-up unit TS1 of the mobile terminal MH.

Finally, the mobile terminal MH comprises a decapsulating unit DU1 for decapsulating a communication information PAY received from the corresponding terminal CH at least from a first-protocol IPv4 fourth network header. That is, the decapsulating unit DU1 strips off the header from the communication information PAY in order to retrieve the payload communication information PAY.

The special information which will be encapsulated with a header by the encapsulating unit EU1 will hereinafter be described with reference to the registration and MH → CH communication method in Fig. 4e (registration) and Fig. 4f (MH → CH communication).

It should be noted that one of the novel features of the mobile communication terminal MH for allowing the registration and communication is the fact that the mobile communication terminal MH is capable of communicating using the first protocol IPv4 as well as the second protocol IPv6, and that the mobile communication terminal MH can set up the first protocol tunnel TUN1 by the tunnel set-up unit TS1. The setting up of the tunnel TUN1 - during registration and communication - is enabled using the information (parameters) stored in the storage unit SU1, preferably, as shown in Fig. 4c, by using the second protocol second network mobile communication terminal origin address MHA-6-2-ORIG, the second protocol second network home agent address HAA-6-2 and the first protocol first network first gateway address HNGWA-G4-1.

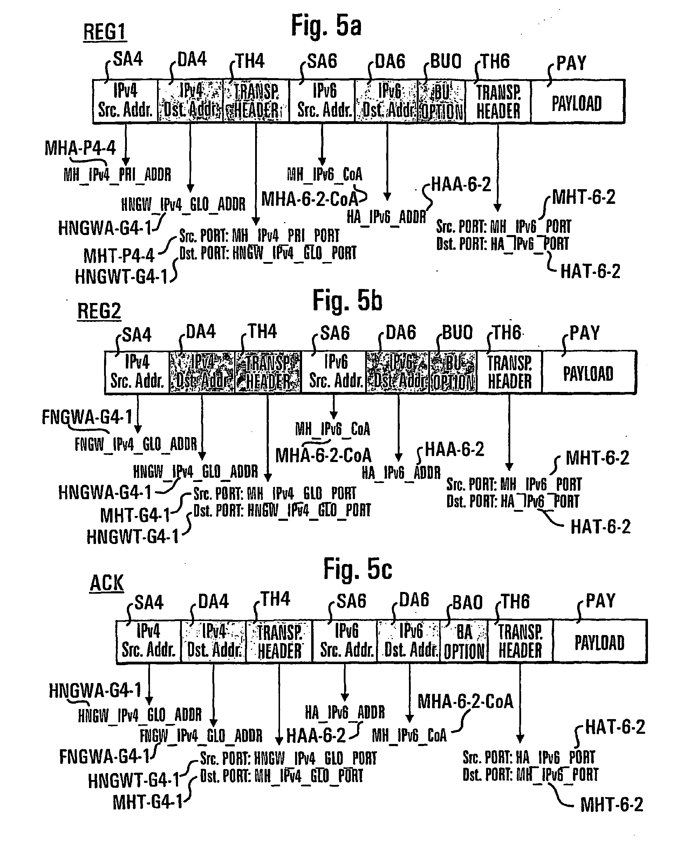

Preferably, the storage unit SU1 permanently stores the aforementioned addresses. Thus, from the basic concept of MIPv6, the aforementioned two addresses must permanently be stored in MH as its IPv6 home agent's address HA_IPv6_ADDR and its IPv6 address itself MH_ORIGIN_IPv6_ADDR, which are for example shown in the registration packet REG1 in Fig. 5a. Furthermore, the IPv4 global address of the gateway HNGW corresponding to the MH's home network must be permanently stored in the first terminal MH. This first protocol first network first gateway address HNGW_IPv4_GLO_ADDR is also shown in the registration packet REG1 in Fig. 5a.

Furthermore, in order to enable the registration and communication procedures, some routing protocol is necessary which can exchange the IPv6 reachability information between each gateway interconnected between IPv6 islands and IPv4 Internet. One example for the routing protocol which can be used in the present invention is the extension of Border Gateway Protocol (BGP).

In the registration and communication procedures to be described below also information stored in the foreign network gateway FNGW will be used in order to set up the first TUN1 and second TUN2 tunnel to and from the foreign network gateway FNGW. For example, the second gateway (foreign network gateway) FNGW comprises a storage unit for storing a first protocol fourth network first terminal address MHA-P4-4, a first protocol fourth network transport type specific information MHT-P4-4, a first protocol first network second gateway address FNGW-G4-1, and a first protocol first network transport type specific information MHT-G4-1 for allowing the set up of tunnels from and to the foreign network gateway FNGW.

In particular, the second gateway FNGW comprises a second tunnel set-up unit TS3-2, as shown in Fig. 4d, for setting up a first protocol second tunnel TUN2 between said second gateway FNGW and the first gateway HNGW and a sixth tunnel set-up unit TS3-6 for setting up a first protocol sixth tunnel TUN6 between the second gateway FNGW and the first terminal MH. The respective tunnels are shown in Fig. 4h and the block diagram of the foreign network gateway FNGW is shown in Fig. 4d. The stored information in the storage unit SU3 of the foreign network gateway FNGW is shown in the mapping correlation FNGW-MC in Fig. 11. It should be noted that the information stored in the mapping correlation FNGW-MC, as shown in Fig. 11, is usually stored, in accordance with the prior art, in the so-called network address translator NAT in the gateway FNGW. However, this information is used in the registration communication methods in accordance with the invention.

### REGISTRATION OF THE MOBILE HOST MH

Fig. 4e shows an embodiment of the registration method in accordance with the invention. Essentially, the registration is carried out such that the second protocol second network first terminal foreign address MHA-6-2-CoA - which is generated in the mobile terminal MH - is stored in the home agent HA of the second network GV6-1 (the home network HN of the first terminal MH) in association with the second protocol second network first terminal origin address MHA-6-2-ORIG as shown with the mapping correlation HA-MC in Fig. 11. This association of mapping in the home agent HA between the original address and the current location address is necessary because for any communication between MH and CH a current location address in the second protocol IPv6 must be available because of the fact that the first terminal MH has roamed from its home network HN to its foreign network FN.

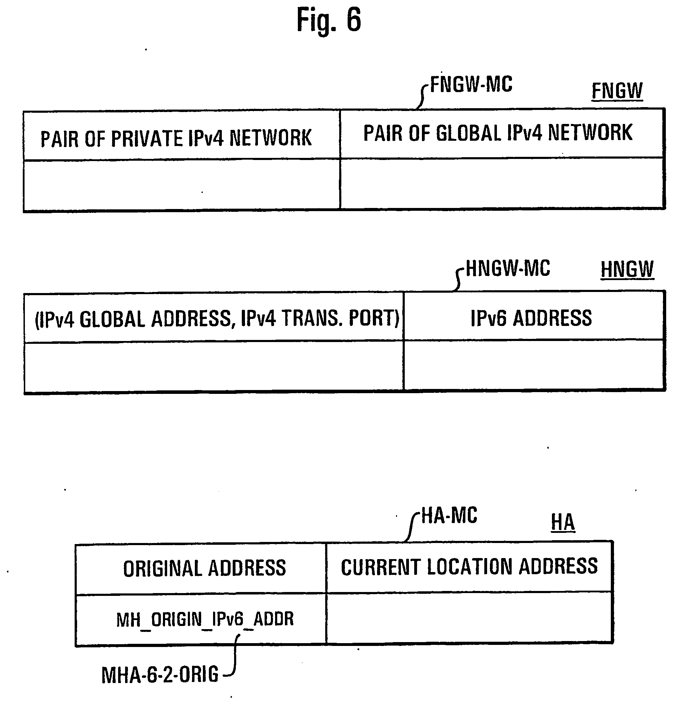

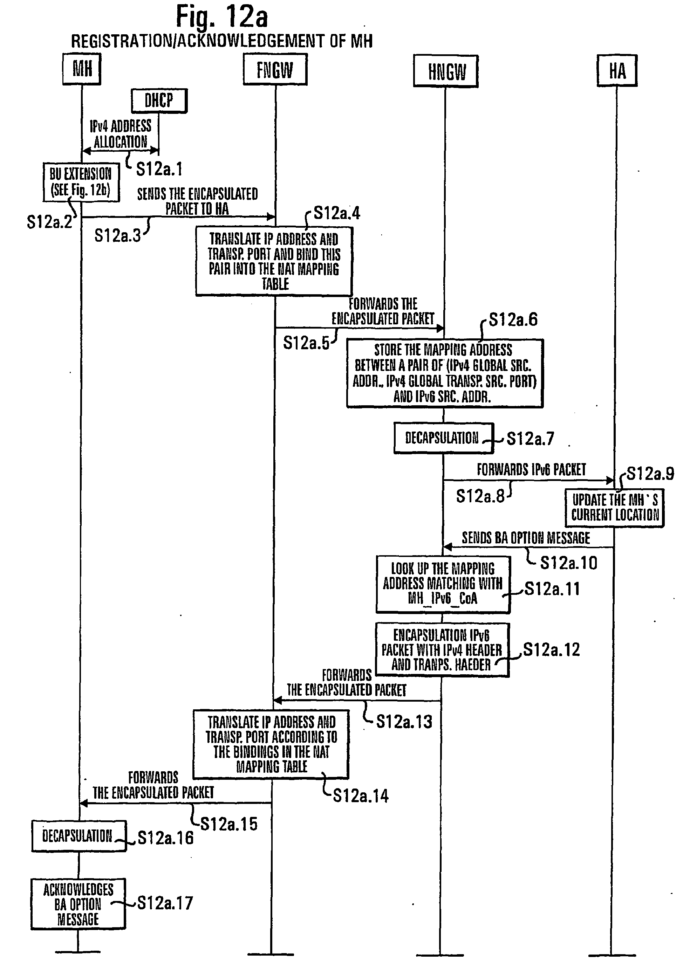

The registration method in Fig. 4e comprises steps S4e.1 to S4e.8. A more concrete embodiment how the mapping tables FNGW-MC, HNGW-MC and HA-MC in Fig. 6 will be filled during the registration method, is shown in the first part of Fig. 12a.

In step S4e.1 the first terminal MH generates a second protocol second network first terminal foreign address MHA-6-2-CoA of said first terminal from a first protocol fourth network first terminal address MHA-P4-4. MHA-6-2-CoA is a kind of second protocol IPv6 care-of address for the first terminal MH in the fourth network PV4. It is essentially the foreign address of the first terminal as seen from the second network. The generation step S4e.1 may be carried out by the generating unit GU1 of the mobile host MH as shown in Fig. 4c.

In step S4e.2 the tunnel set-up unit TS1 sets up a first protocol first tunnel TUN1 (see Fig. 4h) between the first terminal MH and the second gateway FNGW. In step S4e.3 the second protocol second network first terminal foreign address MHA-6-2-CoA is transmitted,through said first protocol first tunnel TUN1 by the transmitting unit TU1 to the foreign network gateway FNGW. In step S4e.4 a receiving unit (not shown in Fig. 4d) of the foreign network gateway FNGW receives the second protocol second network first terminal foreign address MHA-6-2-CoA and in step S4e.5 the tunnel set-up unit TS3-1 of the foreign network gateway FNGW sets up a first protocol second tunnel TUN2 between the second gateway. FNGW and the first home network gateway HNGW. In step S4e.6 the second protocol second network first terminal foreign address MHA-6-2-CoA is transmitted through the first protocol second tunnel TUN2 and the second protocol second network first terminal foreign address MHA-6-2-CoA is received in said first gateway HNGW in step S4e.7.

The home network gateway HNGW also comprises a transmission unit (not shown in Fig. 4b) which transmits in step S4e.8 the second protocol second network first terminal foreign address MHA-6-2-CoA through the second network GV6-1 to the home agent HA of said second network GV6-1. Thus, during this binding update extension procedure the assigned address to the first terminal MH is detected and registered as current location in the home agent HA. The storing of the second protocol second network first terminal foreign address MHA-6-2-CoA in the home agent HA is essentially possible due to the set up of first protocol IPv4 tunnels TUN1, TUN2 between MH → FNGW and FNGW →HNGW because otherwise a second protocol IPv6 information cannot be transmitted through the fourth and first networks PV4, IN which are implemented using the first protocol IPv4

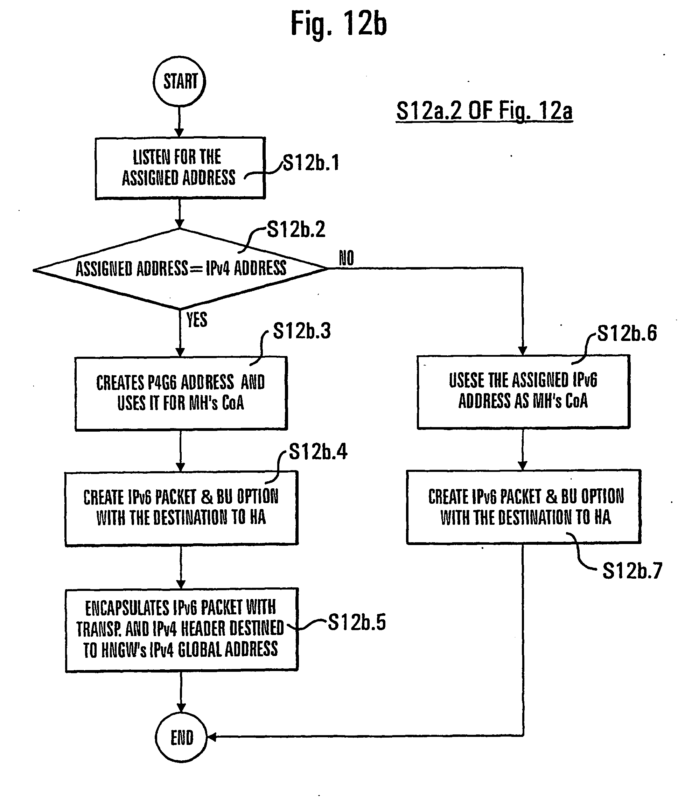

As will be explained below with more concrete details in the registration procedure of Fig. 12a, the MH's care-of-address MH_IPv6_CoA can be generated as a P4G6 address. This will be described with more detail with reference to step S12a.2 of Fig. 12a and with reference to Fig. 12b. Therefore, hereinafter a special embodiment of the registration method as shown in Fig. 12a will be described. By contrast to the more general registration method of Fig. 4e, Fig. 12a also contains with steps S12a.10 to S12a.17 an acknowledgement procedure which is not shown with more general details in Fig. 4e.

Before the start of the registration procedure in Fig. 12a the mobile host ,terminal MH was firstly located in its home networks HN and, if it is registered in its home network HN, the IPv6 original address MH_ORIGIN_IPv6_ADDR is registered in the home agent mapping correlation HA-MC as shown in Fig. 6. Fig. 6 shows the entries of the mapping correlations FNGW-MC, HNGW-MC and HA-MC before the start of the registration procedure in Fig. 12a. Then the mobile host MH moves from its home network HN to its foreign network FN (see Fig. 4a), wherein the IPv4 protocol is used. The foreign network FN is the private IPv4 network using the Network Address Translator (NAT) in the foreign network gateway FNGW (not shown in Fig. 4a and Fig. 4d) to multiplex several connections from the internal private network and presented to the Internet as if it was coming from a single computer having only one IPv4 global address. The NAT is located between the border of the IPv4 private network and the IPv4 Internet, for example in the second gateway GW2 (the foreign network gateway FNGW). Thus, after the MH has moved away to the FN, the registration method in Fig. 12a is used as a mechanism on how the home agent HA can be informed of the current location of MH. In step S12a.1 a first protocol address distribution unit DHCP (Dynamic Host Configuration Protocol) distributes to the first terminal MH the first protocol fourth network first terminal address MHA-P4-4. That is, in step S12a.1, after the MH has moved to the foreign network FN, the MH receives the new assigned private IPv4 address. In step S12a.2 the generating unit GU1 generates the second protocol second network mobile communication terminal foreign address MHA-6-2-CoA on the basis of the first protocol fourth network first terminal address MHA-P4-4. Fig. 12b shows the details of step S12a.2 of Fig. 12a.

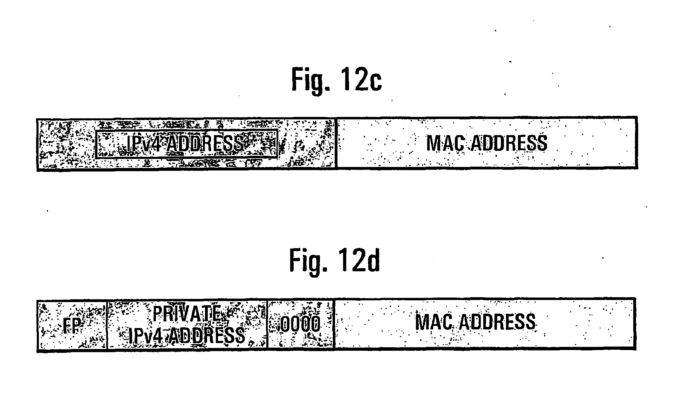

Basically, in step S12a12 the mobile host MH needs to be assigned a global IPv6 address which can be automatically created by the terminal after MH moves to another network. A basic concept of using an IPv4 address for creating an IPv6 address is the combination of an IPv4 and a MAC (Media Access Control) address as shown in Fig. 12c. Many types of such automatically created IPv6 addresses have already been proposed such as 6to4 address. In the present application a P4G6 address is used as the care-of-address MH_IPv6_CoA of the mobile host MH and the structure of this P4G6 address (the second protocol second network first terminal foreign address MHA-6-2-CoA) is shown in Fig. 12d. From Fig. 12d the specific value of the P4G6 format prefix (FP) needs to be assigned. Principally, the concept of P4G6 is almost the same as the 6to4 address structure and the differences are that the prefix is different and P4G6 uses an IPv4 private address.

Therefore, in step S12b.1 the roamed mobile host MH listens for the assigned IPv4 address, i.e. the IPv4 address generated by DHCP. In step S12b.2 it is checked whether the assigned address is a IPv4 address. If "yes" in step S12b.2, then in step S12b.3 a P4G6 address is created and is used as the care-of-address of the mobile host MH. Thus, in step S12b.3 the second protocol second network first terminal foreign address MHA-6-2-CoA is generated. One example should illustrate this P4G6 address. For example, if the first terminal MH gets the IPv4 address from DHCP in the IPv4 private network as
192.168.100.1
then the IPv6 care-of-address MH_IPv6_CoA of the mobile host MH will look like
FP: C08A: 6401: 0000: MAC_MH.

This is one example of the second protocol second network first terminal foreign address MHA-6-2-CoA, also shown in Fig. 5a. Thus, steps S12a.1 and S12a.2 with steps S12b.1, S12b.2 and S12b.3 correspond to the step S4e.1 in Fig. 4e. The result is, that the second protocol IPv6 care-of-address has been generated to be transmitted to the home agent HA.

In step S12b.4 and step S12b.7 first an IPv6 packet & BU option with the destination to HA is created and then this IPv6 packet is encapsulated with transportation and IPv4 header destined to the HNGW's IPv4 global address. In steps S12b.4 and S12b.7, therefore, the registration packet REG1 as shown in Fig. 5a is generated. The registration packet REG1 comprises a communication information PAY, a transport header TH6 including a source and destination port MHT-6-2 and HAT-6-2 as well as BU option field BUO. Furthermore, in step S12b.4 the second protocol IPv6 home agent address HAA-6-2 and the second protocol second network first terminal foreign address MHA-6-2-CoA are added to complete the IPv6 packet.

The aforementioned IPv6 packet formed of the information SA6, DA6, BUO, TH6, PAY is then encapsulated in step S12b.5 with the first protocol IPv4 transport header TH4 and the IPv4 address header containing the IPv4 destination address DA4 and the IPv4 source address SA4. Thus, the encapsulating unit EU1 of the first terminal MH encapsulates at least the second protocol second network mobile communication terminal foreign address MHA-6-2-CoA with a transport type identifying first header TH4 at least including the first protocol fourth network transport type specific information MHT-P4-4 and the first protocol fourth network header at least including said first protocol fourth network mobile communication terminal address MHA-P4-4.

Preferably, for example for communicating a communication information from the first terminal MH to another terminal CH, the encapsulating unit EU1 is further adapted to encapsulate at least a communication information with a transport type identifying first header at least including second protocol transport type specific information, with a second-protocol header at least including said second protocol second network mobile communication terminal origin address and a second protocol third network other terminal address, with a transport type identifying second header at least including first protocol fourth network transport type specific information, and with a first protocol fourth network header at least including said first protocol fourth network mobile communication terminal address and a first protocol first network first gateway address.

Finally, if in Fig. 12b in step S12b.2 the assigned address is indeed not an IPv4 address ("NO" in step S12b.2), then the assigned IPv6 address is used as the care-of-address of the mobile host MH in step S12b.6. In such a case step S12b.7 will create an IPv6 packet & BU option with the destination to HA. That is, after step S12b.5 a registration packet REG1 which at least includes the encapsulated second protocol second network mobile communication terminal foreign address MHA-6-2-CoA, the first protocol fourth network transport type specific information MHT-P4-4 and the first protocol fourth network mobile communication terminal address MHA-P4-4 is provided. Furthermore, the registration packet REG1 includes, in the BU option field BUO, the IPv6 origin address. MH_ORIGIN_IPv.6_ADDR (= MHA-6-2-ORIG) of the mobile communication terminal MH in the home network GV6-I because it will finally be used in the home agent mapping correlation HA-MC for placing the MH care-of-address MHA-6-2-CoA in the mapping correlation HA-MC. However, it is not used for the setting of the mapping correlations FNGW-MC and HNGW-MC.

Preferably, the first protocol fourth network transport type specific information MHT-P4-4 is provided by the first terminal MH. The first protocol fourth network transport type specific information MHT-P4-4 is a transportation port assigned to the first terminal as a port for tunnelling information through the fourth and first IPv4 networks (hereinafter referred to as "tunnelling port"). Preferably, this tunnelling port is exclusively used for the tunnelling procedure of tunnelling information through the fourth and first IPv4 networks which includes encapsulating of said information at least with said first protocol fourth network transport type specific information MHT-P4-4. More preferably, the tunnelling port is fixedly assigned to the first terminal MH from the beginning of the registration procedure. The fixed assignment of the tunnelling port is kept during the whole registration procedure and the following communication procedures with other terminals CH. Even when the first terminal is switched off and then switched on again within the (roamed to) fourth network the assignment of the tunnelling port is kept in the first terminal MH. This makes it possible that every IPv6 communication information (packet) sent from the (roamed) first terminal MH is encapsulated with the same first protocol fourth network transport type specific information MHT-P4-4, i.e. for every IPv6 packet the same tunnelling port is used.

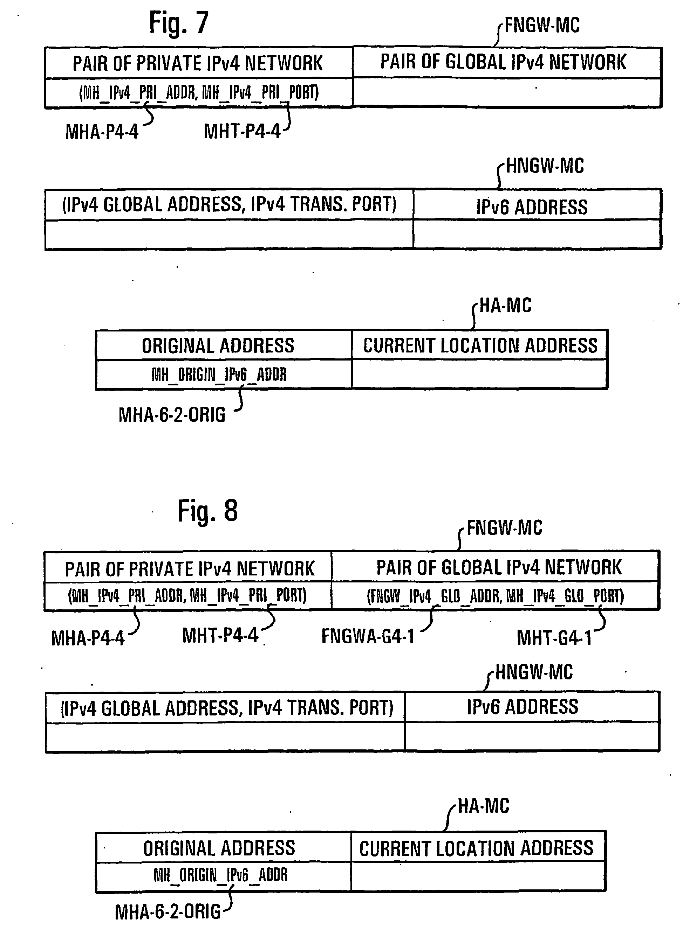

After finishing the steps, in Fig 12b after finishing step S4e.I and S4e.2 in Fig. 4e), the registration packet REG1 is sent to the foreign network gateway FNGW through the set-up tunnel TUN1 (which is a result of the encapsulation). The registration packet REG1 is sent from MH with the destination of HA to inform HA of its current location by sending the binding update (BU) option message. The IPv6 packet in the registration packet REG1 has a source address and a destination address as MH_IPv6_CoA and HA_IPv6_ADDR, as shown in Fig. 5a. In the BU option message the MH_ORIGIN_IPv6_ADDR address is included. Since MH is in the fourth network in a private IPv4 network protocol, MH encapsulates the IPv6 packet with the IPv4 header and the IPv4 transportation header. This IPv4 transportation header can either be a UDP or TCP header. Both of the IPv4 header and IPv4 transportation header will be used for NAT mapping table purposes in step S12a.4. Fig. 7 shows the entries of the step 12a.4 of Fig. 12a. After receiving the packet REG1, the foreign network gateway FNGW stores in its storage unit the first protocol fourth network first terminal address MHA-P4-4 and the first protocol fourth network transport type specific information MHT-P4-4, as shown in Fig. 7. Also in step S12a.4 the mapping correlation FNGW-MC will be set. That is, the foreign network gateway FNGW will establish the correlation between a pair of private IPv4 network information and a pair of global IPv4 network information. In particular, the first protocol first network second gateway address FNGWA-G4-1 and the first protocol first network transport type specific information MHT-G4-1 will be stored. That is, since the foreign gateway FNGW of the IPv4 private network has the NAT function, the mapping table FNGW-MC between a pair of (MH_IPv4_PRI_DDR, MH_IPv4_PRI_Port) to a pair of (FNGW_IPv4_GLO_ADDR, MH_IPv4_GLO_Port) is set, as shown in Fig. 8. On the basis of the mapping correlation FNGW-MC the foreign network gateway FNGW generates a new registration, packet REG2 as shown in Fig. 5b. That is, MHA-P4-4 is exchanged into FNGWA-G4-1 and MH_IPv4_PRI_Port is changed into MH_IPv4_GLO_Port. The destination address in the field of DA4 and the destination port in the transport header TH4 is of course related to the next destination HNGW to which the registration packet REG2 is sent. The registration packet REG2 now has in the field SA4 a global source address in the first protocol IPv4 relating to the source FNGW sending the packet REG2. On the other hand, the source port in the transport header TH4 relates to a global IPv4 port of the first terminal MH. Still contained in the portion SA6 is the MH care-of address MH_IPv6_CoA and within the BU option field there is contained the origin address MH_ORIGIN_IPv6_ADDR.

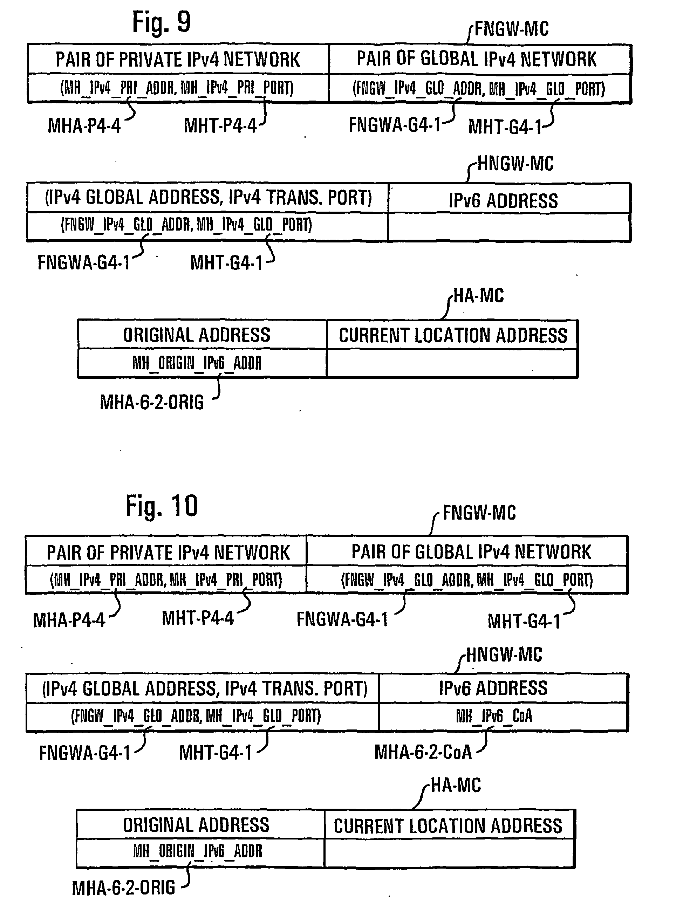

After forwarding the encapsulated registration packet REG2 from the foreign network gateway FNGW to the home network gateway HNGW in step S12a.5, the mapping correlation HNGW-MC as shown in Fig. 9 is prepared. HNGW will store or update this entry of the address mapping for a pair (FNGW_IPv4_GLO_ADDR, MH_IPv4_GLO_Port). That is, on one side of the mapping correlation HNGW-MC the parameters FNGWA-G4-1 and MHT-G4-1 of the registration packet REG2 will be stored as the IPv4 global address and the IPv4 global transport port, as shown in Fig. 9. Furthermore, in step S12a.6 the home network gateway HNGW stores the second protocol IPv6 second network GV6-1 first terminal MH foreign address MHA-6-2-CoA in the mapping table HNGW-MC, as shown in Fig. 10. Also in step S12a.6, a mapping correlation is stored between said second protocol second network first terminal foreign address MHA-6-2-CoA and the pair of said first protocol first network second gateway address FNGWA-G4-1 (= FNGW_IPv4_GLO_ADDR) and said first protocol first network transport type specific information MHT-G4-1 (= MH_IPv4_GLO_Port).

The usage of the mapping table HNGW-MC allows the communication between MH and CH. Comparing Fig. 12a and Fig. 4e, it is noted that step S4e.3 corresponds to step S12a.3, steps S4e.4 and S4e.5 correspond to step S12a.4, step S12a.5 corresponds to steps S4e.5 and S4e.6 and S4e.7. Step S12a.6 corresponds to step S4e.7.

In Step S12a.7 the decapsulating unit of the home networks gateway HNGW strips off the IPv4 portions SA4, DA4, TH4 from the registration packet REG2 and in step S12a.8 the IPv6 packet, now comprising only the portions SA6, DA6, BUO, TH6 and PAY, is forwarded to the home agent HA. Step S12a.8 corresponds to step S4e.8. When the IPv6 packet is received in the home agent HA, in step S12a.9 the mapping correlation HA-MC in the home agent HA (which, as shown in Fig. 10 still has not stored the current location address of the first terminal) is updated with the second protocol second network first terminal foreign address MHA-6-2-CoA. The home agent HA can find the corresponding entry in the correlation mapping table HA-MC by means of the MH_ORIGIN_IPv6_ADDR address which is contained in the BU option field BUO of the IPv6 packet sent from the home network gateway HNGW to the home agent HA. After step S12a.9 all mapping correlations FNGW-MC, HNGW-MC and HA-MC in the foreign network gateway FNGW, the home network gateway HNGW and the home agent HA have been set. In principle this information can now be used during a MH ↔ CH communication.

As preferred embodiment of the registration method, steps S12a.10 to S12a.17 in Fig. 12a can be used for acknowledging to the mobile host MH that the mapping correlations MC have been correctly set. To confirm the changing of the new MH's address, the home agent HA will send an IPv6 packet with the binding acknowledgement (BA) option message back to MH. This IPv6 packet is shown with the portions SA6, DA6, BAO, TH6 and PAY in Fig. 5c. As shown in Fig. 5c, the source address of this IPv6 packet is HA_IPv6_ADDR and its IPv6 destination address is MH_IPv6_CoA. Using the home network gateway mapping table HNGW-MC in Step S12a.11 the received IPv6 packet will be encapsulated with the IPv4 header and transportation header in step S12a.12 to result in the encapsulated packet ACK in Fig. 5c. The encapsulated packet ACK is sent to the foreign network gateway FNGW in step S12a.13 because the home network gateway mapping correlation HNGW-MC has indicated, on the basis of the IPv6 destination address MH_IPv6_CoA that the new global IPv4 destination address and the new global destination port is FNGW_IPv4_GLO_ADDR and MH_IPv4_GLO_Port, respectively.

In step S12a.14 the foreign network gateway FNGW uses the mapping correlation FNGW-MC to translate the IP-address and transportation port in accordance to the bindings in the NAT-mapping table FNGW-MC. Thus, FNGWA-G4-1 and MHT-G4-1 in the acknowledgement packet ACK in Fig. 5c will be replaced by MHA-P4-4 and MHT-P4-4 and such an encapsulated packet is forwarded in step S12a.15 to the mobile host MH which strips off the IPv4 header in step S12a.16 and retrieves the acknowledgement BA option message in step S12a.17. Thus, the acknowledgement packet ACK takes, in steps S12a.11 to S12a.15 the reverse route with a reverse mapping compared to the registration packets REG1, REG2.

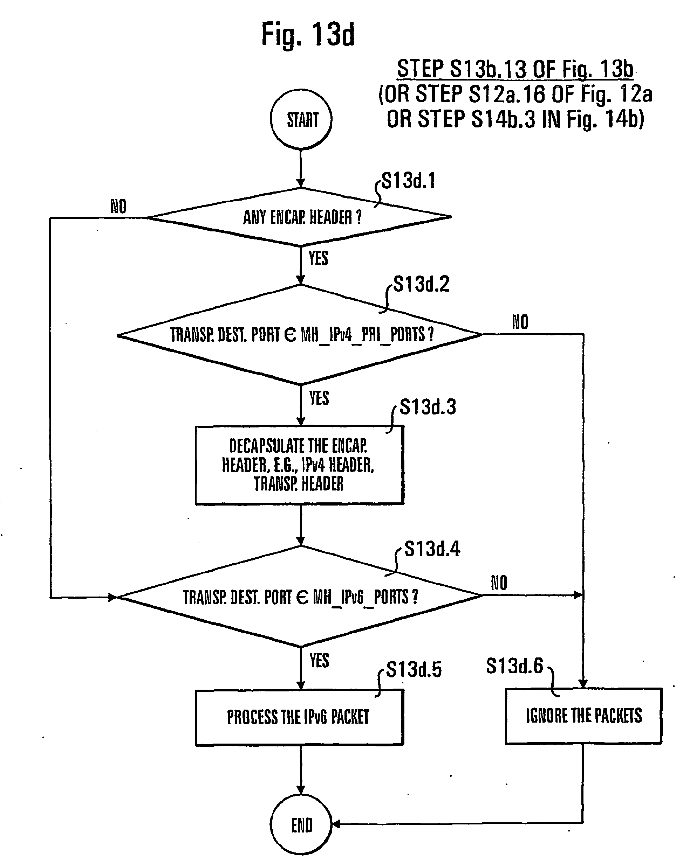

For the decapsulation procedure step S12a.16 uses the steps S13d.1 to S13d.6 of Fig. 13d.

This decapsulation flow chart in Fig. 13d is likewise used when receiving any packet, for example an acknowledgement or transmission packet, during a communication between MH and CH.

In step S13d.1 the mobile host MH checks whether there are any encapsulating IPv4 headers. If there are no encapsulating IPv4 headers, then the procedure proceeds to step S13d.4 because the first terminal MH deems that a pure IPv6 packet has been received. If there is a IPv4 header in Step S13d.1, then the first terminal checks in step S13d.2 whether the packet contains MH_IPv4_PRI_Ports as transportation destination port. If there are no such ports in the received packet in step S13d.2, then the packets are ignored in step S13d.6.

If there are such ports in step S13d.2 ("YES" in step S13d.2), then in step S13d.3 the IPv4 header and transport header are stripped off. In step S13d.4 it is checked whether the packet contains MH_IPv6_Ports as transportation destination port. If there are no such ports, the packet is ignored in step S13d.6. If there are packets with such ports in step S13d.4, then the IPv6 packet is processed in step S13d.5, for example to extract the BA option message from the IPv6 packet in step S12a.17.

Thus, the registration (the acknowledgement) procedure in Fig. 12a enables to set in particular the home network gateway HNGW mapping correlation HNGW-MC to allow the conversion unit CU2 of the home network gateway HNGW to convert between the second protocol second network first terminal foreign address MHA-6-2-CoA and a pair of the first protocol first network second gateway address FNGWA-G4-1 and the first protocol first network transport type specific information MHT-G4-1.

The mapping correlation HNGW-MC together with the home network mapping correlation HA-MC and with the foreign network gateway mapping correlation FNGW-MC (already known in the prior art) allow the communication between the roamed first terminal MH and the corresponding terminal CH in the communication system SYS as shown in Fig. 4a and Fig. 4h.

### MH → CH COMMUNICATION

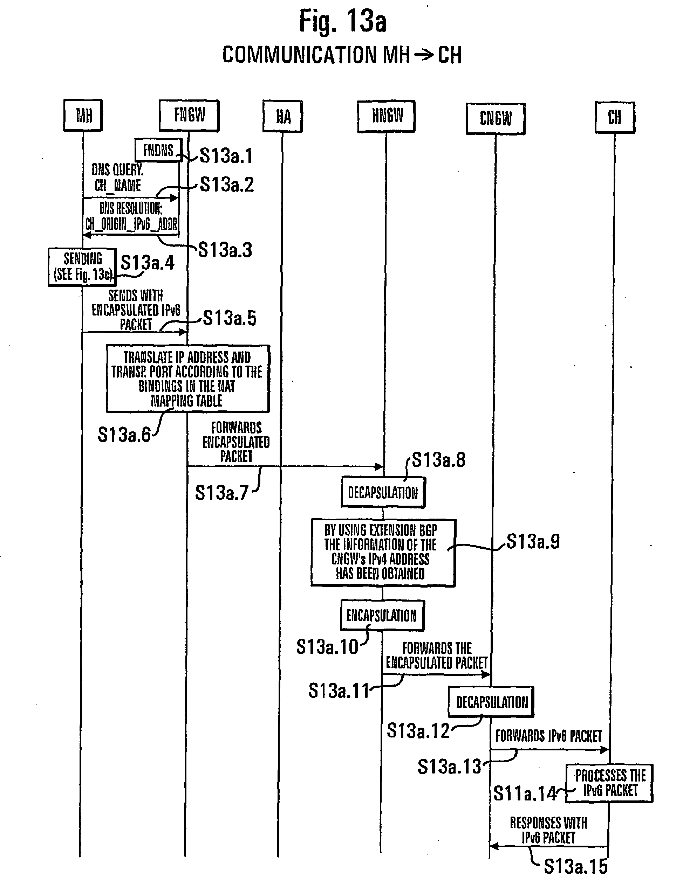

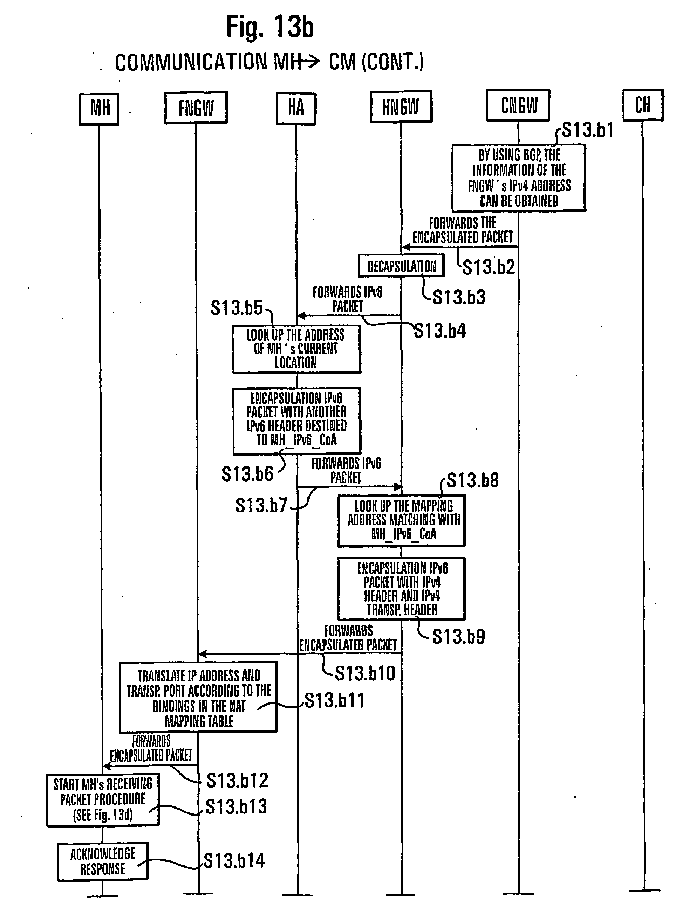

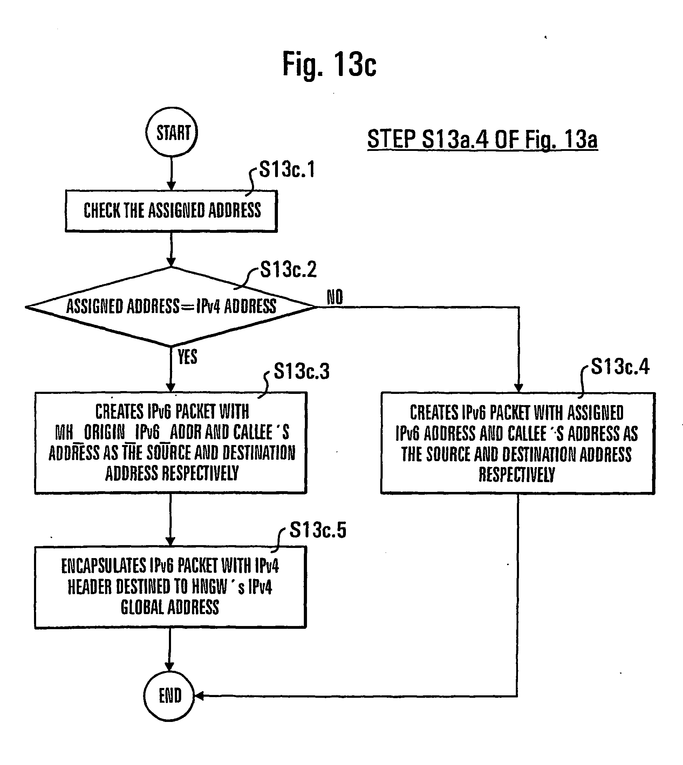

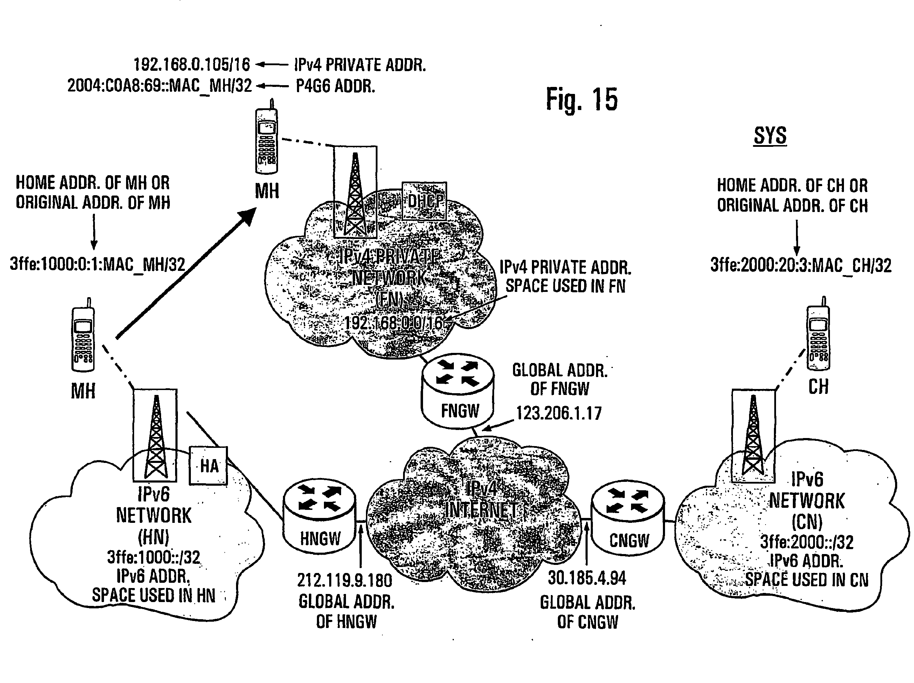

Fig. 4f shows a communication method if the first terminal MH initiates the communication to the second terminal CH in the communication system SYS shown in Fig. 4a. The usage of tunnels is shown in Fig. 4h for this communication of Fig. 4f. Fig. 15 may be referred to generally for an example of the usage of addresses in the communication system SYS. More concrete details of the steps S4f.1 to S4f.10 are shown in Fig. 13a and Fig. 13b together with Fig. 13c and Fig. 13d (Fig. 13b is a direct continuation of Fig. 13a).

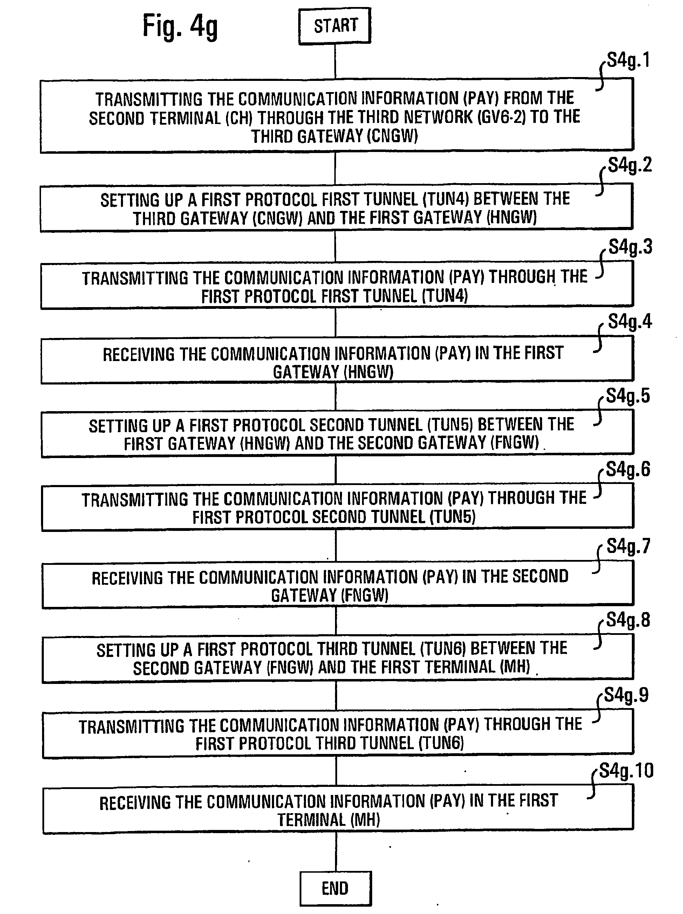

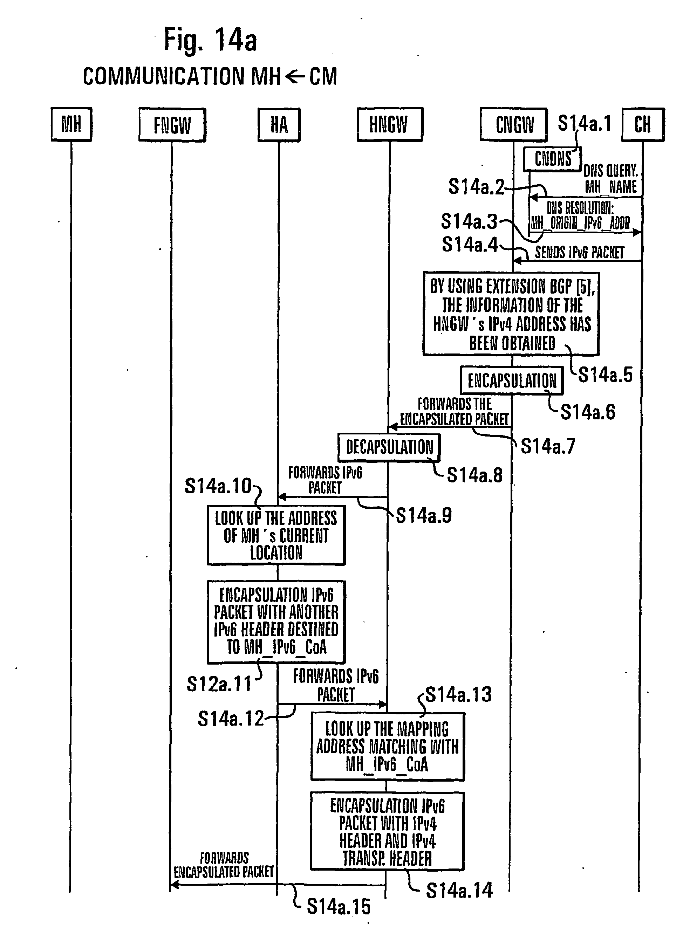

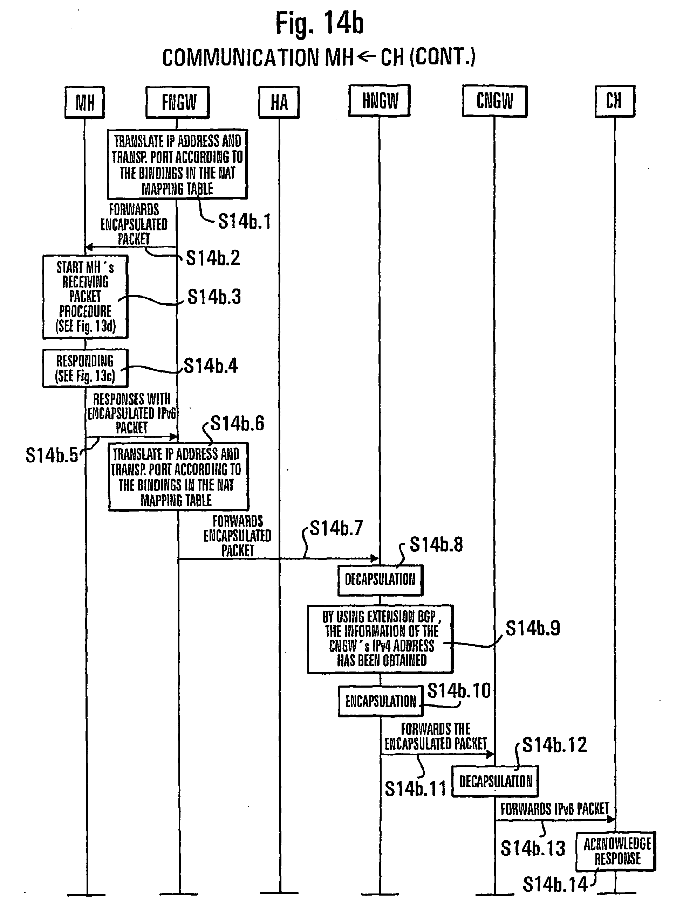

Fig. 4g shows a communication method if the second terminal CH initiates the communication to the first terminal MH. More concrete details of the steps S4g.1 to S4g.10 are shown in Fig. 14a and Fig. 14b (Fig. 14b is a direct continuation of Fig. 14a).

In step S4f.1 a first protocol first tunnel TUN1 is set up between the first terminal MH and the second gateway FNGW. In step S4f.2 the communication information PAY is transmitted through said first protocol first tunnel TUN1 and it is received in the second gateway FNGW in step S4f.3. In step S4f.4 a first protocol second tunnel TUN2 is set up by the foreign network gateway FNGW between the foreign network gateway FNGW and the first gateway HNGW.
Thereafter, in step S4f.5, the communication information PAY is transmitted through said first protocol second tunnel TUN2 to the home network gateway HNGW and it is received there in step S4f.6.

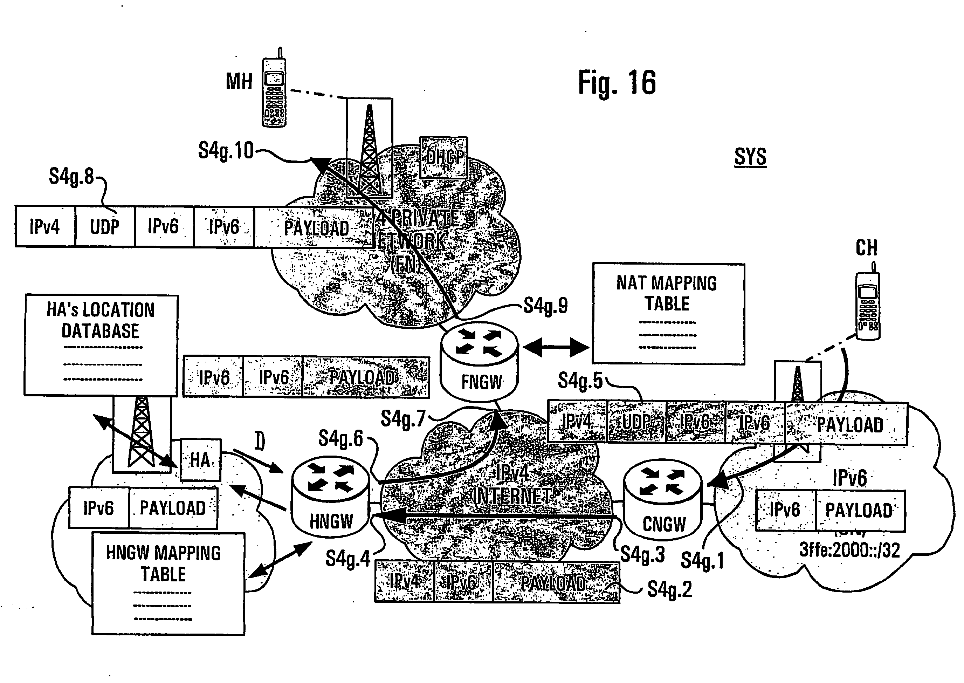

In step S4f.7 a first protocol third tunnel TUN3 is set up by the home network gateway HNGW to the third gateway CNGW (the corresponding network gateway CNGW). Then, the communication information PAY is transmitted through the first protocol third tunnel TUN3 to the gateway CNGW in step S4f.8.and it is received there in step S4f.9. Finally, the corresponding network gateway CNGW transmits the communication information PAY through the third network GV6-2 to said second terminal CH in step S4f.10. In this connection, Fig. 15 shows the' usage of addresses in a communication system SYS and Fig. 16 shows the respective headers at the payload information existing at different places in the communication system SYS.

As explained above, the respective first, second and third tunnels TUN1, TUN2 and TUN3 are set up by the respective tunnel set up units in the first terminal MH, the foreign network gateway FNGW and the home network gateway HNGW. Essentially, the first terminal MH forms an IPv6 packet including the payload information PAY and this IPv6 packet is then encapsulated with IPv4 headers in order to be encapsulated in the respective tunnels.

Therefore, step S4f.1 can preferably include encapsulating of at least said communication information with a transport type identifying first header at least including second protocol transport type specific information, with a second-protocol header at least including a second protocol second network first terminal origin address and a second protocol third network second terminal address, with a transport type identifying second header at least including first protocol fourth network transport type specific information, and with a first protocol fourth network header at least including a first protocol fourth network first terminal address and a first protocol first network first gateway address.

Furthermore, step S4f.4 preferably includes changing said transport type identifying second header to a transport type identifying third header at least including first protocol first network transport type specific information, and changing said first protocol fourth network header to a first protocol first network first header at least including a first protocol first network second gateway address and said first protocol first network first gateway address.

Furthermore, preferably step S4f.7 includes decapsulating said communication information at least from said first protocol first network first header and encapsulating said decapsulated communication information with a first protocol first network second header at least including a first protocol first network third gateway address.

Finally, step S4f.9 preferably includes decapsulating said communication information at least from said first protocol first network second header.

In this manner the payload information PAY is provided inside a IPv6 packet and is encapsulated and decapsulated with IPv4 headers when being sent through the respective tunnels TUN1, TUN2, TUN3, as shown in Fig. 4h.

A special embodiment of the communication initiated by MH using the special IPv4 and IPv6 specifications in the mapping correlations FNGW-MC, HNGW-MC and HA-MC as shown in Fig. 11 is hereinafter described with reference to Fig. 13a, 13b, 13c, 13d.

As can be seen from Fig. 13a, in association with the fourth network PV4 there is provided preferably a Foreign Network's Domain Name Server FNDNS which can provide, for each corresponding terminal CH of the third network GV6-2, its CH address. Therefore, in step S13a.2 the first terminal MH sends a DNS request for CH's address to the foreign network's domain name server FNDNS and in step S13a.3 the FNDNS replies with the CH_ORIGIN_IPv6_ADDR. In step S13a.4 the first terminal MH sends a IPv6 packet to CH with MH_ORIGIN_IPv6_ADDR and CH_ORIGIN_IPv6_ADDR as the source and the destination address, respectively.

Preferably, step S13a.4 of Fig. 13a comprises the steps S13c.1 to S13c.5 of Fig. 13c. That is, in step S13c.1 the received address from FNDNS is checked and if in step S13c.2 the address received from FNDNS is determined to be a valid IPv4 address ("YES" in step S13c.2), then step S13c.3 creates the IPv6 packet with MH_ORIGIN_IPv6_ADDR and the callee's address as the source and the destination address, respectively. Before this IPv6 packet with the desired payload information PAY (see Fig. 16) can be sent to CH, it needs to be encapsulated with IPv4 an header destined to HNGW's IPv4 global address as shown in step S13c.5.

If the received address from FNDNS is not a IPv4 address, then it is determined in step S13c.2 ("NO" in step S13c.2) that the assigned address is a IPv6 address and thus, in step S13c.4, the IPv6 packet is created with the assigned IPv6 address and the callee's address as the source and destination address, respectively.

In step S13a.5, for the transmission through the first tunnel TUN1, the IPv6 packet is encapsulated with an IPv4 header destined to HNGW's IPv4 global address and is subsequently received in the foreign network gateway FNGW. In the foreign network gateway FNGW the IP address and the transportation port is translated in accordance with the translations in the mapping correlation FNGW-MC in the foreign network gateway FNGW (in the NAT). This is done in very much the same manner as was done for the registration packet REG1 shown in Fig. 5a because the only difference between the transmission and registration is that now payload information PAY is actually transmitted to the corresponding host CH. Therefore, in step S13a.6 the respective information MHA-P4-4 and MHT-P4-4 of the packets shown in Fig. 5a (including payload information PAY) is translated into the information FNGWA-G4-1 and MHT-G4-1 shown in the mapping correlation FNGW-MC in Fig. 11.

In step S13a.7 the newly encapsulated packet is sent through the second tunnel TUN2 (i.e. it is encapsulated) to the home network gateway HNGW. In step S13a.8 the IPv4 header is stripped off (decapsulation). In step S13a.9, the HNGW's receiving and transmitting procedure is used. By using this procedure, step S13a.9 in principal is provided to obtain the information of the CNGW's IPv4 address by using a routing protocol which generally can exchange IPv6 reachability information between each gateway interconnected between IPv6 islands and the IPv4 Internet. A well known example of such a routing protocol is the extension Border Gateway Protocol (BGP). In step S13a.10 the packet is encapsulated with an IPv4 header destined to CNGW by using the obtained information of the CNGW's IPv4 address and the packet is forwarded in step S13a.11 to the corresponding network gateway CNGW where it is decapsulated in step S13a.12. Finally, the IPv46 packet is forwarded to the corresponding host CH in step S13a.13 which processes the IPv6 packet in step S13a.14 in order to obtain for example the payload information PAY. It should be noted that steps S13a.2 to step S13a.14 is the first transmission of a packet from MH to CH and that further packets from MH will use the same procedure.

Of course, the communication between MH and CH also includes that CH responds to MH with an IPv6 packet in step S13a.15. Likewise, as explained above for step S13a.9, by using for example the extension Border Gateway Protocol BGP, the information of the FNGW's IPv4 address can be obtained in step S13b.1 in the corresponding network gateway CNGW. In step S13b.2 the IPv6 packet is encapsulated with an IPv4 header destined to the home network gateway HNGW and is forwarded to the HNGW whereafter it is decapsulated in step S13b.3.

In step S13b.4 the IPv6 packet is forwarded to HA and HA will look up its table HA-MC. That is, the forwarded IPv6 packet in step S13b.4 will actually include an address information MH_ORIGIN_IPv6_ADDR (IPv6 origin address of mobile host MH in the home network) as a destination address of the IPv6 packet since the corresponding host CH does not know the current location address of MH. Thus, in step S13b.5 the mapping correlation HA-MC is looked up in order to obtain the current location address of MH. In step S13b.6 the IPv6 packet is encapsulated with another IPv6 header which now contains as a destination address MH_IPv6_CoA, i.e. the care-of-address of the (roamed) first terminal MH in the fourth network PV4.

Subsequently, the IPv6 packet is forwarded to the home network gateway HNGW in step S13b.7. Since the packet received in HNGW contains the care-of-address of the first terminal MH, HNGW can look up its mapping correlation HNGW-MC, in step S13b.8 in order to translate MHA-6-2-CoA into FNGWA-G4-1 and MHT-G4-1, i.e. there is an address/port translation between an IPv6 address to another IPv4 global address and IPv4 transportation port in step S13b.8. After obtaining the information in step S13b.8, the IPv6 packet is encapsulated with an IPv4 address header and an IPv4 transportation header using FNGWA-G4-1 and MHT-G4-1 as IPv4 destination address and as IPv4 transport destination port, respectively. Subsequently, in step S13b.10, the packet is forwarded to the foreign network gateway FNGW which uses its mapping correlation FNGW-MC in order to translate the IPv4 address and IPv4 transportation port in accordance with the bindings in the mapping table FNGW-MC in step S13b.11.

That is, the information FNGWA-G4-1 and MHT-G4-1 respectively contained in the IPv4 header and the IPv4 transportation header is translated into the information MHA-P4-4 and MHT-P4-4 in step S13b.11. This information is then used to forward the encapsulated packet in step S13b.12 back to the mobile terminal MH which starts, in step S13b.13 a receiving procedure as shown in Fig. 13d. Fig. 13d is already described above with respect to the receipt of an acknowledgement packet ACK as shown in Fig. 5c. The receiving procedure for any other payload information packet is not different to this such that the same procedure and steps S13d.1 to S13d.6 as was used for the receipt of an acknowledgement packet, is performed for the receipt of the encapsulated packet which was forwarded to MH in step S13b.12.

It is possible, after step S13b.13, to send an acknowledgement packet back to the corresponding host CH in step S13b.14 in order to acknowledge safe receipt of the payload information. However, the transmission of an acknowledgement pocket is by no means different to the forwarding of another payload packet and therefore the acknowledgement response sending in step S13b.14 is entirely similar to the sending of a packet beginning with step S13a.4 in Fig. 13a.

As can be seen from Fig. 13a and Fig. 13b, one of the core features of the preferred embodiment of the communication method MH → CH is the usage of the translation tables for addresses and ports in step S13a.6, S13a.9, S13b.5, S13b.8 and S13b.11. Thus, it will also be understood now that the communication method between MH → CH can only be carried out if the respective information in the mapping correlations FNGW-MC, HNGW-MC and HA-MC, as shown in Fig. 11, have been previously set during the registration procedure.

### CH → MH COMMUNICATION

Hereinafter, a communication initiated by CH will be generally described with reference to Fig. 4g. The tunnels may be seen from Fig. 4a and Fig. 4h, whilst Fig. 15 shows the general usage of an example of address formats and Fig. 16 shows the respective format of the packets at various places in a communication system SYS during the communication initiated by CH. Since Fig. 16 shows the communication initiated by CH, Fig. 16 also carries the step designation of the steps in Fig. 4g for easier reference.

As a first step in Fig. 4g, the communication information PAY is transmitted from the second terminal CH through the third network GV6-2 to the third gateway CNGW. In step S4g.2 a first protocol first tunnel which is called the fourth tunnel TUN4 in Fig. 4h is set up between the third gateway CNGW and the first gateway HNGW. In step S4g.3 the communication information PAY is transmitted through this first protocol first tunnel TUN4 to the home network gateway HNGW. The communication information PAY is received in the first gateway HNGW in step S4g.4 and in step S4g.5 a first protocol second tunnel TUN5, which is called the fifth tunnel in Fig. 4h, is set up between the first gateway HNGW and the second gateway FNGW. As will be understood, in step S4g.5 the translation table in HNGW and HA will be used as will be explained with more details with reference to Fig. 14a and 14b.

In step S4g.7 the communication information PAY is received in a second gateway FNGW and in step S4g.8 a first protocol third tunnel TUN6, which is called the sixth tunnel TUN6 in Fig. 4h is set up between the second gateway FNGW and the first terminal MH.

In step S4g.9 the communication information PAY is transmitted through the first protocol third tunnel TUN6 and in step S4g.10 the communication information PAY is received in the first terminal MH.

As already mentioned above, the set up of the tunnels essentially means an encapsulation of an IPv6 packet with IPv4 headers, as can also be seen from Fig. 16. This type of encapsulation is possible due to the usage of the mapping tables FNGW-MC, HNGW-MC and HA-MC as shown in Fig. 11.

Therefore, preferably before step S4g.1 a second protocol second network first terminal origin address is distributed from a second protocol address distribution unit to said second terminal.

Further, preferably, before step S4g.1 at least said communication information PAY is encapsulated at least with a second protocol third network header at least including a second protocol third network second terminal address CHA-6-3 and said second protocol second network first terminal origin address MHA-6-2-ORIG.

Furthermore, the step S4g.2 includes encapsulating of at least said communication information PAY with a first protocol first network first header at least including a first protocol first network first gateway address HNGWA-G4-1.

Furthermore, between steps S4g.4 and S4g.5 said communication information PAY is decapsulated at least from said first protocol first network first header and said decapsulated communication information PAY is transmitted through said second network GV6-1 to a home agent HA of said second network GV6-1.

Also preferably, said decapsulated communication information PAY is encapsulated at least with a second protocol second network first terminal foreign address MHA-6-2-CoA.

It is also preferred that said encapsulated communication information PAY is transmitted through said second network GV6-1 to said first gateway HNGW.

Further preferably, step S 4g.5 includes encapsulating of at least said communication information PAY with a transport type identifying first header at least including first protocol first network transport type specific information MHT-G4-1, and with a first protocol first network second header at least including a first protocol first network first gateway address HNGWA-G4-1 and a first protocol first network second gateway address FNGWA-G4-1.

Further, preferably, step S4g.8 includes changing said transport type identifying first header to a transport type identifying second header at least including first protocol fourth network transport type specific information MHT-P4-4, and changing said first protocol first network second header to a first protocol fourth network header at least including said first protocol first network second gateway address FNGWA-G4-1 and a first protocol fourth network first terminal address MHA-P4-4.

Step S4g.10 preferably includes decapsulating said communication information PAY at least from said first protocol fourth network header.

As can be seen, for example, from Fig. 16, the encapsulated communication information received in step S4g.4 is decapsulated from the IPv4 header in the home network gateway HNGW. Then, HNGW forwards the IPv6 packet to the home agent HA. HA will look up its table HA-MC. That is, the packet comprising the communication information PAY, the IPv6 header and the IPv4 header transmitted in step S4g.3 and received in the HNGW in step S4g.4 will actually include an address information MH_ORIGIN_IPv6_ADDR (IPv6 origin address of mobile host MH in the home network) as a destination address in the IPv6 header since the corresponding host CH does not know the current location address of MH. Thus, the mapping correlation HA-MC between the IPv6 origin address MH_ORIGIN__IPv6_ADDR of mobile host MH in the home network and the IPv6 foreign address MH_IPv6_CoA of mobile host MH in the visited foreign network is looked up in order to obtain the current location address of MH. Then, the home agent HA encapsulates the IPv6 packet with another IPv6 header which now contains as a destination address MH_IPv6_CoA, i.e. the care-of-address of the (roamed) first terminal MH in the fourth network PV4. Thereby, the IPv6 packet is redirected to the current location of the first terminal MH. After this redirection of the packet from HA, HA transmits the packet back to the HNGW. In step S4g.5, HNGW then sets up an IPv4 tunnel to the foreign network gateway FNGW by encapsulating the IPv6 packet with an IPv4 header. This IPv4 header preferably comprises the global IPv4 address of the foreign network gateway FNGW as destination address in the IPv4 address header according to the entry in the mapping table HNGW-MC. More preferably, the IPv4 header additionally comprises the global IPv4 transportation port of the first terminal MH as destination port in the IPv4 transportation header according to the entry in the mapping table HNGW-MC. From Fig. 16 and also from the steps in Fig. 4g it can be seen that it is essential that the information in Fig. 11 is available. In particular, the HNGW-MC mapping correlation is used in the communication between CH and MH since otherwise the packets to be transmitted by HNGW cannot be encapsulated (tunnelled) through the respective first network IN and the fourth network PV4.

A preferred embodiment of the communication method between MH ← CH is shown in Fig. 14a and 14b (Fig. 14b is a direct continuation of Fig. 14a).

As shown in Fig. 14a, with step S14a.1, there is provided a Correspondent Network's Domain Name Server CNDNS which provides to the corresponding host CH the location address of the first terminal MH in its home network HN (GV6-1). That is, since the corresponding host CH cannot know the current location of MH or any other terminal it wants to call, the only possibility is that the CNDNS provides the location address registered in the home agent HA of the first terminal's home network HN (GV6-1). Therefore, in step S14a.2 the CH sends a DNS request for MH's address to CNDNS and in step S14a.3 the CNDNS replies with the MH_ORIGIN_IPv6_ADDR address of the first terminal MH which is of course stored in the home agent HA as original address (see Fig. 11). In step S14a.4 the corresponding host CH sends an IPv6 packet with payload information PAY to a corresponding node gateway CNGW. This packet is a IPv6 packet and it has as destination address MH_ORIGIN_IPv6_ADDR. In step S14a.5, at the border between CN and the IPv4 Internet, the gateway CNGW uses, for example, an extension BGP protocol to get the HNGW's IPv4 global address. CNGW encapsulates in step S14a.6 the IPv6 packet with the IPv4 header destined to HNGW. Subsequently, in step S14a.7 the encapsulated packet is forwarded to the home network gateway HNGW where it is decapsulated in step S14a.8. The packet (which is now a IPv6 packet - see Fig. 16) is forwarded in step S14a.9 to the home agent HA. The home agent, in step S14a.10, obtains from the home agent mapping table HA-MC the current location address MH_IPv6_CoA which was assigned to the first terminal MH during its registration procedure.

In step S14a.11 the home agent HA encapsulates the IPv6 packet with another IPv6 header having as destination address MH_IPv6_CoA. In step S14a.12 this IPv6 packet is forwarded to HNGW (this step is similar to step "I)" in Fig. 16).

In step S14a.13 the home network gateway HNGW looks up its mapping correlation HNGW-MC in order to obtain the address and port relating to FNGW. That is, the information MH-6-2-CoA contained in the received IPv6 packet is translated into FNGWA-G4-1 and MHT-G4-1. This translation is obviously necessary in order to encapsulate the IPv6 packet with the new IPv4 header and the IPv4 transportation header in step S14a.14 (the information on the left-hand side in HNGW-MC of Fig. 11). In this manner, the next destination address is the FNGN and therefore, in step S14a.15, the encapsulated packet is forwarded to the FNGW (through the tunnel TUN5; Fig. 4h).

In step S14b.1 (Fig. 14b is a direct continuation of Fig. 14a) the FNGW translates the IP address and transportation address according to the translations in the NAT mapping table, i.e. in the FNGW-MC mapping correlation shown in Fig. 11. Thus, the FNGW translates the information FNGWA-G4-1 and MHT-G4-1 to MHA-P4-4 and MHT-P4-4 as shown in Fig. 11. Thus, the global IPv4 network information is translated into the private IPv4 network information. Thus, in step S14b.2 the packet can be encapsulated with the left-hand side information of FNGW-MC in Fig. 11 and can be transmitted to the mobile host MH.

In step S14b.3 the mobile host MH starts a receiving procedure for the packet as was already explained with reference to Fig. 13d. Fig. 13d was above already described for the receipt of an acknowledgement packet and the procedure in step S14b.3 is not different when a normal "communication" packet is received. Therefore, a description of Fig. 13d is not repeated here.

In step S14b.4 the first terminal MH will send a response with a IPv6 packet back to CH. The source address of this IPv6 packet will be MH_ORIGIN_IPv6_ADDR instead of MH_IPv6_CoA, because information about MH_IPv6_CoA is not exchange to other gateways. Again the steps in Fig. 13c described above for the sending of a packet in step S13a.4 of Fig. 13a, is used because at the stage of step S14b.4 there is no difference whether an original (in step S13a.4) or a response (in step S14b.4) packet is transmitted. Therefore, the description of Fig. 13c for step S14b.4 is not repeated. However, it should be noted that in step S14b.4 a response packet is sent instead of an original packet.

As may be understood from a comparison of steps S13a.4 to S13a.14 with steps S14b.4 to S14b.14, there is no difference in the usage of translation tables in FNGW, HNGW and there is no difference regarding the encapsulation and decapsulation whether an original packet (Fig. 13a) or a response packet (Fig. 14b) is transmitted from MH → CH. Therefore, it should be understood that steps S14b.4 to S14b.14 are corresponding to the steps S13a.4 to S13a.14 and the description is not repeated. The only minor difference is that in step S14b.14 the corresponding host CH will initiate an acknowledge response rather than just processing the IPv6 packet.

### FURTHER EMBODIMENTS

As already explained above for the embodiment of the registration/acknowledgement procedure of the (roamed) mobile host MH with respect to Fig. 12a, the home network gateway HNGW in step S12a.6 stores a mapping correlation HNGW-MC between the second protocol second network first terminal foreign address MHA-6-2-CoA and a pair of parameters FNGWA-4-1 and MHT-G4-1. Then, in step S12a.7, the decapsulating unit of the home network gateway HNGW strips off the IPv4. portions SA4, DA4, TH4 from the registration packet REG2.

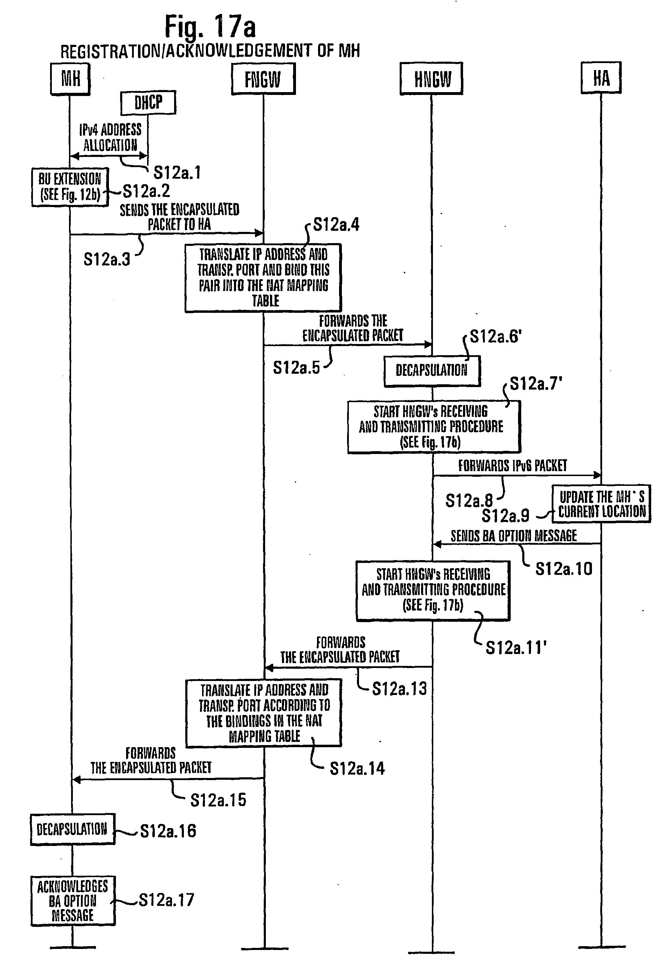

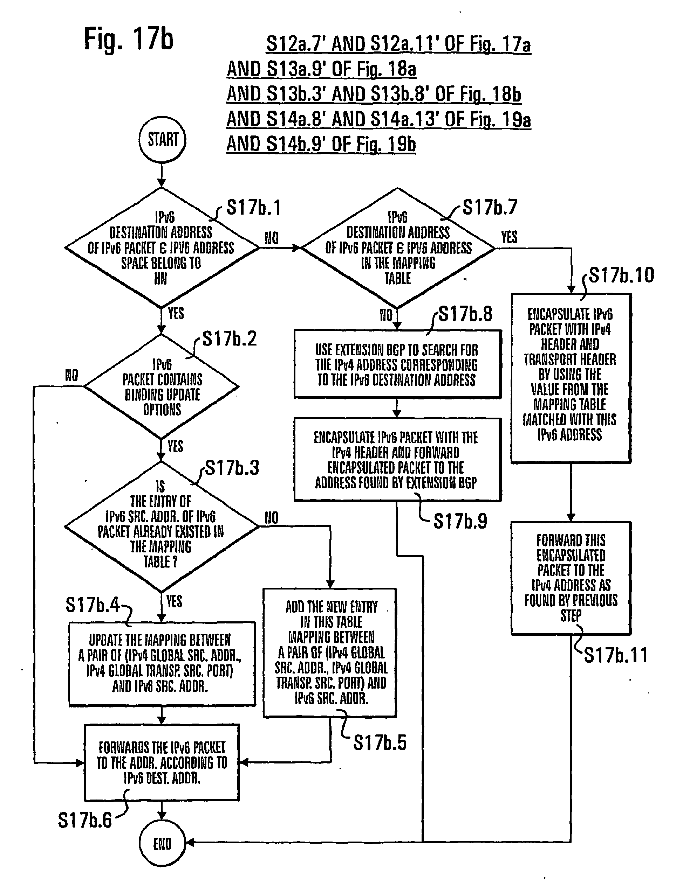

However, according to another embodiment, the registration/acknowledgement procedure of the mobile host MH can also be done as shown in Fig. 17a. The steps' S12a.1 to S12a.5 of Fig. 17a are identical to steps S12a.1 to S12a.5 of Fig. 12a. therefore, the same reference numerals are assigned to these steps in Fig. 17a and the description of these steps will not be repeated here. Step S12a.6' of Fig. 17a shows that the encapsulated packet forwarded from the foreign network gateway FNGW to the home network gateway HNGW in step S12a.5 is decapsulated. This means that in step S12a.6' the decapsulting unit of the home network gateway HNGW strips off the IPv4 portions SA4, DA4, TH4 from the registration packet REG2. Then, in step S12a.7', the home network gateway HNGW starts its receiving and transmitting procedure as shown in Fig. 17b. The HNGW's receiving and transmitting procedure according to Fig. 17b in general will be described in the following.

In step S17b.1, it is checked whether the IPv6 destination address of the received IPv6 packet is an IPv6 address belonging to the IPv6 address space of the home network HN. If yes ("YES" in step S17b.1), it will be checked in step S17b.2 whether the IPv6 packet contains any Binding Update. Options BUO. If no ("NO" in step S17b.2), the IPv6 packet is forwarded to the address according to the IPv6 destination address in step S17b.6. If yes ("YES" in step S17b.2), it is checked in step S17b.3 whether the entry of the IPv6 source address of the IPv6 packet already exists in the mapping table HNGW-MC. This means that it is checked whether there is an entry MHA-6-2-CoA (second protocol second network first terminal foreign address MH_IPv6_CoA) of a certain mobile host MH roamed to a foreign network FN. If no ("NO" in step S17b.3), a new entry is added in the home network gateway mapping correlation HNGW-MC mapping between a pair of (IPv4 global source address, IPv4 global transport source port) and the IPv6 source address. This means that in step S17b.5 a new mapping correlation is stored in the mapping table HNGW-MC between the second protocol second network first terminal foreign address MHA-6-2-CoA and a pair of the first protocol first network second gateway address FNGWA-4-1 and the first protocol first network transport type specific information MHT-G4-1. If the result of step S17b.3 is that there already exists an entry of the IPv6 source address of the received IPv6 packet in the mapping table HNGW-MC ("YES" in step S17b.3), then in step S17b.4 the mapping between a pair of (IPv4 global source address, IPv4 global transport source port) and the IPv6 source address is updated. This means that the values of the parameters MHA-6-2-CoA, FNGWA-G4-1 and MHT-G4-1 are updated. Also, if there was a change in at least one of these three parameters during the updating, the mapping correlation between the second protocol second network first terminal foreign address MHA-6-2-CoA and the pair of the first protocol first network second gateway address FNGWA-G4-1 and the first protocol first network transport type specific information MGT-G4-1 is updated. After step S17b.4 and also after step S17b.5, the IPv6 packet is forwarded to the address according to the IPv6 destination address in step S17b.6. The above described portion of the HNGW's receiving and transmitting procedure according to Fig. 17b in particular concerns to the registration/acknowledgement procedure of the mobile host MH.

However, there is in principle also the possibility that the encapsulated packet forwarded to HNGW for example in step S12a.5 or in other steps of a registration procedure or a communication procedure and decapsulated from the IPv4 address header and the IPv4 transport header for example in step S12a.6' has an IPv6 destination address which does not belong to the IPv6 address space of the home network HN ("NO" in step S17b.1). In this case, in the following step S17b.7 it is checked whether the IPv6 destination address of the IPv6 packet is an IPv6 address stored in the mapping table HNGW-MC. If no ("NO" in step S17b.7), in step S17b.8 for example the extension Border Gateway Protocol BGP is used to search for the IPv4 address corresponding to the IPv6 destination address. Then, in step S17b.9 the IPv6 packet is encapsulated and the encapsulated packet is forwarded to the address found by extension BGP.

If it is found that the IPv6 destination address of the IPv46 packet is an IPv6 address stored in the mapping table HNGW-MC ("YES" in step S17b.7), in step S17b.10 the IPv6 packet is encapsulated with an IPv4 address header and an IPv4 transport header by using the values from the mapping table matching with this IPv6 address. Then, in step S17b.11, this encapsulated packet is forwarded to the IPv4 address as found by the previous step S17b.10.

According to the various situations in the steps of the registration/acknowledgement procedure, the communication procedure initiated by the mobile host MH and the communication procedure initiated by the correspondent host CH shown in Fig. 17a, Fig. 18a, Fig. 18b, Fig. 19a and Fig. 19b, it can be logically distinguished in the HNGW's receiving and transmitting procedure according to Fig. 17b between the following three branches:
the left branch comprising the steps S17b.1 to S17b.6;
the middle branch comprising the step S17b.1 and the steps S17b.7 to S17b.9; and
the right branch comprising the step S17b.1, the step S17b.7, the step S17b.10 and the step S17b.11.

In the following, the description of the registration/acknowledgement procedure of the mobile host MH according to Fig. 17a will be continued. In step S12a.7', in the home network gateway the HNGW's receiving and transmitting procedure as described above and which is shown in Fig. 17b is started. Preferably, in step S12a.7' the HNGW's receiving and transmitting procedure will take the left branch with the decision "YES" in step S17b.2 because the IPv6 destination address of the IPv6 packet is the second protocol second network home agent address HAA-6-2. This IPv6 address belongs to the address space of the home network HN and the IPv6 packet of registration packet REG2 contains a binding update option in the Binding Unit Option field BUO. The following steps S12a.8 to S12a.10 are identical to the registration/acknowledgement procedure according to Fig. 12a. Thus, a description of these steps is omitted here. After sending the binding acknowledgement message from the home agent HA to the home network gateway HNGW in step S12a.10, again the HNGW's receiving and transmitting procedure according to Fig. 17b is started in step S12a.11'. Preferably, in step S12a.11' the HNGW's receiving and transmitting procedure will take the right branch because the IPv6 destination address of the IPv6 packet at this stage is MHA-6-2-CoA which does not belong to the IPv6 address space of the home network HN and because this IPv6 destination address MHA-6-2-CoA is stored in the mapping table HNGW-MC. The following steps S12a.13 to S12a.17 are identical to the registration/acknowledgement procedure of the mobile host MH as shown in Fig. 12a such that the description of these steps will not be repeated hereinafter.

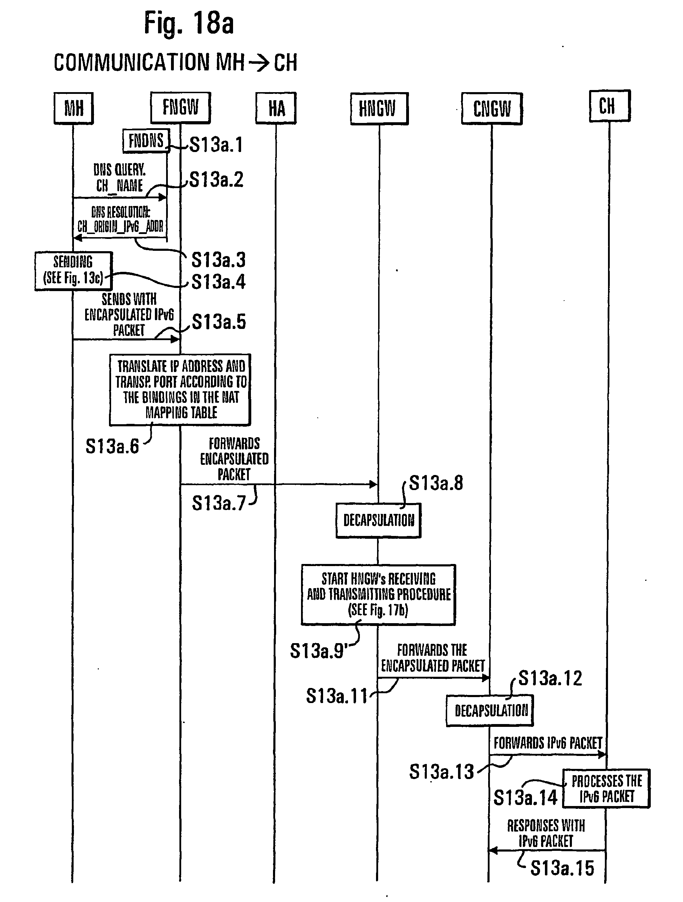

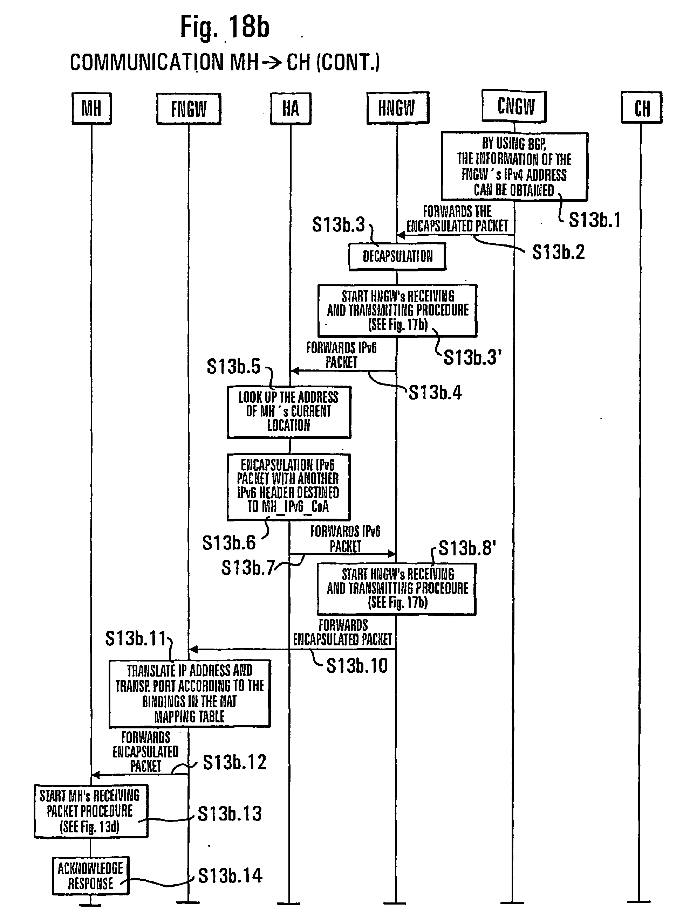

A communication procedure initiated by the first terminal MH to the second terminal CH was described above with respect to Figs. 13a and 13b. However, there is also another embodiment of such a communication procedure as will be explained in view of Figs. 18a and 18b. As can be seen from Fig. 18a, the steps S13a.1 to S13a.8 are identical to the communication procedure as shown in Fig. 13a. After decapsulating the IPv6 packet from any IPv4 header in step S13a.8, the home network gateway HNGW starts its receiving and transmitting procedure according to Fig. 17b in step S13a.9'. Preferably, the HNGW's receiving and transmitting procedure at this stage of the communication will take the middle branch because the IPv6 destination address of the IPv6 packet is the second protocol third network second terminal address CHA-6-3. This IPv6 address does not belong to the IPv6 address space of the home network HN and is not stored in the mapping table HNGW-MC. The HNGW's receiving and transmitting procedure in step S13a.9' is followed by the steps S13a.11 to S13a.15 and by the steps S13b.1 to S13b.3 which are identical to the corresponding steps having the same reference numerals in Figs. 13a and 13b. Therefore, it is referred here to the description of these steps given above. After decapsulating the IPv6 packet from any IPv4 header in step S13b.3, again the HNGW's receiving and transmitting procedure according to Fig. 17b is started in the HNGW in step S13b.3'. Preferably, at this stage of the communication procedure, the HNGW's receiving and transmitting procedure will take the left branch with the decision "NO" in step S17b.2 because the IPv6 destination address of this IPv6 packet is the second protocol second network first terminal origin address MHA-6-2-ORIG and this IPv6 address belongs to the IPv6 address space of the home network HN.

The HNGW's receiving and transmitting procedure in step S13b.3' is followed by the steps S13b.4 to S13b.7 which are already described above with respect to Fig. 13b. After forwarding the IPv6 packet from the home agent HA to the home network gateway HNGW in step S13b.7, again the HNGW's receiving and transmitting procedure of Fig. 17b is started in the HNGW in step S13b.8'. Preferably, the HNGW's receiving and transmitting procedure in step S13b.8' will take the right branch because the IPv6 destination address of the IPv6 packet is the second protocol second network first terminal foreign address MHA-6-2CoA. This IPv6 address does not belong to the IPv6 address space of the home network HN and is stored in the mapping table HNGW-MC. The HNGW's receiving and transmitting procedure in step S13b.8' is followed by the steps S13b.10 to S13b.14 which are already described above with respect to Fig. 13b.

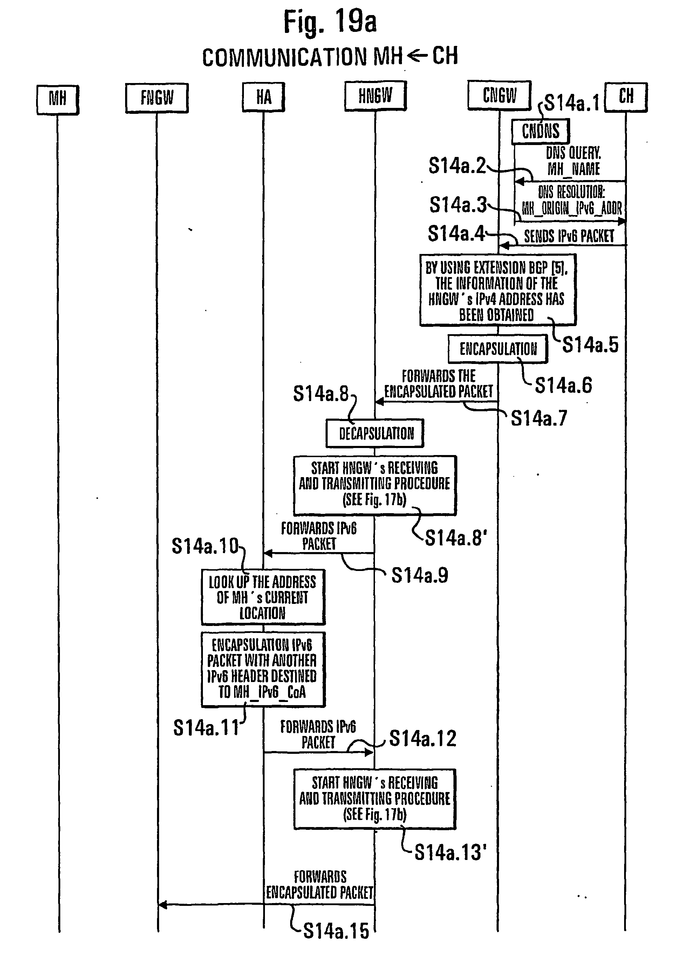

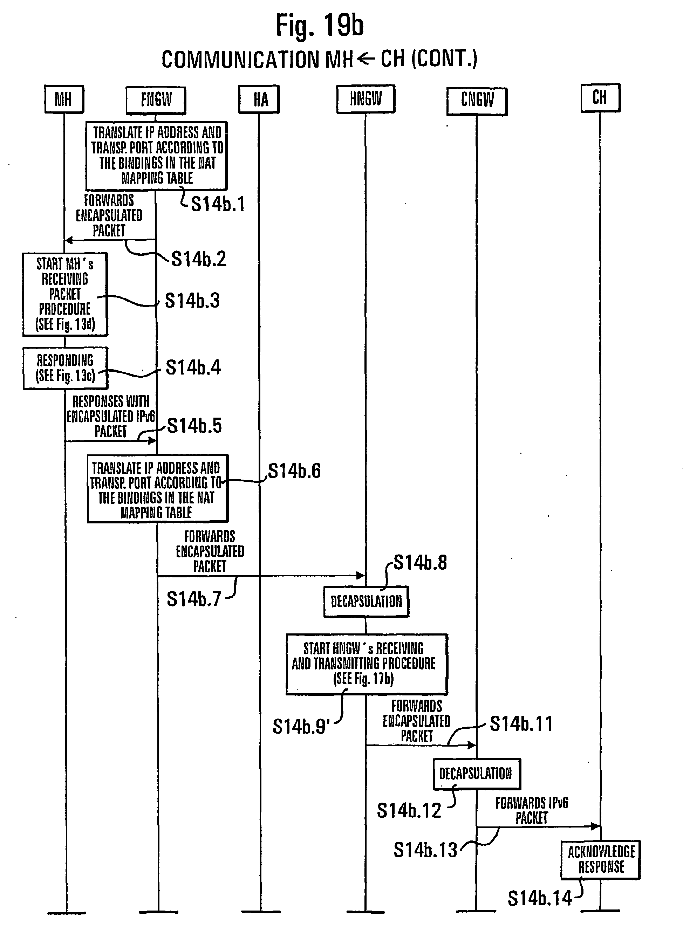

A communication procedure initiated by the second terminal CH to the first terminal MH was described above with respect to Figs. 14a and 14b. However, there is also another embodiment of such a communication procedure which will be described in the following with respect to Figs. 19a and 19b. The steps S14a.1 to S14a.8 are identical to the corresponding steps in Fig. 14a. After decapsulating the IPv6 packet from any IPv4 header in step S14a.8, the HNGW's receiving and transmitting procedure according to Fig. 17b is started in the HNGW in step S14a.8'. Preferably, the HNGW's receiving and transmitting procedure in step S14a.8' will take the left branch with the decision "NO" in step S17b.2 because the IPv6 destination address of the IPv6 packet is the second protocol second network first terminal origin address MHA-6-2-ORIG and this IPv6 address belongs to the IPv6 address space of the home network HN. The HNGW's receiving and transmitting procedure in step S14a.8' is followed by the steps S14a.9 to S14a.12 which are already described above with respect to Fig. 14a. After forwarding the IPv6 packet from the home agent HA the home network gateway HNGW in step S14a.12, again the HNGW's receiving and transmitting procedure according to Fig. 17b is started in the HNGW in step S14a.13'. Preferably, in step S14a.13', the HNGW's receiving and transmitting procedure will take the right branch because the IPv6 destination address of the IPv4 packet is the second protocol second network first terminal foreign address MHA-6-2-CoA. This IPv6 address does not belong to the IPv6 address space of the home network HN and it is stored in the mapping table HNGW-MC.

The HNGW's receiving and transmitting procedure in steps S14a.13' is followed by the step S14a.15 and the steps S14b.1 to S14b.8 which are already described above with respect to Figs. 14a and 14b. After decapsulating the IPv6 packet from any IPv4 header in step S14b.8, again the HNGW's receiving and transmitting procedure according to Fig. 17b is started in the HNGW in step S14b.9'. Preferably, the HNGW's receiving and transmitting procedure in step S14b.9' will take the middle branch because the IPv6 destination address of the IPv6 packet is the second protocol third network second terminal address CHA-6-3. This IPv6 address does not belong to the IPv6 address of the home network HN and is not stored in the mapping table HNGW-MC. The HNGW's receiving and transmitting procedure in step S14b.9' is followed by the steps S14b.11 to S14b.14 as already described above with respect to Fig. 14b.

As may be understood from the above description of communications between MH and CH during the registration, acknowledgement and communication procedures, some specific functions and changes of the Mobile terminal and the gateway located between the IPv6 home network and the IPv4 Internet need to be made, however, no changes are necessary for both the IPv4 foreign network and the IPv4 Internet. Therefore, an easy implementation to allow the communication between MH and CH in the communication system SYS comprising the four networks as shown in Fig. 4a is achieved. No changes are necessary for other IPv6 networks, except that their gateways must use any kind of routing protocol which can exchange the reachability information, e.g. the BGP extension protocol.

### INDUSTRIAL APPLICABILITY

The present invention describes how communication between a first terminal and a second terminal of a communication system comprising four networks, as shown in Fig. 4a, is described. Only changes in the mobile host MH and the home network gateway HNGW together with the home agent HA are necessary. Although above often the specific examples of an IPv4 and IPv6 protocol is used for the first and second protocols, it should be noted that the invention is not restricted to such protocol use. The present invention may be used in any communication system SYS where first and fourth networks use the first protocol for addressing and the second and the third networks use the second protocol for addressing and where the second and third addresses of the second and third networks are selected from the same address range and where the first and fourth addresses being respectively selected from the first protocol but from different address ranges of the first protocol. It is pointed out that the invention is also not restricted to the roaming situation where a mobile host roams to a Private IPv4 network such that for example the mobile communication terminal MH of the invention is of course also capable of roaming to other protocol type networks like, for example, Global IPv4 networks or Global IPv6 networks.

Furthermore, it should be noted that the invention comprises other embodiments which have been separately described and claimed in the specification and the claims. Furthermore, further modifications and variations may be carried out by the skilled person on the basis of the teachings disclosed herein.

Furthermore, the invention also includes a computer program product, stored on a computer readable medium comprising a computer program as defined in the present invention or any embodiments thereof.

The invention also includes a data carrier having computer readable code embodied therein, comprising means adapted to carry out a method according to the invention or any embodiment thereof.

Furthermore, the invention also includes a computer readable medium, including a program according to the invention or any embodiment thereof.

## Claims

1. A registration method carried out in a communication system (SYS) including a first network (IN) implemented using a first protocol (IPv4) , said first network (IN) being connected to a second network (GV6-1) implemented using a second protocol (IPv6)', and a fourth network (PV4) implemented using said first protocol (IPv4) through a respective first and second gateway (HNGW, FNGW),
the registration method being a method for registering in said second network (GV6-1) a first terminal (MH) of said second network (GV6-1) having roamed to said fourth network (PV4);
said first and second protocols (IPv4, IPv6) being different;
said first and fourth networks (IN, PV4) using said first protocol (IPv4) for addressing in said first and fourth networks (IN, PV4);
said second network (GV6-1) using said second protocol (IPv6) for addressing in said second network (GV6-1);
said first, second and fourth networks (IN, GV6-1, PV4) respectively comprising first, second and fourth addresses;
said second addresses being second protocol second network addresses;
said first and fourth addresses being respectively first protocol first network addresses and first protocol fourth network addresses selected from different address ranges of said first protocol;
wherein said registration method comprises the following steps:
a) generating (S 4e.1) in said first terminal (MH) a second protocol second network first terminal foreign address (MHA-6-2-CoA) of said first terminal (MH) from a first protocol fourth network first terminal address (MHA-P4-4);
b) setting up (S 4e.2) a first protocol first tunnel (TUN1) between said first terminal (MH) and said second gateway (FNGW);
c) transmitting (S 4e.3) said second protocol second network first terminal foreign address (MHA-6-2-CoA) through said first protocol first tunnel (TUN1) ;
d) receiving (S 4e.4) said second protocol second network first terminal foreign address (MHA-6-2-CoA) in said second gateway (FNGW);
e) setting up (S 4e.5) a first protocol second tunnel (TUN2) between said second gateway (FNGW) and said first gateway (HNGW);
f) transmitting (S4e.6), said second protocol second network first terminal foreign address (MHA-6-2-CoA) through said first protocol second tunnel (TUN2);
g) receiving (S 4e.7) said second protocol second network first terminal foreign address (MHA-6-2-CoA) in said first gateway (HNGW);
h) transmitting (S 4e.8) said second protocol second network first terminal foreign address (MHA-6-2-CoA) through said second network (GV6-1) to a home agent (HA) in said second network (GV6-1).

2. A registration method according to claim 1, wherein
before said, step a) (S 4e.1) said first protocol fourth network first terminal address (MHA-P4-4) is distributed from a first protocol address distribution unit to said first terminal (MH).

3. A registration method according to one of the claims 1 or 2, wherein
said step b) (S 4e.2) includes encapsulating of at least said second protocol second network first terminal foreign address (MHA-6-2-CoA) with a transport type identifying first header at least including first protocol fourth network transport type specific information (MHT-P4-4) and a first protocol fourth network header at least including said first protocol fourth network first terminal address (MHA-P4-4).

4. A registration method according to one of the claims 1 to 3, wherein
said step e) (S 4e.5) includes changing said transport type identifying first header to a transport type identifying second header at least including first protocol first network transport type specific information (NIF-IT-G4-1), and changing said first protocol fourth network header to a first protocol first network header at least including a first protocol first network second gateway address (FNGWA-G4-1).

5. A registration method according to one of the claims 1 to 4, wherein
said step g) (S 4e.7) includes decapsulating said encapsulated second protocol second network first terminal foreign address (MHA-6-2-CoA) from said transport type identifying second header and said first protocol fourth network header.

6. A communication method carried out in a communication system (SYS) including a first network (IN) implemented using a first protocol (IPv4), said first network (IN) being connected to a second network (GV6-1) implemented using a second protocol (IPv6), to a fourth network (PV4) implemented using said first protocol (IPv4), and to a third network (GV6-2) implemented using said second protocol (IPv6) through a respective first, second and third gateway (HNGW, FNGW, CNGW),
the communication method being a method for providing communication information (PAY) from a first terminal (MH) of said second network (GV6-1) having roamed to said fourth network (PV4) to a second terminal (CH) of said third network (GV6-2);
said first and second protocols (IPv4, IP6) being different;
said first and fourth networks (IN, PV4) using said first protocol (IPv4) for addressing in said first and fourth networks (IN, PV4);
said second and third networks (GV6-1, GV6-2) using said second protocol (IPv6) for addressing in said second and third networks (GV6-1, GV6-2);
said first, second, third and fourth networks (IN, GV6-1, GV6-2, PV4) respectively comprising first, second, third and fourth addresses;
said second and third addresses being respectively second protocol second network addresses and second protocol third network addresses;
said first and fourth addresses being respectively first protocol first network addresses and first protocol fourth network addresses selected from different address ranges of said first protocol;
wherein said communication method comprises the following steps:
a) setting up (S 4f.1) a first protocol first tunnel (TUN1) between said first terminal (MH) and said second gateway (FNGW);
b) transmitting (S 4f.2) said communication information (PAY) through said first protocol first tunnel (TUN1) ;
c) receiving (S 4f.3) said communication information (PAY) in said second gateway (FNGW);
d) setting up (S 4f.4) a first protocol second tunnel (TUN2) between said second gateway (FNGW) and said first gateway (HNGW);
e) transmitting (S 4f.5) said communication information (PAY) through said first protocol second tunnel (TUN2);
f) receiving (S 4f.6) said communication information (PAY) in said first gateway (HNGW);
g) setting up (S 4f.7) a first protocol third tunnel (TUN3) between said first gateway (HNGW) and said third gateway (CNGW);
h) transmitting (S 4f.8) said communication information (PAY) through said first protocol third tunnel (TUN3);
i) receiving (S 4f.9) said communication information (PAY) in said third gateway (CNGW);
j) transmitting (S-4f.10) said communication information (PAY) through said third network (GV6-2) to said second terminal (CH).

7. A communication method according to claim 6, wherein before said step a) (S 4f.1) a second protocol third network second terminal address (CHA-6-3) is distributed from a second protocol address distribution unit to said first terminal (MH).

8. A communication method carried out in a communication system (SYS) including a first network (IN) implemented using a first protocol (IPv4), said first network (IN) being connected to a second network (GV6-1) implemented using a second protocol (IPv6), to a fourth network
(PV4) implemented using said first protocol (IPv4), and to a third network (GV6-2) implemented using said second protocol (IPv6) through a respective first, second and third gateway (HNGW, FNGW, CNGW),
the communication method being a method for providing communication information (PAY) from a second terminal (CH) of said third network (GV6-2) to a first terminal (MH) of said second network (GV6-1) having roamed to said fourth network (PV4);
said first and second protocols (IPv4, IPv6) being different;
said first and fourth networks (IN, PV4) using said first protocol (IPv4) for addressing in said first and fourth networks (IN, PV4);
said second and third networks (GV6-1, GV6-2) using said second protocol (IPv6) for addressing in said second and third networks (GV6-1, GV6-2);
said first, second, third and fourth networks (IN, GV6-1, GV6-2, PV4) respectively comprising first, second, third and fourth addresses;
said second and third addresses being respectively second protocol second network addresses and second protocol third network addresses;
said first and fourth addresses being respectively first protocol first network addresses and first protocol fourth network addresses selected from different address ranges of said first protocol;
wherein said communication method comprises the following steps:
a) transmitting (S 4g.1) said communication information (PAY) from said second terminal (CH) through said third network (GV6-2) to said third gateway (CNGW);
b) setting up (S 4g.2) a first protocol first tunnel (TUN4) between said third gateway (CNGW) and said first gateway (HNGW);
c) transmitting (S 4g.3) said communication information (PAY) through said first protocol first tunnel (TUN4);
d) receiving (S 4g.4) said communication information (PAY) in said first gateway (HNGW);
e) setting up (S 4g.5) a first protocol second tunnel (TUN5) between said first gateway (HNGW) and said second gateway (FNGW);
f) transmitting (S 4g.6) said communication information (PAY) through said first protocol second tunnel (TUN5);
g) receiving (S 4g.7) said communication information (PAY) in said second gateway (FNGW);
h) setting up (S 4g.8) a first protocol third tunnel (TUN6) between said second gateway (FNGW) and said first terminal (MH);
i) transmitting (S 4g.9) said communication information (PAY) through said first protocol third tunnel (TUN6) ;
j) receiving (S 4g.10) said communication information (PAY) in said first terminal (MH).

9. A communication method according to claim 8, wherein
before said step a) (S 4g.1) a second protocol second network first terminal origin address (MHA-6-2-ORIG) is distributed from a second protocol address distribution unit to said second terminal (CH).

10. A communication method according to claim 8 or 9, wherein
said step b) (S 4g.2) includes encapsulating of at least said communication information (PAY) with a first protocol first network first header at least including a first protocol first network first gateway address (HNGWA-G4-1)-.

11. A communication method according to one of the claims 8 to 10, wherein
between said step d) (S 4g.4) and said step e) (S 4g.5):
a) said communication information (PAY) is decapsulated at least from said first protocol first network first header; and
b) said decapsulated communication information (PAY) is transmitted through said second network (GV6-1) to a home agent (HA) of said second network (GV6-1).

12. A mobile communication terminal (MH) configured for providing communication between said mobile communication terminal (MH) and another terminal (CH), wherein
said mobile communication terminal (MH) is configured to operate in a second network (GV6-1) implemented using a second protocol (IPv6),
said other terminal (CH) operates in a third network (GV6-2) implemented using said second protocol (IPv6),
the mobile communication terminal being **characterized in that**;
1) the mobile communication terminal is further configured so that
said communication is provided through fourth and first networks (PV4; IN) implemented using a first protocol (IPv4) different from said second protocol (IPv6),
said second, fourth and third networks (GV6-1, PV4, GV6-2) are connected to said first network (IN) through a respective first, second and third gateway (HNGW, FNGW, CNGW),
said mobile communication terminal (MH) is further configured to roam to said fourth network (PV4), said second network (GV6-1) comprising a home agent (HA) ;
said first and fourth networks (IN, PV4) use said first protocol (IPv4) for addressing in said first and fourth networks (IN, PV4);
said second and third networks (GV6-1, GV6-2) use said second protocol (IPv6) for addressing in said second and third networks (GV6-1, GV6-2);
said first, second, third and fourth networks (IN, GV6-1, GV6-2, PV4) respectively comprise first, second, third and fourth addresses;
said second and third addresses are respectively second protocol second network addresses and second protocol third network addresses;
said first and fourth addresses are respectively first protocol first network addresses and first protocol fourth network addresses. selected from different address ranges of said first protocol, and
2) **in that**
a) said mobile communication terminal (MH) is capable of communicating using said first protocol (IPv4) and said second protocol (IPv6);
b) said mobile communication terminal (MH) comprises a tunnel set up unit (TS1) for setting up a first-protocols tunnel (TUN1) between said mobile communication terminal (MH) and said second gateway (FNGW).

13. A mobile communication terminal (MH) according to claim 12, further comprising
a generating unit (GU1) for generating a second protocol second network mobile communication terminal foreign address (MHA-6-2-CoA).

14. A mobile communication terminal (MH) according to the claim 12 or 13, wherein
in said generating unit (GU1) said first protocol fourth network mobile communication terminal address (MHA-P4-4) is used for generating said second protocol second network mobile communication terminal foreign address (MHA-6-2-CoA).

15. A mobile communication terminal (MH) according to one of the claims 12 to 14, wherein
said second protocol second network mobile communication terminal origin address (MHA-6-2-ORIG), said second protocol second network home agent address (HAA-6-2), and said first protocol first network first gateway address (HNGWA-G4-1) are permanently stored in a storage unit (SU1).

16. A mobile communication terminal (MH) according to one of the claims 12 to 15, further comprising
an encapsulating unit (EU1) for encapsulating at least said second protocol second network mobile communication terminal foreign address (MHA-6-2-CoA) with a transport type identifying first header at least including first protocol fourth network transport type specific information (MHT-P4-4) and a first protocol fourth network header at least including said first protocol fourth network mobile communication terminal address (MHA-P4-4).

17. A mobile communication terminal (MH) according to claim 16, wherein
said encapsulating unit (EU1) is further adapted to encapsulate at least a communication information (PAY) with a transport type identifying first header at least including second protocol transport type specific information (T-6), with a second-protocol header at least including said second protocol second network mobile communication terminal origin address (MHA-6-2-ORIG) and a second protocol third network other terminal address (CHA-6-3), with a transport type identifying second header at least including first protocol fourth network transport type specific information (MHT-P4-4), and with a first protocol fourth network header at least including said first protocol fourth network mobile communication terminal address (MHA-P4-4) and a first protocol first network first gateway address (HNGWA-G4-1).

18. A gateway (HNGW) forming a first gateway (HNGW) configured to operate
in a communication system (SYS) including a first network (IN) implemented using a first protocol (IPv4),
said first network (IN) being connected
to a second network (GV6-1) implemented using a second protocol (IPv6),
to a fourth network (PV4) implemented using said first protocol (IPv4), and
to a third network (GV6-2) implemented using said second protocol (IPv6) respectively through said first gateway (HNGW), a second and a third gateway (FNGW, CNGW),
the first gateway (HNGW) being further configured for providing communication information (PAY) from a second terminal (CH) of said third network (GV6-2)
to a first terminal (MH) of said second network (GV6-1) having roamed to said fourth network (PV4), or
from said first terminal (MH) to said second terminal (CH) ;
said first and second protocols (IPv4, IPv6) being different;
said first and fourth networks (IN, PV4) using said first protocol (IPv4) for addressing in said first and fourth networks (IN, PV4);
said second and third networks (GV6-1, GV6-2) using said second protocol (IPv6) for addressing in said second and third networks (GV6-1, GV6-2);
said first, second, third and fourth networks (IN, GV6-1, GV6-2, PV4) respectively comprising first, second, third and fourth addresses;
said second and third addresses being respectively second protocol second network addresses and second protocol third network addresses;
said first and fourth addresses being respectively first protocol first network addresses and first protocol fourth network addresses selected from different address ranges of said first protocol,
wherein
said first gateway (HNGW) comprises a conversion unit (CU2) adapted to convert between a second protocol second network first terminal foreign address (MHA-6-2-CoA) and a pair of a first protocol first network second gateway address (FNGWA-G4-1) and a first protocol first network transport type specific information (MHT-G4-1).

19. A gateway (HNGW) according to claim 18, further comprising
a first tunnel set up unit (TS2-1) for setting up a first-protocol tunnel between said gateway (HNGW) and said second gateway (FNGW), and
a second tunnel set up unit (TS2-2) for setting up another first-protocol tunnel between said gateway (HNGW) and said third gateway (CNGW).

20. A gateway (HNGW) according to one of the claims 18 to 19, wherein said first protocol first network second gateway address (FNGWA-G4-1), said first protocol first network transport type specific information (MHT-G4-1), and said second protocol second network first terminal foreign address (MHA-6-2-CoA) are stored in a mapping table, and
wherein, in said mapping table, a mapping correlation is stored between said second protocol second network first terminal foreign address (MHA-6-2-CoA) and a pair of said first protocol first network second gateway address (FNGWA-G4-1) and said first protocol first network transport type specific information (MHT-G4-1).

21. A registration method carried out by a first terminal (MH) operating in a communication system (SYS),
said communication system (SYS) including
a first network (IN) implemented using a first protocol, said first network (IN) being connected to a second network (GV6-1) implemented using a second protocol, and a fourth network (PV4) implemented using said first protocol through a respective first and second gateway (HNGW, FNGW),
the registration method being a method for registering in said second network (GV6-1) said first terminal (MH) of said second network (GV6-1) having roamed to said fourth network (PV4) ;
said first and second protocols being different;
said first and fourth networks (IN, PV4) using said first protocol for addressing in said first and fourth networks (IN, PV4) ;
said second network (GV6-1) using said second protocol for addressing in said second network (GV6-1);
said first, second and fourth networks (IN, GV6-1, PV4) respectively comprising first, second and fourth addresses;
said second addresses being second protocol second network addresses;
said first and fourth addresses being respectively first protocol first network addresses and first protocol fourth network addresses selected from different address ranges of said first protocol;
wherein said registration method comprises the following steps:
a) generating (S 4e.1) in said first terminal (MH) a second protocol second network first terminal foreign address (MHA-6-2-CoA) of said first terminal (MH) from a first protocol fourth network first terminal address (MHA-P4-4);
b) setting up (S 4e.2) a first protocol first tunnel (TUN1) between said first terminal (MH) and said second gateway (FNGW);
c) transmitting (S 4e.3) said second protocol second network first terminal foreign address (MHA-6-2-CoA) through said first protocol first tunnel (TUN1);
said communication system (SYS) being such that:
said second gateway (FNGW) is adapted to receive (S 4e.4) said second protocol second network first terminal foreign address (MHA-6-2-CoA);
said second gateway (FNGW) and said first gateway (HNGW) are adapted for setting up (S 4e.5) a first protocol second tunnel (TUN2) between them;
said first protocol second tunnel (TUN2) is adapted for having said second protocol second network first terminal foreign address (MHA-6-2-CoA) transmitted (S 4e.6) through it;
said first gateway (HNGW) is adapted for receiving (S 4e.7) said second protocol second network first terminal foreign address (MHA-6-2-CoA) through said first protocol second tunnel (TUN2);
said second protocol second network first terminal foreign address (MHA-6-2-CoA) is transmitted (S 4e.8) through said second network (GV6-1) to a home agent (HA) in said second network (GV6-1).

22. Computer program having instructions adapted to carry out the registration method of claim 21 when executed on the first terminal (MH).

23. A registration method carried out by a second gateway (FNGW) operating in a communication system (SYS),
said communication system (SYS) including
- a first network (IN) implemented using a first protocol, said first network (IN) being connected to a second network (GV6-1) implemented using a second protocol, and a fourth network (PV4) implemented using said first protocol through respectively a first and the second gateway (HNGW, FNGW),
- and a first terminal (MH) of said second network (GV6-1) having roamed to said fourth network (PV4) ;
said first and second protocols being different;
said first and fourth networks (IN, PV4) using said first protocol for addressing in said first and fourth networks (IN, PV4);
said second network (GV6-1) using said second protocol for addressing in said second network (GV6-1);
said first, second and fourth networks (IN, GV6-1, PV4) respectively comprising first, second and fourth addresses;
said second addresses being second protocol second network addresses;
said first and fourth addresses being respectively first protocol first network addresses and first protocol fourth network addresses selected from different address ranges of said first protocol;
said first terminal (MH) having already generated (S 4e.1) a second protocol second network first terminal foreign address (MHA-6-2-CoA) of said first terminal (MH) from a first protocol fourth network first terminal address (MHA-P4-4);
wherein said registration method comprises the following steps:
b) setting up (S 4e.2) a first protocol first tunnel (TUN1) between said first terminal (MH) and said second gateway (FNGW);
d) receiving (S 4e.4) said second protocol second network first terminal foreign address (MHA-6-2-CoA) through said first protocol first tunnel (TUN1) from said first terminal (MH) ;
e) setting up (S 4e.5) a first protocol second tunnel (TUN2) between said second gateway (FNGW) and said first gateway (HNGW);
f) transmitting (S 4e.6) said second protocol second network first terminal foreign address (MHA-6-2-CoA) through said first protocol second tunnel (TUN2) ;
said communication system (SYS) being such that:
said first gateway (HNGW) is adapted to receive (S 4e.7) said second protocol second network first terminal foreign address (MHA-6-2-CoA);
said second protocol second network first terminal foreign address (MHA-6-2-CoA) is transmitted through
said second network (GV6-1) to a home agent (HA) in said second network (GV6-1).

24. Computer program having instructions adapted to carry out the registration method of claim 23 when executed on the second gateway (FNGW).

25. A communication method carried out by a first terminal (MH) operating in a communication system (SYS),
said communication system (SYS) including a first network (IN) implemented using a first protocol,
said first network (IN) being connected
to a second network (GV6-1) implemented using a second protocol, to a fourth network (PV4) implemented using said first protocol, and to a third network (GV6-2) implemented using said second protocol through a respective first, second and third gateway (HNGW, FNGW, CNGW),
said communication system (SYS) being adapted for providing communication information (PAY)
from the first terminal (MH) of said second network (GV6-1) having roamed to said fourth network (PV4)
to a second terminal (CH) of said third network (GV6-2);
said first and second protocols being different;
said first and fourth networks (IN, PV4) using said first protocol for addressing in said first and fourth networks (IN, PV4);
said second and third networks (GV6-1, GV6-2) using said second protocol for addressing in said second and third networks (GV6-1, GV6-2);
said first, second, third and fourth networks (IN, GV6-1, GV6-2, PV4) respectively comprising first, second, third and fourth addresses;
said second and third addresses being respectively second protocol second network addresses and second protocol third network addresses;
said first and fourth addresses being respectively first protocol first network addresses and first protocol fourth network addresses selected from different address ranges of said first protocol;
wherein said communication method comprises the following steps:
a) setting up (S 4f.1) a first protocol first tunnel (TUN1) between said first terminal (MH) and said second gateway (FNGW);
b) transmitting (S 4f.2) said communication information (PAY) through said first protocol first tunnel (TUN1);
said communication system (SYS) being such that:
said second gateway (FNGW) is adapted to receive (S 4f.6) said communication information (PAY);
a first protocol second tunnel (TUN2) is set up (S 4f.4) between said second gateway (FNGW) and said first gateway (HNGW);
said communication information (PAY) is transmitted (S 4f.5) through said first protocol second tunnel (TUN2);
said first gateway (HNGW) is adapted to receive (S 4f.6) said communication information (PAY);
a first protocol third tunnel (TUN3) is set up (S 4f.7) between said first gateway (HNGW) and said third gateway (CNGW);
said communication information (PAY) is transmitted (S 4f.8) through said first protocol third tunnel (TUN3);
said third gateway (CNGW) is adapted to receive (S 4f.9) said communication information through said first protocol third tunnel (TUN3);
said communication information (PAY) is transmitted (S 4 f.10) through said third network (GV6-2) to said second terminal (CH).

26. Computer program having instructions adapted to carry out the communication method of claim 25 when executed on the first terminal (MH).

27. A communication method carried out by a second gateway (FNGW) operating in a communication system (SYS),
said communication system (SYS) including a first network (IN) implemented using a first protocol,
said first network (IN) being connected
to a second network (GV6-1) implemented using a' second protocol, to a fourth network (PV4) implemented using said first protocol, and to a third network (GV6-2) implemented using said second protocol through respectively a first gateway (HNGW), the second gateway (FNGW) and a third gateway (CNGW),
said communication system (SYS) being adapted for providing communication information (PAY)
from a first terminal (MH) of said second network (GV6-1) having roamed to said fourth network (PV4)
to a second terminal (CH) of said third network (GV6-2) ;
said first and second protocols being different;
said first and fourth networks (IN, PV4) using said first protocol for addressing in said first and fourth networks (IN, PV4);
said second and third networks (GV6-1, GV6-2) using said second protocol for addressing in said second and third networks (GV6-1, GV6-2);
said first, second, third and fourth networks (IN, GV6-1, GV6-2, PV4) respectively comprising first, second, third and fourth addresses;
said second and third addresses being respectively second protocol second network addresses and second protocol third network addresses;
said first and fourth addresses being respectively first protocol first network addresses and first protocol fourth network addresses selected from different address ranges of said first protocol;
wherein said communication method comprises the following steps:
a) setting up (S 4f.1) a first protocol first tunnel (TUN1) between said first terminal (MH) and said second gateway (FNGW);
c) receiving (S 4f.3) said communication information (PAY) in said second gateway (FNGW) from said first terminal (MH);
d) setting up (S 4f.4) a first protocol second tunnel (TUN2) between said second gateway (FNGW) and said first gateway (HNGW);
e) transmitting (S 4f.5) said communication information (PAY) through said first protocol second tunnel (TUN2);
wherein the communication system (SYS) is such that:
said first gateway (HNGW) is adapted to receive (S 4f.6) said communication information (PAY);
a first protocol third tunnel (TUN3) is set up (S 4f.7) between said first gateway (HNGW) and said third gateway (CNGW);
said communication information (PAY) is transmitted (S 4f.8) through said first protocol third tunnel (TUN3);
said third gateway (CNGW) is adapted to receive (S 4f.9) said communication information (PAY) ;
said communication information (PAY) is transmitted (S 4f.10) through said third network (GV6-2) to said second terminal (CH).

28. Computer program having instructions adapted to carry out the communication method of claim 27 when executed on the second gateway (FNGW).

## Patentansprüche

1. Ein Registrierungsverfahren, das in einem Kommunikationssystem (SYS) ausgeführt wird, das ein Erstnetzwerk (IN) umfasst, das implementiert ist unter Verwendung eines Erstprotokolls (IPv4), wobei das Erstnetzwerk (IN) mit einem Zweitnetzwerk (GV6-1), das implementiert ist unter Verwendung eines Zweitprotokolls (IPv6), und einem Viertnetzwerk (PV4), das implementiert ist unter Verwendung des Erstprotokolls (IPv4), verbunden ist über einen entsprechenden Erst- und Zweitgateway (HNGW, FNGW),
wobei das Registrierungsverfahren ein Verfahren ist zum Registrieren in dem Zweitnetzwerk (GV6-1) eines Erstendgeräts (MH) des Zweitnetzwerks (GV6-1), das sich zu dem Zweitnetzwerk (PV4) bewegt hat;
wobei sich das erste und das zweite Protokoll (IPv4, IPv6) voneinander unterscheiden;
wobei das Erst- und Viertnetzwerk (IN, PV4) das Erstprotokoll (IPv4) zum Adressieren in dem Erst-und Viertnetzwerk (IN, PV4) nutzen;
wobei das Zweitnetzwerk (GV6-1) das Zweitprotokoll (IPv6) zum Adressieren in dem Zweitnetzwerk (GV6-1) nutzt;
wobei das Erst-, Zweit- und Viertnetzwerk (IN, GV6-1, PV4) entsprechend Erst-, Zweit- und Viertadressen umfassen;
wobei die Zweitadressen Zweitprotokoll-Zweitnetzwerkadressen sind;
wobei die Erst- und Viertadressen entsprechend Erstprokoll-Erstnetzwerkadressen und Erstprotokoll-Viertnetzwerkadressen sind, die aus unterschiedlichen Adressenbereichen des Erstprotokolls ausgewählt werden;
wobei das Registrierungsverfahren folgende Schritte umfasst:
a) Erzeugen (S 4e.1), in dem Erstendgerät (MH), einer Zweitprotokoll-Zweitnetzwerk-Erstendgeräte-Fremdadresse (MHA-6-2-CoA) des Erstendgeräts (MH) aus der Erstprotokoll-Viertnetzwerk-Erstendgeräteadresse (MHA-P4-4);
b) Einstellen (S 4e.2) eines Erstprotokoll-Ersttunnels (TUN1) zwischen dem Erstendgerät (MH) und dem Zweitgateway (FNGW);
c) Übertragen (S 4e.3) der Zweitprotokoll-Zweitnetzwerk-Erstendgerät-Fremdadresse (MHA-6-2-CoA) über den Erstprotokoll-Ersttunnel (TUN1);
d) Empfangen (S 4e.4) der Zeitprotokoll-Zweitnetzwerk-Erstendgerät-Fremdadresse (MHA-6-2-CoA) in dem Zweitgateway (FNGW);
e) Einstellen (S 4e.5) eines Erstprotokoll-Zweittunnels (TUN2) zwischen dem Zweitgateway (FNGW) und dem Erstgateway (HNGW);
f) Übertragen (S 4e.6) der Zweitprotokoll-Zweitnetzwerk-Erstendgerät-Fremdadresse (MHA-6-2-CoA) über den Erstprotokoll-Zweittunnel (TUN2);
g) Empfangen (S 4e.7) der Zweitprotokoll-Zweitnetzwerk-Erstendgerät-Fremdadresse (MHA-6-2-CoA) in dem Erstgateway (HNGW);
h) Übertragen (S 4e.8) der Zweitprotokoll-Zweitnetzwerk-Erstendgerät-Fremdadresse (MHA-6-2-CoA) über das Zweitnetzwerk (GV6-1) zu einem Heimatagenten (HA) in dem Zweitnetzwerk (GV6-1) .

2. Ein Registrierungsverfahren nach Anspruch 1, wobei
vor Schritt a) (S 4e.1) die Erstprotokoll-Viertnetzwerk-Erstendgeräteadresse (MHA-P4-4) von einer Erstprotokolladressenzuteilungseinheit dem Erstendgerät (MH) zugeteilt wird.

3. Ein Registrierungsverfahren nach einem der Ansprüche 1 oder 2, wobei
der Schritt b) (S 4e.2) Kapseln von zumindest der Zweitprotokoll-Zweitnetzwerk-Erstendgerät-Fremdadresse (MHA-6-2-CoA) mit einem ersten Identifizierungsheader vom Transporttyp umfasst, der zumindest Erstprotokoll-Viertnetzwerk spezifische Transporttypinformation (MHT-P4-4) und einen Erstprotokoll-Viertnetzwerksheader umfasst, der zumindest die Erstprotokoll-Viertnetzwerk-Erstendgeräteadresse (MHA-P4-4) umfasst.

4. Ein Registrierungsverfahren nach einem der Ansprüche 1 bis 3, wobei der Schritt e) (S 4e.5) Ändern des ersten Identifizierungsheaders vom Transporttyp zu einem zweiten Identifizierungsheader vom Transporttyp, der zumindest Erstprotokoll-Erstnetzwerk spezifische Transporttypinformation (MHT-G4-1) umfasst, und Ändern des Erstprotokoll-Viertnetzwerksheaders zu einem Erstprotokoll-Erstnetzwerksheader umfasst, der zumindest eine Erstprotokoll-Erstnetzwerk-Zweitgatewayadresse (FNGWA-G4-1) umfasst.

5. Ein Registrierungsverfahren nach einem der Ansprüche 1 bis 4, wobei
der Schritt g) (S 4e.7) Entkapseln der gekapselten Zweitprotokoll-Zweitnetzwerk-Erstendgerät-Fremdadresse (MHA-6-2-CoA) von dem ZweitiIdentifizierungsheader vom Transporttyp und dem Erstprotokoll-Viertnetzwerksheader umfasst.

6. Ein Kommunikationsverfahren, das in einem Kommunikationssystem (SYS) ausgeführt wird, das ein Erstnetzwerk (IN) umfasst, das implementiert ist unter Verwendung eines Erstprotokolls (IPv4), wobei das Erstnetzwerk (IN) mit einem Zweitnetzwerk (GV6-1), das implementiert ist unter Verwendung eines Zweitprotokolls (IPv6), mit einem Viertnetzwerk (PV4), das implementiert ist unter Verwendung des Erstprotokolls (IPv4), und mit einem Drittnetzwerk (GV6-2), das implementiert ist unter Verwendung des Zweitprotokolls (IPv6), über einen entsprechenden Erst-, Zweit- und Drittgateway (HNGW, FNGW, CNGW) verbunden ist,
wobei das Kommunikationsverfahren ein Verfahren ist zum Bereitstellen von Kommunikationsinformation (PAY) eines Erstendgeräts (MH) des Zweitnetzwerks (GV6-1), das sich in das Viertnetzwerk (PV4) bewegt hat, für ein Zweitendgerät (CH) des Drittnetzwerks (GV6-2);
wobei sich das Erst- und das Zweitprotokoll (IPv4, IPv6) voneinander unterscheiden;
wobei das Erst- und Viertnetzwerk (IN, PV4) das erste Protokoll (IPv4) zum Adressieren in dem Erst-und Viertnetzwerk (IN, PV4) nutzen;
wobei das Zweit- und Drittnetzwerk (GV6-1, GV6-2) das Zweitprotokoll (IPv6) zum Adressieren in dem Zweit- und Drittnetzwerk (GV6-1, GV6-2) nutzen;
wobei das Erst-, Zweit-, Dritt- und Viertnetzwerk (IN, GV6-1, GV6-2, PV4) entsprechend Erst-, Zweit-, Dritt- und Viertadressen umfassen;
wobei die Zweit- und Drittadressen entsprechend Zweitprotokoll-Zweitnetzwerkadressen und Zweitprotokoll-Drittnetzwerkadressen sind;
wobei die Erst- und Viertadresse entsprechend Erstprotokoll-Erstnetzwerkadressen und Erstprotokoll-Viertnetzwerkadressen sind, die aus unterschiedlichen Adressenbereichen des Erstprotokolls ausgewählt werden;
wobei das Kommunikationsverfahren folgende Schritte umfasst:
a) Einstellen (S 4f.1) eines Erstprotokoll-Ersttunnels (TUN1) zwischen dem Erstendgerät (MH) und dem Zweitgateway (FNGW);
b) Übertragen (S 4f.2) der Kommunikationsinformation (PAY) über den Erstprotokoll-Ersttunnel (TUN1);
c) Empfangen (S 4f.3) der Kommunikationsinformation (PAY) in dem Zweitgateway (FNGW);
d) Einstellen (S 4f.4) eines Erstprotokoll-Zweittunnels (TUN2) zwischen dem Zweitgateway (FNGW) und dem Erstgateway (HNGW);
e) Übertragen (S 4f.5) der Kommunikationsinformation (PAY) über den Erstprotokoll-Zweittunnel (TUN2);
f) Empfangen (S 4f.6) der Kommunikationsinformation (PAY) in dem Erstgateway (HNGW);
g) Einstellen (S 4f.7) eines Erstprotokoll-Dritttunnels (TUN3) zwischen dem Erstgateway (HNGW) und dem Drittgateway (CNGW);
h) Übertragen (S 4f.8) der Kommunikationsinformation (PAY) über den Erstprotokoll-Dritttunnel (TUN3);
i) Empfangen (S 4f.9) der Kommunikationsinformation (PAY) in dem Drittgateway (CNGW);
j) Übertragen (S 4f.10) der Kommunikationsinformation (PAY) über das Drittnetzwerk (GV6-2) zu dem Zweitendgerät (CH).

7. Ein Kommunikationsverfahren nach Anspruch 6, wobei
vor Schritt a) (S 4f.1) eine Zweitprotokoll-Drittnetzwerk-Zweitendgeräteadresse (CHA-6-3) von einer Zweitprotokolladressenzuteilungseinheit dem Erstendgerät (MH) zugeteilt wird.

8. Ein Kommunikationsverfahren, das in einem Kommunikationssystem (SYS) ausgeführt wird, das ein Erstnetzwerk (IN) umfasst, das implementiert ist unter Verwendung eines Erstprotokolls (IPv4), wobei das Erstnetzwerk (IN) mit einem Zweitnetzwerk (GV6-1), das implementiert ist unter Verwendung eines Zweitprotokolls (IPv6), mit einem Viertnetzwerk (PV4), das implementiert ist unter Verwendung des Erstprotokolls (IPv4), und mit einem Drittnetzwerk (GV6-2), das implementiert ist unter Verwendung des Zweitprotokolls (IPv6), über einen entsprechenden Erst-, Zweit- und Drittgateway (HNGW, FNGW, CNGW) verbunden ist,
wobei das Kommunikationsverfahren ein Verfahren ist zum Bereitstellen von Kommunikationsinformation (PAY) eines Zweitendgeräts (CH) des Drittnetzwerks (GV6-2) für ein Erstendgerät (MH) des Zweitnetzwerks (GV6-1), das sich in das Viertnetzwerk (PV4) bewegt hat;
wobei sich das Erst- und das Zweitprotokoll (IPv4, IPv6) voneinander unterscheiden;
wobei das Erst- und Viertnetzwerk (IN, PV4) das Erstprotokoll (IPv4) zum Adressieren in dem Erst-und Viertnetzwerk (IN, PV4) nutzen;
wobei das Zweit- und Drittnetzwerk (GV6-1, GV6-2) das Zweitprotokoll (IPv6) zum Adressieren in dem Zweit- und Drittnetzwerk (GV6-1, GV6-2) nutzen;
wobei das Erst-, Zweit-, Dritt- und Viertnetzwerk (IN, GV6-1, GV6-2, PV4) entsprechend Erst-, Zweit-, Dritt- und Viertadressen umfassen;
wobei die Zweit- und Drittadressen entsprechend Zweitprotokoll-Zweitnetzwerkadressen und Zweitprotokoll-Drittnetzwerkadressen sind;
wobei die Erst- und Viertadresse entsprechend Erstprotokoll-Erstnetzwerkadressen und Erstprotokoll-Viertnetzwerkadressen sind, die aus unterschiedlichen Adressenbereichen des Erstprotokolls ausgewählt werden;
wobei das Kommunikationsverfahren folgende Schritte umfasst:
a) Übertragen (S 4g.1) der Kommunikationsinformation (PAY) von dem Zweitendgerät (CH) über das Drittnetzwerk (GV6-2) zu dem Drittgateway (CNGW);
b) Einstellen (S 4g.2) eines Erstprotokoll-Ersttunnels (TUN4) zwischen dem Drittgateway (CNGW) und dem Erstgateway (HNGW);
c) Übertragen (S 4g.3) der Kommunikationsinformation (PAY) über den Erstprotokoll-Ersttunnel (TUN4);
d) Empfangen (S 4g.4) der Kommunikationsinformation (PAY) in dem Erstgateway (HNGW);
e) Einstellen (S 4g.5) eines Erstprotokoll-Zweittunnels (TUN5) zwischen dem Erstgateway (HNGW) und dem Zweitgateway (FNGW);
f) Übertragen (S 4g.6) der Kommunikationsinformation (PAY) über den Erstprotokoll-Zweittunnel (TUN5) ;
g) Empfangen (S 4g.7) der Kommunikationsinformation (PAY) in dem Zweitgateway (FNGW);
h) Einstellen (S 4g.8) eines Erstprotokoll-Dritttunnels (TUN6) zwischen dem Zweitgateway (FNGW) und dem Erstendgerät (MH);
i) Übertragen (S 4g.9) der Kommunikationsinformation (PAY) über den Erstprotokoll-Dritttunnel (TUN6);
j) Empfangen (S 4g.10) der Kommunikationsinformation (PAY) in dem Erstendgerät (MH).

9. Ein Kommunikationsverfahren nach Anspruch 8, wobei
vor Schritt a) (S 4g.1) eine Zweitprotokoll-Zweitnetzwerk-Erstendgerät-Ursprungsadresse (MHA-6-2-ORIG) von einer Zweitprotokolladressenzuteilungseinheit dem Zweitendgerät (CH) zugeteilt wird.

10. Ein Kommunikationsverfahren nach einem der Ansprüche 8 oder 9, wobei der Schritt b) (S 4g.2) Kapseln von zumindest der der Kommunikationsinformation (PAY) mit einem Erstprotokoll-Erstnetzwerk-Erstheader umfasst, der zumindest eine Erstprotokoll-Erstnetzwerk-Erstgatewayadresse (HNGWA-G4-1) umfasst.

11. Ein Kommunikationsverfahren nach einem der Ansprüche 8 bis 10, wobei
zwischen dem Schritt d) (S 4g.4) und dem Schritt e) (S 4g.5) :
a) die Kommunikationsinformation (PAY) entkapselt wird von zumindest dem Erstprotokoll-Erstnetzwerk-Erstheader; und
b) die entkapselte Kommunikationsinformation (PAY) über das Zweitnetzwerk (GV6-1) zu einem Heimatagenten (HA) des Zweitnetzwerkes (GV6-1) übertragen wird.

12. Ein Mobilkommunikationsendgerät (MH), das konfiguriert ist zum Bereitstellen von Kommunikation zwischen dem Mobilkommunikationsendgerät (MH) und einem anderen Endgerät (CH), wobei
das Mobilkommunikationsendgerät (MH) konfiguriert ist, um in einem Zweitnetzwerk (GV6-1) zu operieren, das unter Verwendung eines Zweitprotokolls (IPv6) implementiert ist,
wobei das andere Endgerät (CH) in einem Drittnetzwerk (GV6-2) operiert, das implementiert ist unter Verwendung des Zweitprotokolls (IPv6),
wobei das Mobilkommunikationsendgerät **dadurch gekennzeichnet ist, dass**:
1) das Mobilkommunikationsendgerät ferner so konfiguriert ist, dass
die Kommunikation bereitgestellt wird über Viert- und Erstnetzwerke (PV4; IN), die implementiert sind unter Verwendung eines Erstprotokolls (IPv4), das sich von dem Zweitprotokoll (IPv6) unterscheidet,
die Zweit-, Viert- und Drittnetzwerke (GV6-1, PV4, GV6-2) mit dem Erstnetzwerk (IN) verbunden sind über einen entsprechenden Erst-, Zweit-und Drittgateway (HNGW, FNGW, CNGW),
das Mobilkommunikationsendgerät (MH) ferner konfiguriert ist, um sich zu dem Viertnetzwerk (PV4) zu bewegen, wobei das Zweitnetzwerk (GV6-1) einen Heimatagenten (HA) umfasst;
die Erst- und Viertnetzwerke (IN, PV4) das Erstprotokoll (IPv4) verwenden zum Adressieren in den Erst- und Viertnetzwerken (IN, PV4);
die Zweit- und Drittnetzwerke (GV6-1, GV6-2) das Zweitprotokoll (IPv6) verwenden zum Adressieren in den Zweit- und Drittnetzwerken (GV6-1, GV6-2);
die Erst-, Zweit-, Dritt- und Viertnetzwerke (IN, GV6-1, GV6-2, PV4) entsprechend Erst-, Zweit-, Dritt- und Viertadressen umfassen;
die Zweit- und Drittadressen entsprechend Zweitprotokoll-Zweitnetzwerkadressen und Zweitprotokoll-Drittnetzwerkadressen sind;
die Erst- und Viertadressen entsprechend Erstprotokoll-Erstnetzwerkadressen und Erstprotokoll-Viertnetzwerkadressen sind, die aus unterschiedlichen Adressenbereichen des Erstprotokolls ausgewählt werden, und
das Mobilkommunikationsendgerät **dadurch gekennzeichnet ist, dass**:
a) das Mobilkommunikationsendgerät (MH) betriebsfähig ist zum Kommunizieren unter Verwendung des Erstprotokolls (IPv4) und des Zweitprotokolls (IPv6);
b) das Mobilkommunikationsendgerät (MH) eine Tunneleinstellungseinheit (TS1) umfasst zum Einstellen eines Erstprotokolltunnels (TUN1) zwischen dem Mobilkommunikationsendgerät (MH) und dem Zweitgateway (FNGW).

13. Ein Mobilkommunikationsendgerät (MH) nach Anspruch 12, ferner umfassend
eine Erzeugungseinheit (GU1) zum Erzeugen einer Zweitprotokoll-Zweitnetzwerk-Mobilkommunikationsendgerät-Fremdadresse (MHA-6-2-CoA).

14. Ein Mobilkommunikationsendgerät (MH) nach Anspruch 12 oder 13, wobei
in der Erzeugungseinheit (GU1) die Erstprotokoll-Viertnetzwerk-Mobilkommunikationendgerätadresse (MHA-P4-4) verwendet wird zum Erzeugen der Zweitprotokoll-Zweitnetzwerk-Mobilkommunikationsendgerät-Fremdadresse (MHA-6-2-CoA) .

15. Ein Mobilkommunikationsendgerät (MH) nach Anspruch 12 bis 14, wobei
die Zweitprotokoll-Zweitnetzwerk-Mobilkommunikationsendgerät-Ursprungsadresse (MHA-6-2-ORIG), die Zweitprotokoll-Zweitnetzwerk-Heimatagentadresse (HAA-6-2) und die Erstprotokoll-Erstnetzwerk-Erstgatewayadresse (HNGWA-G4-1) permanent in einer Speichereinheit (SU1) gespeichert werden.

16. Ein Mobilkommunikationsendgerät (MH) nach Anspruch 12 bis 15, ferner umfassend
eine Kapselungseinheit (EU1) zum Kapseln von zumindest der Zweitprotokoll-Zweitnetzwerk-Mobilkommunikationsendgerät-Fremdadresse (MHA-6-2-CoA) mit einem ersten Identifizierungsheader vom Transporttyp umfasst, der zumindest Erstprotokoll-Viertnetzwerk spezifische Transporttypinformation (MHT-P4-4) und einen Erstprotokoll-Viertnetzwerksheader umfasst, der zumindest die Erstprotokoll-Viertnetzwerk-Mobilkommunikationsendgeräteadresse (MHA-P4-4) umfasst.

17. Ein Mobilkommunikationsendgerät (MH) nach Anspruch 16, wobei
die Kapselungseinheit (EU1) ferner angepasst ist zum Kapseln von zumindest einer Kommunikationsinformation (PAY) mit einem ersten Identifizierungsheader vom Transporttyp, der zumindest Zweitprotokoll spezifische Transporttypinformation (T-6) umfasst, mit einem Zweitprotokollheader, der zumindest die Zweitprotokoll-Zweitnetzwerk-Mobilkommunikationsendgerät-Ursprungsadresse (MHA-6-2-ORIG) und eine andere Zweitprotokoll-Drittnetzwerk-Endgeräteadresse (CHA-6-3) umfasst, mit einem zweiten Identifizierungsheader vom Transporttyp, der zumindest Erstprotokoll-Viertnetzwerk spezifische Transporttypinformation (MHT-P4-4) umfasst, und mit einem Erstprotokoll-Viertnetzwerk-Header, der zumindest die Erstprotokoll-Viertnetzwerk-Mobilkommunikationsendgerät-Adresse (MHA-P4-4) und eine Erstprotokoll-Erstnetzwerk-Erstgateway-Adresse (HNGWA-G4-1) umfasst.

18. Ein Gateway (HNGW), das ein Erstgateway (HNGW) bildet, konfiguriert zum Operieren
in einem Kommunikationssystem (SYS), das ein erstes Netzwerk (IN) umfasst, das implementiert ist unter Verwendung eines Erstprotokolls (IPv4),
wobei das Erstnetzwerk (IN) mit einem Zweitnetzwerk (GV6-1), das implementiert ist unter Verwendung eines Zweitprotokolls (IPv6), mit einem Viertnetzwerk (PV4), das implementiert ist unter Verwendung des Erstprotokolls (IPv4), und einem Drittnetzwerk (GV6-2) verbunden ist, das implementiert ist unter Verwendung des Zweitprotokolls (IPv6) entsprechend über den Erstgateway (HNGW), eine Zweit- und einen Drittgateway (FNGW, CNGW),
wobei das Erstgateway (HNGW) ferner konfiguriert ist zum Bereitstellen von Kommunikationsinformation (PAY) von einem Zweitendgerät (CH) des Drittnetzwerks (GV6-2) für ein Erstendgerät (MH) des Zweitnetzwerks (GV6-1), das sich in das Viertnetzwerk (PV4) bewegt hat, oder
von dem Erstendgerät (MH) für das Zweitendgerät (CH);
wobei sich das erste und das zweite Protokoll (IPv4, IPv6) voneinander unterscheiden;
wobei das Erst- und Viertnetzwerk (IN, PV4) das Erstprotokoll (IPv4) zum Adressieren in dem Erst-und Viertnetzwerk (IN, PV4) nutzen;
wobei das Zweit- und Drittnetzwerk (GV6-1, GV6-2) das Zweitprotokoll (IPv6) zum Adressieren in dem Zweit- und dem Drittnetzwerk (GV6-1, GV6-2) nutzen;
wobei das Erst-, Zweit-, Dritt- und Viertnetzwerk (IN, GV6-1, GV6-2, PV4) entsprechend Erst-, Zweit-, Dritt- und Viertadressen umfassen;
wobei die Zweit- und Drittadressen entsprechend Zweitprotokoll-Zweitnetzwerkadressen und Zweitprotokoll-Drittnetzwerkadressen sind;
wobei die Erst- und Viertadressen entsprechend Erstprotokoll-Erstnetzwerkadressen und Erstprotokoll-Viertnetzwerkadressen sind, die aus unterschiedlichen Adressenbereichen des Erstprotokolls ausgewählt werden;
wobei
das Erstgateway (HNGW) eine Konvertierungseinheit (CU2) umfasst, die angepasst ist zum Konvertieren zwischen einer Zweitprotokoll-Zweitnetzwerk-Erstendgerät-Fremdadresse (MHA-6-2-CoA) und einem Paar einer Erstprotokoll-Erstnetzwerk-Zweitgateway-Adresse (FNGWA-G4-1) und einer spezifischen Erstprotokoll-Erstnetzwerk-Transporttypinformation (MHT-G4-1) .

19. Ein Gateway (HNGW) nach Anspruch 18, ferner umfassend
eine Ersttunneleinstellungseinheit (TS2-1) zum Einstellen eines Erstprotokolltunnels zwischen dem Gateway (HNGW) und dem Zweitgateway (FNGW), und
eine Zweittunneleinstellungseinheit (TS2-2) zum Einstellen eines anderen Erstprotokolltunnels zwischen dem Gateway (HNGW) und dem Drittgateway (CNGW) .

20. Ein Gateway (HNGW) nach einem der Ansprüche 18 bis 19, wobei die Erstprotokoll-Erstnetzwerk-Zweitgateway-Adresse (FNGWA-G4-1), die spezifische Erstprotokoll-Erstnetzwerk-Transporttypinformation (MHT-G4-1) und die Zweitprotokoll-Zweitnetzwerk-Erstendgerät-Fremdadresse (MHA-6-2-CoA) in einer Abbildungstabelle gespeichert sind, und
wobei in der Abbildungstabelle eine Abbildungskorrelation zwischen der Zweitprotokoll-Zweitnetzwerk-Erstendgerät-Fremdadresse (MHA-6-2-CoA) und einem Paar bestehend aus der Erstprotokoll-Erstnetzwerk-Zweitgateway-Adresse (FNGWA-G4-1) und der spezifischen Erstprotokoll-Erstnetzwerk-Transporttypinformation (MHT-G4-1) gespeichert ist.

21. Ein Registrierungsverfahren, das von einem Erstendgerät (MH) ausgeführt wird, das in einem Kommunikationssystem (SYS) operiert,
wobei das Kommunikationssystem (SYS) folgendes umfasst:
ein Erstnetzwerk (IN), das implementiert ist unter Verwendung eines Erstprotokolls, wobei das Erstnetzwerk (IN) mit einem Zweitnetzwerk (GV6-1), das implementiert ist unter Verwendung eines Zweitprotokolls, und einem Viertnetzwerk (PV4), das implementiert ist unter Verwendung des Erstprotokolls, verbunden ist über einen entsprechenden Erst- und Zweitgateway (HNGW, FNGW),
wobei das Registrierungsverfahren ein Verfahren ist zum Registrieren in dem Zweitnetzwerk (GV6-1) eines Erstendgeräts (MH) des Zweitnetzwerks (GV6-1), das sich zu dem Zweitnetzwerk (PV4) bewegt hat;
wobei sich das erste und das zweite Protokoll voneinander unterscheiden;
wobei das Erst- und Viertnetzwerk (IN, PV4) das Erstprotokoll zum Adressieren in dem Erst- und Viertnetzwerk (IN, PV4) nutzen;
wobei das Zweitnetzwerk (GV6-1) das Zweitprotokoll zum Adressieren in dem Zweitnetzwerk (GV6-1) nutzt;
wobei das Erst-, Zweit- und Viertnetzwerk (IN, GV6-1, PV4) entsprechend Erst-, Zweit- und Viertadressen umfassen;
wobei die Zweitadressen Zweitprotokoll-Zweitnetzwerkadressen sind;
wobei die Erst- und Viertadressen entsprechend Erstprotokoll-Erstnetzwerkadressen und Erstprotokoll-Viertnetzwerkadressen sind, die aus unterschiedlichen Adressenbereichen des Erstprotokolls ausgewählt werden;
wobei das Registrierungsverfahren folgende Schritte umfasst:
a) Erzeugen (S 4e.1), in dem Erstendgerät (MH), einer Zweitprotokoll-Zweitnetzwerk-Erstendgeräte-Fremdadresse (MHA-6-2-CoA) des Erstendgeräts (MH) aus der Erstprotokoll-Viertnetzwerk-Erstendgeräteadresse (MHA-P4-4);
b) Einstellen (S 4e.2) eines Erstprotokoll-Ersttunnels (TUN1) zwischen dem Erstendgerät (MH) und dem Zweitgateway (FNGW);
c) Übertragen (S 4e.3) der Zweitprotokoll-Zweitnetzwerk-Erstendgerät-Fremdadresse (MHA-6-2-CoA) über den Erstprotokoll-Ersttunnel (TUN1) ;
wobei das Kommunikationssystem (SYS) so ausgebildet ist, dass:
das Zweitgateway (FNGW) angepasst ist zum Empfangen (S 4e.4) der Zeitprotokoll-Zweitnetzwerk-Erstendgerät-Fremdadresse (MHA-6-2-CoA) ;
das Zweitgateway (FNGW) und das Erstgateway (HNGW) angepasst sind zum Einstellen (S 4e.5) eines Erstprotokoll-Zweittunnels (TUN2) zwischen diesen;
der der Erstprotokoll-Zweittunnel (TUN2) angepasst ist, dass die Zweitprotokoll-Zweitnetzwerk-Erstendgerät-Fremdadresse (MHA-6-2-CoA) durch diesen übertragen (S 4e.6) wird;
der Erstgateway (HNGW) angepasst ist zum Empfangen (S 4e.7) der Zweitprotokoll-Zweitnetzwerk-Erstendgerät-Fremdadresse (MHA-6-2-CoA) über den Erstprotokoll-Zweittunnel (TUN2);
die Zweitprotokoll-Zweitnetzwerk-Erstendgerät-Fremdadresse (MHA-6-2-CoA) übertragen (S 4e.8) wird über das Zweitnetzwerk (GV6-1) zu einem Heimatagenten (HA) in dem Zweitnetzwerk (GV6-1) .

22. Ein Computerprogramm, das Instruktionen aufweist, die angepasst sind zum Ausführen des Registrierungsverfahrens nach Anspruch 21, wenn dieses auf dem Erstendgerät (MH) ausgeführt wird.

23. Ein Registrierungsverfahren, das von einem Zweitgateway (FNGW) ausgeführt wird, das in einem Kommunikationssystem (SYS) operiert,
wobei das Kommunikationssystem (SYS) folgendes umfasst:
- ein Erstnetzwerk (IN), das implementiert ist unter Verwendung eines Erstprotokolls, wobei das Erstnetzwerk (IN) mit einem Zweitnetzwerk (GV6-1), das implementiert ist unter Verwendung eines Zweitprotokolls, und einem Viertnetzwerk (PV4), das implementiert ist unter Verwendung des Erstprotokolls, verbunden ist über einen entsprechenden Erst- und Zweitgateway (HNGW, FNGW),
- und ein Erstendgerät (MH) des Zweitnetzwerks (GV6-1), das sich in das Viertnetzwerk (PV4) bewegt hat;
wobei sich das erste und das zweite Protokoll voneinander unterscheiden;
wobei das Erst- und Viertnetzwerk (IN, PV4) das Erstprotokoll zum Adressieren in dem Erst- und Viertnetzwerk (IN, PV4) nutzen;
wobei das Zweitnetzwerk (GV6-1) das Zweitprotokoll zum Adressieren in dem Zweitnetzwerk (GV6-1) nutzt;
wobei das Erst-, Zweit- und Viertnetzwerk (IN, GV6-1, PV4) entsprechend Erst-, Zweit- und Viertadressen umfassen;
wobei die Zweitadressen Zweitprotokoll-Zweitnetzwerkadressen sind;
wobei die Erst- und Viertadressen entsprechend Erstprotokoll-Erstnetzwerkadressen und Erstprotokoll-Viertnetzwerkadressen sind, die aus unterschiedlichen Adressenbereichen des Erstprotokolls ausgewählt werden;
wobei das Erstendgerät (MH) bereits eine Zweitprotokoll-Zweitnetzwerk-Erstendgeräte-Fremdadresse (MHA-6-2-CoA) des Erstendgeräts (MH) aus der Erstprotokoll-Viertnetzwerk-Erstendgeräteadresse (MHA-P4-4) erzeugt hat;
wobei das Registrierungsverfahren folgende Schritte umfasst:
b) Einstellen (S 4e.2) eines Erstprotokoll-Ersttunnels (TUN1) zwischen dem Erstendgerät (MH) und dem Zweitgateway (FNGW);
d) Empfangen (S 4e.4) der Zeitprotokoll-Zweitnetzwerk-Erstendgerät-Fremdadresse (MHA-6-2-CoA) über den Erstprotokoll-Ersttunnel (TUN1) von dem Erstendgerät (MH);
e) Einstellen (S 4e.5) eines Erstprotokoll-Zweittunnels (TUN2) zwischen dem Zweitgateway (FNGW) und dem Erstgateway (HNGW);
f) Übertragen (S 4e.6) der Zweitprotokoll-Zweitnetzwerk-Erstendgerät-Fremdadresse (MHA-6-2-CoA) über den Erstprotokoll-Zweittunnel (TUN2);
wobei das Kommunikationssystem (SYS) so ausgebildet ist, dass:
das Erstgateway (HNGW) angepasst ist zum Empfangen (S 4e.7) der Zweitprotokoll-Zweitnetzwerk-Erstendgerät-Fremdadresse (MHA-6-2-CoA);
die Zweitprotokoll-Zweitnetzwerk-Erstendgerät-Fremdadresse (MHA-6-2-CoA) über das Zweitnetzwerk (GV6-1) zu einem Heimatagenten (HA) in dem Zweitnetzwerk (GV6-1) übertragen wird.

24. Ein Computerprogramm, das Instruktionen aufweist, die angepasst sind zum Ausführen des Registrierungsverfahrens nach Anspruch 23, wenn dieses auf dem Zweitgateway (FNGW) ausgeführt wird.

25. Ein Kommunikationsverfahren, das durch ein Erstendgerät (MH) ausgeführt wird, das in einem Kommunikationssystem (SYS) operiert,
wobei das Kommunikationssystem (SYS) ein Erstnetzwerk (IN) umfasst, das unter Verwendung eines Erstprotokolls implementiert ist,
wobei das Erstnetzwerk (IN) verbunden ist mit
einem Zweitnetzwerk (GV6-1), das implementiert ist unter Verwendung eines Zweitprotokolls, einem Viertnetzwerk (PV4), das implementiert ist unter Verwendung des Erstprotokolls, und mit einem Drittnetzwerk (GV6-2), das implementiert ist unter Verwendung des Zweitprotokolls, über ein entsprechendes Erst-Zweit- und Drittgateway (HNGW, FNGW, CNGW),
wobei das Kommunikationssystem (SYS) angepasst ist zum Bereitstellen von Kommunikationsinformation (PAY)
von dem Erstendgerät (MH) des Zweitnetzwerks (GV6-1), das sich in das Viertnetzwerk (PV4) bewegt hat, für ein Zweitendgerät (CH) des Drittnetzwerks (GV6-2);
wobei sich das erste und das zweite Protokoll voneinander unterscheiden;
wobei das Erst- und Viertnetzwerk (IN, PV4) das Erstprotokoll zum Adressieren in dem Erst- und Viertnetzwerk (IN, PV4) nutzen;
wobei das Zweit- und Drittnetzwerk (GV6-1, GV6-2) das Zweitprotokoll zum Adressieren in dem Zweit-und Drittnetzwerk (GV6-1, GV6-2) nutzen;
wobei das Erst-, Zweit-, Dritt und Viertnetzwerk (IN, GV6-1, GV6-2, PV4) entsprechend Erst-, Zweit-, Dritt- und Viertadressen umfassen;
wobei die Zweit- und Drittadressen entsprechend Zweitprotokoll-Zweitnetzwerkadressen und Zweitprotokoll-Drittnetzwerkadressen sind;
wobei die Erst- und Viertadressen entsprechend Erstprotokoll-Erstnetzwerkadressen und Erstprotokoll-Viertnetzwerkadressen sind, die aus unterschiedlichen Adressenbereichen des Erstprotokolls ausgewählt werden;
wobei das Kommunikationsverfahren folgende Schritte umfasst:
a) Einstellen (S 4f.1) eines Erstprotokoll-Ersttunnels (TUN1) zwischen dem Erstendgerät (MH) und dem Zweitgateway (FNGW);
b) Übertragen (S 4f.2) der Kommunikationsinformation (PAY) über den Erstprotokoll-Ersttunnel (TUN1);
wobei das Kommunikationssystem (SYS) so ausgebildet ist, dass:
das Zweitgateway (FNGW) angepasst ist zum Empfangen (S 4f.6) der Kommunikationsinformation (PAY);
ein Erstprotokoll-Zweittunnel (TUN2) zwischen dem Zweitgateway (FNGW) und dem Erstgateway (HNGW) eingestellt (S 4f.4) wird;
die Kommunikationsinformation (PAY) über den Erstprotokoll-Zweittunnel (TUN2) übertragen (S 4f.5) wird;
das Erstgateway (HNGW) angepasst ist zum Empfangen (S 4f.6) der Kommunikationsinformation (PAY);
ein Erstprotokoll-Dritttunnel (TUN3) zwischen dem Erstgateway (HNGW) und dem Drittgateway (CNGW) eingestellt (S 4f.7) wird;
die Kommunikationsinformation (PAY) über den Erstprotokoll-Dritttunnel (TUN3) übertragen (S 4f.8) wird;
der Drittgateway (CNGW) angepasst ist zum Empfangen (S 4f.9) der Kommunikationsinformation über den Erstprotokoll-Dritttunnel (TUN3);
die Kommunikationsinformation (PAY) über das Drittnetzwerk (GV6-2) zu dem Zweitendgerät (CH) übertragen (S 4f.10) wird.

26. Ein Computerprogramm, das Instruktionen aufweist, die angepasst sind zum Ausführen des Kommunikationsverfahrens nach Anspruch 25, wenn dieses auf dem Erstendgerät (MH) ausgeführt wird.

27. Ein Kommunikationsverfahren, das durch ein Zweitgateway (FNGW) ausgeführt wird, das in einem Kommunikationssystem (SYS) operiert,
wobei das Kommunikationssystem (SYS) ein Erstnetzwerk (IN) umfasst, das unter Verwendung eines Erstprotokolls implementiert ist,
wobei das Erstnetzwerk (IN) verbunden ist mit
einem Zweitnetzwerk (GV6-1), das implementiert ist unter Verwendung eines Zweitprotokolls, einem Viertnetzwerk (PV4), das implementiert ist unter Verwendung des Erstprotokolls, und mit einem Drittnetzwerk (GV6-2), das implementiert ist unter Verwendung des Zweitprotokolls, entsprechend über ein Erstgateway (HNGW), das Zweitgateway (FNGW) und ein Drittgateway (CNGW),
wobei das Kommunikationssystem (SYS) angepasst ist zum Bereitstellen von Kommunikationsinformation (PAY)
von dem Erstendgerät (MH) des Zweitnetzwerks (GV6-1), das sich in das Viertnetzwerk (PV4) bewegt hat,
für ein Zweitendgerät (CH) des Drittnetzwerks (GV6-2);
wobei sich das erste und das zweite Protokoll voneinander unterscheiden;
wobei das Erst- und Viertnetzwerk (IN, PV4) das Erstprotokoll zum Adressieren in dem Erst- und Viertnetzwerk (IN, PV4) nutzen;
wobei das Zweit- und Drittnetzwerk (GV6-1, GV6-2) das Zweitprotokoll zum Adressieren in dem Zweit-und Drittnetzwerk (GV6-1, GV6-2) nutzen;
wobei das Erst-, Zweit-, Dritt und Viertnetzwerk (IN, GV6-1, GV6-2, PV4) entsprechend Erst-, Zweit-, Dritt- und Viertadressen umfassen;
wobei die Zweit- und Drittadressen entsprechend Zweitprotokoll-Zweitnetzwerkadressen und Zweitprotokoll-Drittnetzwerkadressen sind;
wobei die Erst- und Viertadressen entsprechend Erstprotokoll-Erstnetzwerkadressen und Erstprotokoll-Viertnetzwerkadressen sind, die aus unterschiedlichen Adressenbereichen des Erstprotokolls ausgewählt werden;
wobei das Kommunikationsverfahren folgende Schritte umfasst:
a) Einstellen (S 4f.1) eines Erstprotokoll-Ersttunnels (TUN1) zwischen dem Erstendgerät (MH) und dem Zweitgateway (FNGW);
c) Empfangen (S 4f.3) der Kommunikationsinformation (PAY) in dem Zweitgateway (FNGW) von dem Erstendgerät (MH);
d) Einstellen (S 4f.4) eines Erstprotokoll-Zweittunnels (TUN2) zwischen dem Zweitgateway (FNGW) und dem Erstgateway (HNGW);
e) Übertragen (S 4f.5) der Kommunikationsinformation (PAY) über den Erstprotokoll-Zweittunnel (TUN2);
wobei das Kommunikationssystem (SYS) so ausgebildet ist, dass:
das Erstgateway (HNGW) angepasst ist zum Empfangen (S 4f.6) der Kommunikationsinformation (PAY);
ein Erstprotokoll-Dritttunnel (TUN3) zwischen dem Erstgateway (HNGW) und dem Drittgateway (CNGW) eingestellt (S 4f.7) wird;
die Kommunikationsinformation (PAY) über den Erstprotokoll-Dritttunnel (TUN3) übertragen (S 4f.8) wird;
das Drittgateway (CNGW) angepasst ist zum Empfangen (S 4f.9 der Kommunikationsinformation (PAY);
die Kommunikationsinformation (PAY) über das Drittnetzwerk (GV6-2) zu dem Zweitendgerät (CH) übertragen (S 4f.10) wird.

28. Ein Computerprogramm, das Instruktionen aufweist, die angepasst sind zum Ausführen des Kommunikationsverfahrens nach Anspruch 27 wenn dieses auf dem Zweitgateway (FNGW) ausgeführt wird.

## Revendications

1. Procédé d'enregistrement exécuté dans un système de communication (SYS) incluant un premier réseau (IN) mis en oeuvre en utilisant un premier protocole (IPv4), ledit premier réseau (IN) étant relié à un deuxième réseau (GV6-1) mis en oeuvre en utilisant un second protocole (IPv6), et un quatrième réseau (PV4) mis en oeuvre en utilisant ledit premier protocole (IPv4) par l'intermédiaire de première et deuxième passerelles respectives (HNGW, FNGW),
le procédé d'enregistrement étant un procédé pour enregistrer dans ledit deuxième réseau (GV6-1) un premier terminal (MH) dudit deuxième réseau (GV6-1) ayant effectué une itinérance vers ledit quatrième réseau (PV4) ;
lesdits premier et second protocoles (IPv4, IPv6) étant différents ;
lesdits premier et quatrième réseaux (IN, PV4) utilisant ledit premier protocole (IPv4) pour effectuer l'adressage dans lesdits premier et quatrième réseaux (IN, PV4) ;
ledit deuxième réseau (GV6-1) utilisant ledit second protocole (IPv6) pour effectuer l'adressage dans ledit deuxième réseau (GV6-1) ;
lesdits premier, deuxième et quatrième réseaux (IN, GV6-1, PV4) comprenant respectivement des premières, deuxièmes et quatrièmes adresses ;
lesdites deuxièmes adresses étant des adresses de deuxième réseau second protocole ;
lesdites premières et quatrièmes adresses étant respectivement des adresses de premier réseau premier protocole et des adresses de quatrième réseau premier protocole sélectionnées à partir de plages d'adresses différentes dudit premier protocole ;
dans lequel ledit procédé d'enregistrement comprend les étapes suivantes consistant à :
a) produire (S 4e.1) dans ledit premier terminal (MH) une adresse étrangère de premier terminal deuxième réseau second protocole (MHA-6-2-CoA) dudit premier terminal (MH) à partir d'une adresse de premier terminal quatrième réseau premier protocole (MHA-P4-4) ;
b) paramétrer (S 4e.2) un premier tunnel de premier protocole (TUN1) entre ledit premier terminal (MH) et ladite deuxième passerelle (FNGW) ;
c) émettre (S 4e.3) ladite adresse étrangère de premier terminal deuxième réseau second protocole (MHA-6-2-CoA) à travers ledit premier tunnel de premier protocole (TUN1) ;
d) recevoir (S 4e.4) ladite adresse étrangère de premier terminal deuxième réseau second protocole (MHA-6-2-CoA) dans ladite deuxième passerelle (FNGW) ;
e) paramétrer (S 4e.5) un deuxième tunnel de premier protocole (TUN2) entre ladite deuxième passerelle (FNGW) et ladite première passerelle (HNGW) ;
f) émettre (S 4e.6) ladite adresse étrangère de premier terminal deuxième réseau second protocole (MHA-6-2-CoA) à travers ledit deuxième tunnel de premier protocole (TUN2) ;
g) recevoir (S 4e.7) ladite adresse étrangère de premier terminal deuxième réseau second protocole (MHA-6-2-CoA) dans ladite première passerelle (HNGW) ;
h) émettre (S 4e.8) ladite adresse étrangère de premier terminal deuxième réseau second protocole (MHA-6-2-CoA) par l'intermédiaire dudit deuxième réseau (GV6-1) vers un agent domestique (HA) dans ledit deuxième réseau (GV6-1).

2. Procédé d'enregistrement selon la revendication 1, dans lequel :
avant ladite étape a) (S 4e.1) ladite adresse de premier terminal quatrième réseau premier protocole (MHA-P4-4) est distribuée à partir d'une unité de distribution d'adresse de premier protocole audit premier terminal (MH).

3. Procédé d'enregistrement selon l'une des revendications 1 ou 2, dans lequel :
ladite étape b) (S 4e.2) inclut l'encapsulation au moins de ladite adresse étrangère de premier terminal deuxième réseau second protocole (MHA-6-2-CoA) avec un premier en-tête identifiant le type de transport incluant au moins des informations spécifiques de type de transport de quatrième réseau premier protocole (MHT-P4-4) et avec un en-tête de quatrième réseau premier protocole incluant au moins ladite adresse de premier terminal quatrième réseau premier protocole (MHA-P4-4).

4. Procédé d'enregistrement selon l'une des revendications 1 à 3, dans lequel :
ladite étape e) (S 4e.5) inclut le changement dudit premier en-tête identifiant le type de transport par un second en-tête identifiant le type de transport incluant au moins des informations spécifiques de type de transport de premier réseau premier protocole (MHT-G4-1), et le changement dudit en-tête de quatrième réseau premier protocole par un en-tête de premier réseau premier protocole incluant au moins une adresse de deuxième passerelle premier réseau premier protocole (FNGWA-G4-1).

5. Procédé d'enregistrement selon l'une des revendications 1 à 4, dans lequel :
ladite étape g) (S 4e.7) inclut la désencapsulation de ladite adresse étrangère encapsulée de premier terminal deuxième réseau second protocole (MHA-6-2-CoA) à partir dudit second en-tête identifiant le type de transport et dudit en-tête de quatrième réseau premier protocole.

6. Procédé de communication exécuté dans un système de communication (SYS) incluant un premier réseau (IN) mis en oeuvre en utilisant un premier protocole (IPv4), ledit premier réseau (IN) étant relié à un deuxième réseau (GV6-1) mis en oeuvre en utilisant un second protocole (IPv6), à un quatrième réseau (PV4) mis en oeuvre en utilisant ledit premier protocole (IPv4), et à un troisième réseau (GV6-2) mis en oeuvre en utilisant ledit second protocole (IPv6) par l'intermédiaire de première, deuxième et troisième passerelles respectives (HNGW, FNGW, CNGW),
le procédé de communication étant un procédé pour fournir des informations de communication (PAY) en provenance d'un premier terminal (MH) dudit deuxième réseau (GV6-1) ayant effectué une itinérance vers ledit quatrième réseau (PV4) à destination d'un second terminal (CH) dudit troisième réseau (GV6-2) ;
lesdits premier et second protocoles (IPv4, IPv6) étant différents ;
lesdits premier et quatrième réseaux (IN, PV4) utilisant ledit premier protocole (IPv4) pour effectuer l'adressage dans lesdits premier et quatrième réseaux (IN, PV4) ;
lesdits deuxième et troisième réseaux (GV6-1, GV6-2) utilisant ledit second protocole (IPv6) pour effectuer l'adressage dans lesdits deuxième et troisième réseaux (GV6-1, GV6-2) ;
lesdits premier, deuxième, troisième et quatrième réseaux (IN, GV6-1, GV6-2, PV4) comprenant respectivement des premières, deuxièmes, troisièmes et quatrièmes adresses ;
lesdites deuxièmes et troisièmes adresses étant respectivement des adresses de deuxième réseau second protocole et des adresses de troisième réseau second protocole ;
lesdites premières et quatrièmes adresses étant respectivement des adresses de premier réseau premier protocole et des adresses de quatrième réseau premier protocole sélectionnées à partir de plages d'adresses différentes dudit premier protocole ;
dans lequel ledit procédé de communication comprend les étapes suivantes consistant à :
a) paramétrer (S 4f.1) un premier tunnel de premier protocole (TUN1) entre ledit premier terminal (MH) et ladite deuxième passerelle (FNGW) ;
b) émettre (S 4f.2) lesdites informations de communication (PAY) à travers ledit premier tunnel de premier protocole (TUN1) ;
c) recevoir (S 4f.3) lesdites informations de communication (PAY) dans ladite deuxième passerelle (FNGW) ;
d) paramétrer (S 4f.4) un deuxième tunnel de premier protocole (TUN2) entre ladite deuxième passerelle (FNGW) et ladite première passerelle (HNGW) ;
e) émettre (S 4f.5) lesdites informations de communication (PAY) à travers ledit deuxième tunnel de premier protocole (TUN2) ;
f) recevoir (S 4f.6) lesdites informations de communication (PAY) dans ladite première passerelle (HNGW) ;
g) paramétrer (S 4f.7) un troisième tunnel de premier protocole (TUN3) entre ladite première passerelle (HNGW) et ladite troisième passerelle (CNGW) ;
h) émettre (S 4f.8) lesdites informations de communication (PAY) à travers ledit troisième tunnel de premier protocole (TUN3) ;
i) recevoir (S 4f.9) lesdites informations de communication (PAY) dans ladite troisième passerelle (CNGW) ;
j) émettre (S 4f.10) lesdites informations de communication (PAY) par l'intermédiaire dudit troisième réseau (GV6-2) vers ledit second terminal (CH).

7. Procédé de communication selon la revendication 6, dans lequel :
avant ladite étape a) (S 4f.1) une adresse de second terminal troisième réseau second protocole (CHA-6-3) est distribuée à partir d'une unité de distribution d'adresse de second protocole audit premier terminal (MH).

8. Procédé de communication exécuté dans un système de communication (SYS) incluant un premier réseau (IN) mis en oeuvre en utilisant un premier protocole (IPv4), ledit premier réseau (IN) étant relié à un deuxième réseau (GV6-1) mis en oeuvre en utilisant un second protocole (IPv6), à un quatrième réseau (PV4) mis en oeuvre en utilisant ledit premier protocole (IPv4), et à un troisième réseau (GV6-2) mis en oeuvre en utilisant ledit second protocole (IPv6) par l'intermédiaire de première, deuxième et troisième passerelles respectives (HNGW, FNGW, CNGW),
le procédé de communication étant un procédé pour fournir des informations de communication (PAY) en provenance d'un second terminal (CH) dudit troisième réseau (GV6-2) à destination d'un premier terminal (MH) dudit deuxième réseau (GV6-1) ayant effectué une itinérance vers ledit quatrième réseau (PV4) ;
lesdits premier et second protocoles (IPv4, IPv6) étant différents ;
lesdits premier et quatrième réseaux (IN, PV4) utilisant ledit premier protocole (IPv4) pour effectuer l'adressage dans lesdits premier et quatrième réseaux (IN, PV4) ;
lesdits deuxième et troisième réseaux (GV6-1, GV6-2) utilisant ledit second protocole (IPv6) pour effectuer l'adressage dans lesdits deuxième et troisième réseaux (GV6-1, GV6-2) ;
lesdits premier, deuxième, troisième et quatrième réseaux (IN, GV6-1, GV6-2, PV4) comprenant respectivement des premières, deuxièmes, troisièmes et quatrièmes adresses ;
lesdites deuxièmes et troisièmes adresses étant respectivement des adresses de deuxième réseau second protocole et des adresses de troisième réseau second protocole ;
lesdites premières et quatrièmes adresses étant respectivement des adresses de premier réseau premier protocole et des adresses de quatrième réseau premier protocole sélectionnées à partir de plages d'adresses différentes dudit premier protocole ;
dans lequel ledit procédé de communication comprend les étapes suivantes consistant à :
a) émettre (S 4g.1) lesdites informations de communication (PAY) en provenance dudit second terminal (CH) par l'intermédiaire dudit troisième réseau (GV6-2) à destination de ladite troisième passerelle (CNGW) ;
b) paramétrer (S 4g.2) un premier tunnel de premier protocole (TUN4) entre ladite troisième passerelle (CNGW) et ladite première passerelle (HNGW) ;
c) émettre (S 4g.3) lesdites informations de communication (PAY) à travers ledit premier tunnel de premier protocole (TUN4) ;
d) recevoir (S 4g.4) lesdites informations de communication (PAY) dans ladite première passerelle (HNGW) ;
e) paramétrer (S 4g.5) un deuxième tunnel de premier protocole (TUN5) entre ladite première passerelle (HNGW) et ladite deuxième passerelle (FNGW) ;
f) émettre (S 4g.6) lesdites informations de communication (PAY) à travers ledit deuxième tunnel de premier protocole (TUN5) ;
g) recevoir (S 4g.7) lesdites informations de communication (PAY) dans ladite deuxième passerelle (FNGW) ;
h) paramétrer (S 4g.8) un troisième tunnel de premier protocole (TUN6) entre ladite deuxième passerelle (FNGW) et ledit premier terminal (MH) ;
i) émettre (S 4g.9) lesdites informations de communication (PAY) à travers ledit troisième tunnel de premier protocole (TUN6) ;
j) recevoir (S 4g.10) lesdites informations de communication (PAY) dans ledit premier terminal (MH).

9. Procédé de communication selon la revendication 8, dans lequel :
avant ladite étape a) (S 4g.1) une adresse d'origine de premier terminal deuxième réseau second protocole (MHA-6-2-ORIG) est distribuée à partir d'une unité de distribution d'adresse de second protocole audit second terminal (CH).

10. Procédé de communication selon la revendication 8 ou 9, dans lequel :
ladite étape b) (S 4g.2) inclut l'encapsulation au moins desdites informations de communication (PAY) avec un premier en-tête de premier réseau premier protocole incluant au moins une adresse de première passerelle premier réseau premier protocole (HNGWA-G4-1).

11. Procédé de communication selon l'une des revendications 8 à 10, dans lequel :
entre ladite étape d) (S 4g.4) et ladite étape e) (S 4g.5) :
a) lesdites informations de communication (PAY) sont désencapsulées au moins à partir du premier en-tête de premier réseau premier protocole ; et
b) lesdites informations de communication désencapsulées (PAY) sont émises par l'intermédiaire dudit deuxième réseau (GV6-1) à un agent domestique (HA) dudit deuxième réseau (GV6-1).

12. Terminal de communication mobile (MH) configuré pour fournir une communication entre ledit terminal de communication mobile (MH) et un autre terminal (CH), dans lequel :
ledit terminal de communication mobile (MH) est configuré pour fonctionner dans un deuxième réseau (GV6-1) mis en oeuvre en utilisant un second protocole (IPv6),
ledit autre terminal (CH) fonctionne dans un troisième réseau (GV6-2) mis en oeuvre en utilisant ledit second protocole (IPv6),
le terminal de communication mobile étant **caractérisé en ce que** :
1) le terminal de communication mobile est en outre configuré de sorte que :
ladite communication est fournie par l'intermédiaire des quatrième et premier réseaux (PV4 ; IN) mis en oeuvre en utilisant un premier protocole (IPv4) différent dudit second protocole (IPv6),
lesdits deuxième, quatrième et troisième réseaux (GV6-1, PV4, GV6-2) sont reliés audit premier réseau (IN) par l'intermédiaire de première, deuxième et troisième passerelles respectives (HNGW, FNGW, CNGW),
ledit terminal de communication mobile (MH) est en outre configuré pour effectuer une itinérance vers ledit quatrième réseau (PV4), ledit deuxième réseau (GV6-1) comprenant un agent domestique (HA) ;
lesdits premier et quatrième réseaux (IN, PV4) utilisent ledit premier protocole (IPv4) pour effectuer l'adressage dans lesdits premier et quatrième réseaux (IN, PV4) ;
lesdits deuxième et troisième réseaux (GV6-1, GV6-2) utilisent ledit deuxième protocole (IPv6) pour effectuer l'adressage dans lesdits deuxième et troisième réseaux (GV6-1, GV6-2) ;
lesdits premier, deuxième, troisième et quatrième réseaux (IN, GV6-1, GV6-2, PV4) comprennent respectivement des premières, deuxièmes, troisièmes et quatrièmes adresses ;
lesdites deuxièmes et troisièmes adresses sont respectivement des adresses de deuxième réseau second protocole et des adresses de troisième réseau second protocole ;
lesdites premières et quatrièmes adresses sont respectivement des adresses de premier réseau premier protocole et des adresses de quatrième réseau premier protocole sélectionnées à partir de plages d'adresses différentes dudit premier protocole, et
2) **en ce que** :
a) ledit terminal de communication mobile (MH) est capable de communiquer en utilisant ledit premier protocole (IPv4) et ledit second protocole (IPv6) ;
b) ledit terminal de communication mobile (MH) comprend une unité de paramétrage de tunnel (TS1) pour paramétrer un tunnel de premier protocole (TUN1) entre ledit terminal de communication mobile (MH) et ladite deuxième passerelle (FNGW).

13. Terminal de communication mobile (MH) selon la revendication 12, comprenant en outre :
une unité de production (GUI) pour générer une adresse étrangère de terminal de communication mobile de deuxième réseau second protocole (MHA-6-2-CoA).

14. Terminal de communication mobile (MH) selon la revendication 12 ou 13, dans lequel :
dans ladite unité de production (GUI) ladite adresse de terminal de communication mobile de quatrième protocole premier réseau (MHA-P4-4) est utilisée pour générer ladite adresse étrangère de terminal de communication mobile de deuxième réseau second protocole (MHA-6-2-CoA).

15. Terminal de communication mobile (MH) selon l'une des revendications 12 à 14, dans lequel :
ladite adresse d'origine de terminal de communication mobile de deuxième réseau second protocole (MHA-6-2-ORIG), ladite adresse d'agent domestique de deuxième réseau second protocole (HAA-6-2), et ladite adresse de première passerelle premier réseau premier protocole (HNGWA-G4-1) sont stockées de manière permanente dans une unité de stockage (SU1).

16. Terminal de communication mobile (MH) selon l'une des revendications 12 à 15, comprenant en outre :
une unité d'encapsulation (EU1) pour encapsuler au moins l'adresse étrangère de terminal de communication mobile de deuxième réseau second protocole (MHA-6-2-CoA) avec un premier en-tête identifiant le type de transport incluant au moins des informations spécifiques de type de transport de quatrième réseau premier protocole (MHT-P4-4) et avec un en-tête de quatrième réseau premier protocole incluant au moins ladite adresse de terminal de communication mobile de quatrième réseau premier protocole (MHA-P4-4).

17. Terminal de communication mobile (MH) selon la revendication 16, dans lequel :
ladite unité d'encapsulation (EU1) est en outre conçue pour encapsuler au moins des informations de communication (PAY) avec un premier en-tête identifiant le type de transport incluant au moins des informations spécifiques de type de transport de second protocole (T-6), avec un en-tête de second protocole comprenant au moins ladite adresse d'origine de terminal de communication mobile de deuxième réseau second protocole (MHA-6-2-ORIG) et une adresse d'autre terminal de troisième réseau second protocole (CHA-6-3), avec un second en-tête identifiant le type de transport incluant au moins des informations spécifiques de type de transport de quatrième réseau premier protocole (MHT-P4-4), et avec un en-tête de quatrième réseau premier protocole incluant au moins ladite adresse de terminal de communication mobile de quatrième réseau premier protocole (MHA-P4-4) et une adresse de première passerelle de premier réseau premier protocole (HNGWA-G4-1).

18. Passerelle (HNGW) formant une première passerelle (HNGW) configurée pour fonctionner :
dans un système de communication (SYS) comprenant un premier réseau (IN) mis en oeuvre en utilisant un premier protocole (IPv4),
ledit premier réseau (IN) étant relié
à un deuxième réseau (GV6-1) mis en oeuvre en utilisant un second protocole (IPv6),
à un quatrième réseau (PV4) mis en oeuvre en utilisant ledit premier protocole (IPv4), et à un troisième réseau (GV6-2) mis en oeuvre en utilisant ledit second protocole (IPv6) respectivement par l'intermédiaire de ladite première passerelle (HNGW), d'une deuxième et d'une troisième passerelle (FNGW, CNGW),
la première passerelle (HNGW) étant en outre configurée pour fournir des informations de communication (PAY) en provenance d'un second terminal (CH) dudit troisième réseau (GV6-2)
à un premier terminal (MH) dudit deuxième réseau (GV6-1) ayant effectué une itinérance vers ledit quatrième réseau (PV4), ou en provenance dudit premier terminal (MH) à destination dudit second terminal (CH) ;
lesdits premier et second protocoles (IPv4, IPv6) étant différents ;
lesdits premier et quatrième réseaux (IN, PV4) utilisant ledit premier protocole (IPv4) pour effectuer l'adressage dans lesdits premier et quatrième réseaux (IN, PV4) ;
lesdits deuxième et troisième réseaux (GV6-1, GV6-2) utilisant ledit second protocole (IPv6) pour effectuer l'adressage dans lesdits deuxième et troisième réseaux (GV6-1, GV6-2) ;
lesdits premier, deuxième, troisième et quatrième réseaux (IN, GV6-1, GV6-2, PV4) comprenant respectivement des premières, deuxièmes, troisièmes et quatrièmes adresses ;
lesdites deuxièmes et troisièmes adresses étant respectivement des adresses de deuxième réseau second protocole et des adresses de troisième réseau second protocole ;
lesdites premières et quatrièmes adresses étant respectivement des adresses de premier réseau premier protocole et des adresses de quatrième réseau premier protocole sélectionnées à partir de plages d'adresses différentes dudit premier protocole,
dans lequel
ladite première passerelle (HNGW) comprend une unité de transformation (CU2) conçue pour effectuer une transformation entre une adresse étrangère de premier terminal deuxième réseau second protocole (MHA-6-2-CoA) et un couple d'une adresse de deuxième passerelle premier réseau premier protocole (FNGWA-G4-1) et d'informations spécifiques de type de transport de premier réseau premier protocole (MHT-G4-1).

19. Passerelle (HNGW) selon la revendication 18, comprenant en outre :
une unité de paramétrage de premier tunnel (TS2-1) pour paramétrer un tunnel de premier protocole entre ladite passerelle (HNGW) et ladite deuxième passerelle (FNGW), et
une unité de paramétrage de deuxième tunnel (TS2-2) pour paramétrer un autre tunnel de premier protocole entre ladite passerelle (HNGW) et ladite troisième passerelle (CNGW).

20. Passerelle (HNGW) selon l'une des revendications 18 à 19, dans laquelle ladite adresse de deuxième passerelle premier réseau premier protocole (FNGWA-G4-1), lesdites informations spécifiques de type de transport de premier réseau premier protocole (MHT-G4-1), et ladite adresse étrangère de premier terminal deuxième réseau second protocole (MHA-6-2-CoA) sont stockées dans une table de correspondance, et
dans laquelle, dans ladite table de correspondance, une corrélation de correspondance est stockée entre ladite adresse étrangère de premier terminal deuxième réseau second protocole (MHA-6-2-CoA) et un couple de ladite adresse de deuxième passerelle premier réseau premier protocole (FNGWA-G4-1) et desdites informations spécifiques de type de transport de premier réseau premier protocole (MHT-G4-1).

21. Procédé d'enregistrement exécuté par un premier terminal (MH) fonctionnant dans un système de communication (SYS),
ledit système de communication (SYS) comprenant :
un premier réseau (IN) mis en oeuvre en utilisant un premier protocole, ledit premier réseau (IN) étant relié à un deuxième réseau (GV6-1) mis en oeuvre en utilisant un second protocole, et un quatrième réseau (PV4) mis en oeuvre en utilisant ledit premier protocole par l'intermédiaire de première et deuxième passerelles respectives (HNGW, FNGW),
le procédé d'enregistrement étant un procédé pour enregistrer dans ledit deuxième réseau (GV6-1) ledit premier terminal (MH) dudit deuxième réseau (GV6-1) ayant effectué une itinérance vers ledit quatrième réseau (PV4) ;
lesdits premier et second protocoles étant différents ;
lesdits premier et quatrième réseaux (IN, PV4) utilisant ledit premier protocole pour effectuer l'adressage dans lesdits premier et quatrième réseaux (IN, PV4) ;
ledit deuxième réseau (GV6-1) utilisant ledit second protocole pour effectuer l'adressage dans ledit deuxième réseau (GV6-1) ;
lesdits premier, deuxième et quatrième réseaux (IN, GV6-1, PV4) comprenant respectivement des premières, deuxièmes et quatrièmes adresses ;
lesdites deuxièmes adresses étant des adresses de deuxième réseau second protocole ;
lesdites premières et quatrièmes adresses étant respectivement des adresses de premier réseau premier protocole et des adresses de quatrième réseau premier protocole sélectionnées à partir de plages d'adresses différentes dudit premier protocole ;
dans lequel ledit procédé d'enregistrement comprend les étapes suivantes consistant à :
a) générer (S 4e.1) dans ledit premier terminal (MH) une adresse étrangère de premier terminal deuxième réseau second protocole (MHA-6-2-CoA) dudit premier terminal (MH) à partir d'une adresse de premier terminal de quatrième réseau premier protocole (MHA-P4-4) ;
b) paramétrer (S 4e.2) un premier tunnel de premier protocole (TUN1) entre ledit premier terminal (MH) et ladite deuxième passerelle (FNGW) ;
c) émettre (S 4e.3) ladite adresse étrangère de premier terminal deuxième réseau second protocole (MHA-6-2-CoA) à travers ledit premier tunnel de premier protocole (TUN1) ;
ledit système de communication (SYS) étant tel que :
ladite deuxième passerelle (FNGW) est conçue pour recevoir (S 4e.4) ladite adresse étrangère de premier terminal deuxième réseau second protocole (MHA-6-2-CoA) ;
ladite deuxième passerelle (FNGW) et ladite première passerelle (HNGW) sont conçues pour paramétrer (S 4e.5) un deuxième tunnel de premier protocole (TUN2) entre elles ;
ledit deuxième tunnel de premier protocole (TUN2) est conçu pour avoir ladite adresse étrangère de premier terminal deuxième réseau second protocole (MHA-6-2-CoA) émise (S 4e.6) à travers ce dernier ;
ladite première passerelle (HNGW) est conçue pour recevoir (S 4e.7) ladite adresse étrangère de premier terminal deuxième réseau second protocole (MHA-6-2-CoA) à travers ledit deuxième tunnel de premier protocole (TUN2) ;
ladite adresse étrangère de premier terminal deuxième réseau second protocole (MHA-6-2-CoA) est émise (S 4e.8) par l'intermédiaire dudit deuxième réseau (GV6-1) à destination d'un agent domestique (HA) dans ledit deuxième réseau (GV6-1).

22. Programme informatique ayant des instructions conçues pour exécuter le procédé d'enregistrement selon la revendication 21 lorsqu'il est exécuté sur le premier terminal (MH).

23. Procédé d'enregistrement exécuté par une deuxième passerelle (FNGW) fonctionnant dans un système de communication (SYS),
ledit système de communication (SYS) incluant :
- un premier réseau (IN) mis en oeuvre en utilisant un premier protocole, ledit premier réseau (IN) étant relié à un deuxième réseau (GV6-1) mis en oeuvre en utilisant un second protocole, et un quatrième réseau (PV4) mis en oeuvre en utilisant ledit premier protocole respectivement par l'intermédiaire d'une première et de la deuxième passerelle (HNGW, FNGW),
- et un premier terminal (MH) dudit deuxième réseau (GV6-1) ayant effectué une itinérance vers ledit quatrième réseau (PV4) ;
lesdits premier et second protocoles étant différents ;
lesdits premier et quatrième réseaux (IN, PV4) utilisant ledit premier protocole pour effectuer l'adressage dans lesdits premier et quatrième réseaux (IN, PV4) ;
ledit deuxième réseau (GV6-1) utilisant ledit second protocole pour effectuer l'adressage dans ledit deuxième réseau (GV6-1) ;
lesdits premier, deuxième et quatrième réseaux (IN, GV6-1, PV4) comprenant respectivement des premières, deuxièmes et quatrièmes adresses ;
lesdites deuxièmes adresses étant des adresses de deuxième réseau second protocole ;
lesdites premières et quatrièmes adresses étant respectivement des adresses de premier réseau premier protocole et des adresses de quatrième réseau premier protocole sélectionnées à partir de plages d'adresses différentes dudit premier protocole ;
ledit premier terminal (MH) ayant déjà produit (S 4e.1) une adresse étrangère de premier terminal deuxième réseau second protocole (MHA-6-2-CoA) dudit premier terminal (MH) à partir d'une adresse de premier terminal quatrième réseau premier protocole (MHA-P4-4) ;
dans lequel ledit procédé d'enregistrement comprend les étapes suivantes consistant à :
b) paramétrer (S 4e.2) un premier tunnel de premier protocole (TUN1) entre ledit premier terminal (MH) et ladite deuxième passerelle (FNGW) ;
d) recevoir (S 4e.4) ladite adresse étrangère de premier terminal deuxième réseau second protocole (MHA-6-2-CoA) à travers ledit premier tunnel de premier protocole (TUN1) en provenance dudit premier terminal (MH) ;
e) paramétrer (S 4e.5) un deuxième tunnel de premier protocole (TUN2) entre ladite deuxième passerelle (FNGW) et ladite première passerelle (HNGW) ;
f) émettre (S 4e.6) ladite adresse étrangère de premier terminal deuxième réseau second protocole (MHA-6-2-CoA) à travers ledit deuxième tunnel de premier protocole (TUN2) ;
ledit système de communication (SYS) étant tel que :
ladite première passerelle (HNGW) est conçue pour recevoir (S 4e.7) ladite adresse étrangère de premier terminal deuxième réseau second protocole (MHA-6-2-CoA) ;
ladite adresse étrangère de premier terminal deuxième réseau second protocole (MHA-6-2-CoA) est émise par l'intermédiaire dudit deuxième réseau (GV6-1) à un agent domestique (HA) dans ledit deuxième réseau (GV6-1).

24. Programme informatique ayant des instructions conçues pour exécuter le procédé d'enregistrement selon la revendication 23 lorsqu'il est exécuté sur la deuxième passerelle (FNGW).

25. Procédé de communication exécuté par un premier terminal (MH) fonctionnant dans un système de communication (SYS),
ledit système de communication (SYS) incluant un premier réseau (IN) mis en oeuvre en utilisant un premier protocole,
ledit premier réseau (IN) étant relié
à un deuxième réseau (GV6-1) mis en oeuvre en utilisant un second protocole, à un quatrième réseau (PV4) mis en oeuvre en utilisant ledit premier protocole, et à un troisième réseau (GV6-2) mis en oeuvre en utilisant ledit second protocole par l'intermédiaire de première, deuxième et troisième passerelles respectives (HNGW, FNGW, CNGW),
ledit système de communication (SYS) étant conçu pour fournir des informations de communication (PAY)
en provenance dudit premier terminal (MH) dudit deuxième réseau (GV6-1) ayant effectué une itinérance vers ledit quatrième réseau (PV4)
vers un second terminal (CH) dudit troisième réseau (GV6-2) ;
lesdits premier et second protocoles étant différents ;
lesdits premier et quatrième réseaux (IN, PV4) utilisant ledit premier protocole pour effectuer l'adressage dans lesdits premier et quatrième réseaux (IN, PV4) ;
lesdits deuxième et troisième réseaux (GV6-1, GV6-2) utilisant ledit second protocole pour effectuer l'adressage dans lesdits deuxième et troisième réseaux (GV6-1, GV6-2) ;
lesdits premier, deuxième, troisième et quatrième réseaux (IN, GV6-1, GV6-2, PV4) comprenant respectivement des premières, deuxièmes, troisièmes et quatrièmes adresses ;
lesdites deuxièmes et troisièmes adresses étant respectivement des adresses de deuxième réseau second protocole et des adresses de troisième réseau second protocole ;
lesdites premières et quatrièmes adresses étant respectivement des adresses de premier réseau premier protocole et des adresses de quatrième réseau premier protocole sélectionnées à partir de plages d'adresses différentes dudit premier protocole ;
dans lequel ledit procédé de communication comprend les étapes suivantes consistant à :
a) paramétrer (S 4f.1) un premier tunnel de premier protocole (TUN1) entre ledit premier terminal (MH) et ladite deuxième passerelle (FNGW) ;
b) émettre (S 4f.2) lesdites informations de communication (PAY) à travers ledit premier tunnel de premier protocole (TUN1) ;
ledit système de communication (SYS) étant tel que :
ladite deuxième passerelle (FNGW) est conçue pour recevoir (S 4f.6) lesdites informations de communication (PAY) ;
un deuxième tunnel de premier protocole (TUN2) est paramétré (S 4f.4) entre ladite deuxième passerelle (FNGW) et ladite première passerelle (HNGW) ;
lesdites informations de communication (PAY) sont émises (S 4f.5) à travers ledit deuxième tunnel de premier protocole (TUN2) ;
ladite première passerelle (HNGW) est conçue pour recevoir (S 4f.6) lesdites informations de communication (PAY) ;
un troisième tunnel de premier protocole (TUN3) est paramétré (S 4f.7) entre ladite première passerelle (HNGW) et ladite troisième passerelle (CNGW) ;
lesdites informations de communication (PAY) sont émises (S 4f.8) à travers ledit troisième tunnel de premier protocole (TUN3) ;
ladite troisième passerelle (CNGW) est conçue pour recevoir (S 4f.9) lesdites informations de communication à travers ledit troisième tunnel de premier protocole (TUN3) ;
lesdites informations de communication (PAY) sont émises (S 4f.10) par l'intermédiaire dudit troisième réseau (GV6-2) vers ledit second terminal (CH).

26. Programme informatique ayant des instructions conçues pour exécuter le procédé de communication selon la revendication 25 lorsqu'il est exécuté sur le premier terminal (MH).

27. Procédé de communication exécuté par une deuxième passerelle (FNGW) fonctionnant dans un système de communication (SYS),
ledit système de communication (SYS) incluant un premier réseau (IN) mis en oeuvre en utilisant un premier protocole,
ledit premier réseau (IN) étant relié
à un deuxième réseau (GV6-1) mis en oeuvre en utilisant un second protocole, à un quatrième réseau (PV4) mis en oeuvre en utilisant ledit premier protocole, et à un troisième réseau (GV6-2) mis en oeuvre en utilisant ledit second protocole respectivement par l'intermédiaire d'une première passerelle (HNGW), d'une deuxième passerelle (FNGW) et d'une troisième passerelle (CNGW),
ledit système de communication (SYS) étant conçu pour fournir des informations de communication (PAY)
en provenance d'un premier terminal (MH) dudit deuxième réseau (GV6-1) ayant effectué une itinérance vers ledit quatrième réseau (PV4)
vers un second terminal (CH) dudit troisième réseau (GV6-2) ;
lesdits premier et second protocoles étant différents ;
lesdits premier et quatrième réseaux (IN, PV4) utilisant ledit premier protocole pour effectuer l'adressage dans lesdits premier et quatrième réseaux (IN, PV4) ;
lesdits deuxième et troisième réseaux (GV6-1, GV6-2) utilisant ledit second protocole pour effectuer l'adressage dans lesdits deuxième et troisième réseaux (GV6-1, GV6-2) ;
lesdits premier, deuxième, troisième et quatrième réseaux (IN, GV6-1, GV6-2, PV4) comprenant respectivement des premières, deuxièmes, troisièmes et quatrièmes adresses ;
lesdites deuxièmes et troisièmes adresses étant respectivement des adresses de deuxième réseau second protocole et des adresses de troisième réseau second protocole ;
lesdites premières et quatrièmes adresses étant respectivement des adresses de premier réseau premier protocole et des adresses de quatrième réseau premier protocole sélectionnées à partir de plages d'adresses différentes dudit premier protocole ;
dans lequel ledit procédé de communication comprend les étapes suivantes consistant à :
a) paramétrer (S 4f.1) un premier tunnel de premier protocole (TUN1) entre ledit premier terminal (MH) et ladite deuxième passerelle (FNGW) ;
c) recevoir (S 4f.3) lesdites informations de communication (PAY) dans ladite deuxième passerelle (FNGW) en provenance dudit premier terminal (MH) ;
d) paramétrer (S 4f.4) un deuxième tunnel de premier protocole (TUN2) entre ladite deuxième passerelle (FNGW) et ladite première passerelle (HNGW) ;
e) émettre (S 4f.5) lesdites informations de communication (PAY) à travers ledit deuxième tunnel de premier protocole (TUN2) ;
dans lequel le système de communication (SYS) est tel que :
ladite première passerelle (HNGW) est conçue pour recevoir (S 4f.6) lesdites informations de communication (PAY) ;
un troisième tunnel de premier protocole (TUN3) est paramétré (S 4f.7) entre ladite première passerelle (HNGW) et ladite troisième passerelle (CNGW) ;
lesdites informations de communication (PAY) sont émises (S 4f.8) à travers ledit troisième tunnel de premier protocole (TUN3) ;
ladite troisième passerelle (CNGW) est conçue pour recevoir (S 4f.9) lesdites informations de communication (PAY) ;
lesdites informations de communication (PAY) sont émises (S 4f.10) par l'intermédiaire dudit troisième réseau (GV6-2) vers ledit second terminal (CH).

28. Programme informatique ayant des instructions conçues pour exécuter le procédé de communication selon la revendication 27 lorsqu'il est exécuté sur la deuxième passerelle (FNGW).
